(19) Europäisches Patentamt
European Patent Office
Office européen des brevets

(11) **EP 2 123 160 A1**

(12) **EUROPEAN PATENT APPLICATION**
published in accordance with Art. 153(4) EPC

(43) Date of publication:
**25.11.2009 Bulletin 2009/48**

(51) Int Cl.:
*A01N 59/16* (2006.01)     *A01N 25/12* (2006.01)
*A01N 59/06* (2006.01)     *A01N 59/20* (2006.01)
*A01P 3/00* (2006.01)

(21) Application number: **07860627.4**

(22) Date of filing: **28.12.2007**

(86) International application number:
**PCT/JP2007/075432**

(87) International publication number:
**WO 2008/082007 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.12.2006 JP 2006356737**

(71) Applicant: **KYOWA CHEMICAL INDUSTRY CO., LTD.**
**Takamatsu-shi**
**Kagawa-ken 761-0113 (JP)**

(72) Inventors:
• **IMAHASHI, Takeshi**
**Sakaide-shi**
**Kagawa 762-0012 (JP)**

• **INOUE, Yoshie**
**Sakaide-shi**
**Kagawa 762-0012 (JP)**
• **WANG, Xing Dong**
**Sakaide-shi**
**Kagawa 762-0012 (JP)**

(74) Representative: **Benson, John Everett**
**J. A. Kemp & Co.**
**14 South Square**
**Gray's Inn**
**London WC1R 5JJ (GB)**

(54) **ANTIBACTERIAL PARTICLE, METHOD FOR PRODUCING THE SAME AND ANTIBACTERIAL COMPOSITION**

(57)     The object of this invention is to provide antimicrobial particles that can maintain, for a long period of time, antimicrobial activities in particular the antimicrobial activities after they come in contact with tap water.

This invention includes antimicrobial particles formed of a compound of the following formula (1), a process for the preparation thereof and an antimicrobial composition containing the said particles,

$$[Ag_aB_{1-a}]b[M^{n+}{}_cAl_{1-cn/3}]_dA_x(SO_4)_y(OH)_z \cdot pH_2O \qquad (1)$$

wherein B is at least one monovalent cation selected from the group consisting of $Na^+$, $NH_4^+$, $K^+$ and $H_3O^+$, $M^{n+}$ is a metal ion composed mainly of $Cu^{2+}$, n is a valence number of the metal ion and A is an anion mainly composed of an organic acid.

EP 2 123 160 A1

**Description**

Technical Field

This invention relates to antimicrobial particles formed of aluminum sulfate hydroxide containing silver and copper and a process for the preparation thereof. Further, this invention relates to an antimicrobial composition containing the above antimicrobial particles.

Technical Background

Generally, bacteria rapidly grow in high-temperature high-humidity environments and sometimes cause serious problems in view of health, safety and dwelling environments. For overcoming these problems, there have been proposed antimicrobial compositions containing organic antimicrobial agents and inorganic antimicrobial agents. Of these, inorganic antimicrobial agents are relatively safe and hence in great demand.

For inorganic antimicrobial agents, there have been proposed a number of antimicrobial agents obtained by causing an inorganic compound to support silver or copper having antimicrobial activities or by incorporating such silver or copper into an inorganic compound by ion-exchange.

Non-patent document 1 discloses an aluminum sulfate hydroxide containing silver and copper (Ferrian hinsdalite). This substance is a natural mineral and contains large amounts of lead and arsenic. Further, it is difficult to obtain particles uniform in particle diameter and excellent in dispersibility from the above mineral even by pulverization.

Patent document 1 discloses an antimicrobial agent composed of zirconium phosphate to silver held on the zirconium phosphate. However, this antimicrobial agent still leaves room for improvements in antimicrobial activity and dispersibility. That is, tap water is constantly used in a kitchen, a bathroom and a lavatory, and clothes, etc., are washed with tap water many times for use. An antimicrobial agent that is used in such places is required to exhibit antimicrobial activities and prevent damage from bacteria even when it is in contact with water for a long time. The antimicrobial agent described in Patent document 1 exhibits certain antimicrobial activities immediately after produced but has a defect that its antimicrobial activities greatly decrease when it is in contact with tap water for a certain period.

Patent document 2 discloses spindle-shaped antimicrobial particles having the formula of $MAl_3(SO_4)_2(OH)_6$, having a BET specific surface area of 30 $m^2$/g or less and using an alkali metal or ammonium group as M in the above formula. In Examples of this document, there are specifically shown particles having a particle diameter distribution sharpness of 1.45 to 1.61, the sharpness being represented by the equation of $Rs = D_{25}/D_{75}$ and obtained by dividing a particle diameter $D_{25}$ (larger particle side) that is a 25 % value of volume standard cumulative particle diameters measured by a Coulter Counter method by a particle diameter $D_{75}$ (smaller particle diameter side) that is a 75 % value thereof.

Patent document 3 discloses that a compound obtained by subjecting Li-spodumene (a kind of an inosilicate compound) to ion-exchange with copper and silver is useful as an antimicrobial agent. Since, however, the invention of this Patent Document uses an inosilicate compound as a support, the dispersibility thereof in dispersing media such as water, an organic solvent, etc., is poor.

(Patent document 1) JP-A 6-212019
(Patent document 2) JP-A 2000-7326
(Patent document 3) JP-A 2003-206210
(Non-Patent document 1) Keith M. Scott, "Solid solution in, and classification of, gossan-derived members of the alunite-jarosite family, northwest Queensland, Australia, American Mineralogists, Mineralogical Society of America, 1987, vol. 72, p178-187 Table 3.

Disclosure of the Invention

It is an object of this invention to provide antimicrobial particles that can maintain antimicrobial activities or antimicrobial capability for a long period of time even when they are in contact with tap water in particular. That is, it is an object of this invention to provide antimicrobial particles that can maintain antimicrobial activities for a long period of time under conditions of a kitchen, a bathroom, a lavatory, etc., where tap water is constantly used. Further, it is another object of this invention to provide antimicrobial particles that can exhibit antimicrobial activities against a broad range of strains of microorganisms. It is still another object of this invention to provide antimicrobial particles that are aggregation-free and excellent in dispersibility in a composition. It is further another object of this invention to provide antimicrobial particles that are safe to human bodies and do not stimulate human bodies when they come in contact with them.

It is still further another object of this invention to provide a process for the preparation of the above antimicrobial particles. It is yet another object of this invention to provide an antimicrobial composition containing the above antimicrobial particles and having excellent antimicrobial activities.

The present inventors have found that antimicrobial particles excellent in antimicrobial activities and dispersibility can be obtained by incorporating silver and copper into aluminum sulfate hydroxide particles. Further, the present inventors have found that the above antimicrobial particles maintain antimicrobial activities for a long period of time even after they come in contact with tap water. It has been further found that the above antimicrobial particles are improved in dispersibility and uniformity of their particle distribution by incorporating an organic acid anion in addition to the silver and copper. This invention is based on these finding.

That is, this invention provides the following.

1. Antimicrobial particles formed of a compound of the following formula (1).

$$[Ag_aB_{1-a}]_b[M^{n+}_cAl_{1-cn/3}]_dA_x(SO_4)_y(OH)_z \cdot pH_2O \qquad (1)$$

wherein a, b, c, d, x, y, z and p satisfy the following conditions,

$0.00001 \leq a < 0.5$
$0.8 \leq b \leq 1.35$
$0.00001 < c < 0.5$
$2.7 \leq d \leq 3.3$
$0 \leq x \leq 0.5$
$1.7 < y < 2.5$
$4 < z < 7$
$0 \leq p \leq 5$

B is at least one monovalent cation selected from the group consisting of $Na^+$, $NH_4^+$, $K^+$ and $H_3O^+$, the total value ($1b+3d$) of valence number x molar amount of the cation is in the range of $8 < (1b+3d) < 12$, $M^{n+}$ is a metal ion composed mainly of $Cu^{2+}$, n is a valence number of the metal ion and A is an organic acid anion.

2. Antimicrobial particles as recited in the above 1, wherein x is in the range of $0.0001 \leq x \leq 0.5$.

3. Antimicrobial particles as recited in the above 1, wherein $x=0$.

4. An antimicrobial agent as recited in the above 1, wherein $M^{n+}$ is composed mainly of $Cu^{2+}$ and contains at least one metal ion selected from the group consisting of $Ti^{4+}$ and $Zn^{2+}$.

5. Antimicrobial particles as recited in the above 1, wherein a maximum of 1/10 of the molar amount of $SO_4$ is replaced with at least one inorganic acid ion selected from the group consisting of $PO_4^{3-}$, $CO_3^{2-}$, $NO_3^-$, $SO_3^{2-}$, $HPO_3^{2-}$, $SiO_4^{4-}$ and $BO_3^{3-}$.

6. Antimicrobial particles as recited in the above 1, wherein A is an anion derived from an organic carboxylic acid or an organic oxycarboxylic acid.

7. Antimicrobial particles as recited in the above 1, wherein A is at least one organic acid anion selected from the group consisting of oxalic acid ion, citric acid ion, malic acid ion, tartaric acid ion, glyceric acid ion, gallic acid ion and lactic acid.

8. Antimicrobial particles as recited in the above (1), wherein a, b, c, d, x, y, z and p in the formula (1) satisfy the following conditions,

$0.001 \leq a < 0.3$
$0.9 \leq b \leq 1.2$
$0.00001 < c < 0.5$
$2.7 \leq d \leq 3.3$
$0.001 \leq x \leq 0.5$
$1.7 < y < 2.5$
$4 < z < 7$
$0 \leq p \leq 5$.

9. Antimicrobial particles as recited in the above 1, which have an average secondary particle diameter, measured by a laser diffraction scattering method, of 0.1 $\mu$m to 12 $\mu$m.

10. Antimicrobial particles as recited in the above 1, which have a BET specific surface area of 0.1 to 250 cm$^2$/g.

11. Antimicrobial particles as recited in the above 1, which have a sharpness (Dr), represented by the following equation, in the range of 1 to 1.8,

$$Dr = D_{75}/D_{25}$$

in which $D_{25}$ is a particle diameter of a 25 % value of volume standard accumulative particle diameter distribution curve prepared on the basis of a laser diffraction scattering method and $D_{75}$ is a particle diameter of a 75 % value thereof.

12. Antimicrobial particles as recited in the above 1, which have a particle diameter distribution sharpness (Dr) of 1 to 1.4 and have a spherical shape.

13. Antimicrobial particles as recited in the above 1, wherein each particle is in the form of a sphere, a disk ("go" stone), one pair (like "hamburger"), a rice grain, a rectangular parallelepiped, a hexagonal plate, a column (barrel) or an octahedron when they are observed in an SEM photograph.

14. Antimicrobial particles as recited in the above 1, wherein each particle has the form of a rectangular parallelepiped.

15. Antimicrobial particles as recited in the above 1, wherein each particle is surface-treated with at least one member selected from the group consisting of higher fatty acids, a silane coupling agent, a titanate coupling agent, an aluminate coupling agent, alcohol phosphoric esters and surfactants.

16. A process for the preparation of antimicrobial particles (X) of the following formula (1-X),

$$[Ag_aB_{1-a}]_b[M^{n+}_cAl_{1-cn/3}]_dA_x(SO_4)_y(OH)_z\cdot pH_2O \qquad (1\text{-}X)$$

wherein B, $M^{n+}$, A, a, b, c, d, y, z, n and p are as defined in the formula (1) and x is 0.0001 or more but not more than 0.5, the process comprising the steps of

(1) adding a hydroxide (T component) of monovalent cation and an organic acid (U component) to a mixture aqueous solution containing aluminum sulfate (Q component), a salt (R component) composed mainly of copper sulfate and sulfate and/or nitrate (S component) of monovalent cation, to obtain a reaction product,
(2) hydrothermally treating the thus-obtained reaction product at 90 to 250°C to obtain particles (x) of a compound of the following formula (i),

$$[B]_b[M^{n+}_cAl^{3+}_{1-cn/3}]_dA_x(SO_4)_y(OH)_z\cdot pH_2O \qquad (i)$$

wherein B, $M^{n+}$, A, b, c, d, y, z, n and p are as defined in the formula (1) and x is 0.0001 or more but not more than 0.5,
and
(3) contact-stirring an aqueous solution containing the thus-obtained particles (x) and silver to carry out ion-exchange of a portion of cations of the particles (x) with silver.

17. A process for the preparation of antimicrobial particles (Y) of the following formula (1-Y),

$$[Ag_aB_{1-a}]_b[M^{n+}_cAl_{1-cn/3}]_d(SO_4)_y(OH)_z\cdot pH_2O \qquad (1\text{-}Y)$$

wherein B, $M^{n+}$, a, b, c, d, y, z, n and p are as defined in the formula (1), the process comprising the steps of

(1) adding a hydroxide (T component) of monovalent cation to a mixture aqueous solution containing aluminum sulfate (Q component), a salt (R component) composed mainly of copper sulfate and a sulfate (S component) of monovalent cation, in which T component is added to the mixture aqueous solution whose a molar ratio of S component to a total of Q component and R component, {S/(Q+R)}, is from 0.3 to 3, to ensure that the alkali equivalent weight ratio of T component to a total of Q component and R component, {T/(Q+R)} is from 0.6 to 1,
(2) hydrothermally treating the thus-obtained reaction product at 90 to 250°C to obtain particles (y) of a compound of the following formula (ii),

$$[B]_b[M^{n+}_cAl^{3+}_{1-cn/3}]_d(SO_4)_y(OH)_z\cdot pH_2O \qquad (ii)$$

wherein B, $M^{n+}$, b, c, d, y, z, n and p are as defined in the formula (1),
and
(3) contact-stirring an aqueous solution containing the thus-obtained particles (y) and silver to carry out ion-exchange of a portion of cations of the particles (y) with silver.

18. A process of the above 17, wherein the step (1) is practiced by adding a hydroxide (T component) of at least one monovalent cation selected from the group consisting of $Na^+$, $K^+$ and $NH_4^+$ to a mixture aqueous solution containing aluminum sulfate (Q component), the salt (R component) composed mainly of copper sulfate and a sulfate of at least one monovalent cation selected from the group consisting of $Na^+$, $K^+$ and $NH_4^+$ in a manner that the alkali equivalent weight ratio {T/(Q+R)} comes to be from 0.6 to 1.0, to obtain the reaction product, and wherein antimicrobial particles (Y) in the form of a disk each are obtained.

19. A process of the above 17, wherein the step (1) is a step in which a suspension of aluminum hydroxide is added to a mixture aqueous solution containing aluminum sulfate (Q component) and the salt (R component) composed mainly of copper sulfate, to obtain the reaction product, and wherein antimicrobial particles (Y) in the form of a rectangular parallelepiped is obtained.

20. An antifungal agent containing the antimicrobial particles of the above 1 as an effective component.

21. An agricultural chemical containing the antimicrobial particles of the above 1 as an effective component.

Brief Description of Drawings

Fig. 1 is an SEM photograph of spherical particles (particle name: A1) in Example 1.
Fig. 2 is an SEM photograph of spherical particles (particle name: A20) in Example 20.
Fig. 3 is an SEM photograph of spherical particles (particle name: A21) in Example 21.
Fig. 4 is an SEM photograph of spherical particles (particle name: A22) in Example 22.
Fig. 5 is an SEM photograph of spherical particles (particle name: A30) in Example 30.
Fig. 6 is an SEM photograph of spherical particles (particle name: A31) in Example 31.
Fig. 7 is an SEM photograph of particles (particle name: B1-1) in the form of a disk each in Example 32.
Fig. 8 is an SEM photograph of particles (particle name: C1) in the form of one pair each in Example 36.
Fig. 9 is an SEM photograph of particles (particle name: D1) in the form of a rice grain each in Example 39.
Fig. 10 is an SEM photograph of particles (particle name: E1) in the form of a rectangular parallelepiped each in Example 42.
Fig. 11 is an SEM photograph of particles (particle name: F1) in the form of a hexagonal plate each in Example 46.
Fig. 12 is an SEM photograph of particles (particle name: G1) in the form of an octahedron each in Example 47.
Fig. 13 is an SEM photograph of particles (particle name: H1) in the form of a column each in Example 48.
Fig. 14 is an SEM photograph of particles (particle name: V1) in the form of an aggregate in Comparative Example 1.
Fig. 15 is an SEM photograph of particles (Y-A-1-1) in the form of a sphere each in Example 52.
Fig. 16 is an SEM photograph of particles (Y-A-4) in the form of a sphere each in Example 56.
Fig. 17 is an SEM photograph of particles (Y-A-5) in the form of a sphere each in Example 57.
Fig. 18 is an SEM photograph of particles (Y-A-19) in the form of a disk each in Example 71.
Fig. 19 is an SEM photograph of particles (Y-A-18) in the form of a sphere each in Example 70.
Fig. 20 is an SEM photograph of particles (Y-A-30) in the form of a rectangular parallelepiped each in Example 82.
Fig. 21 is an SEM photograph of particles (Y-V-1) in the form of an aggregate mass in Comparative Example 34.

Best Mode for Carrying Out the Invention

<Antimicrobial particles>

The antimicrobial particles of this invention will be explained further in detail below. The antimicrobial particles of this invention are represented by the following formula (1) and contain silver and copper in molecules thereof.

$$[Ag_aB_{1-a}]_b[M^{n+}_cAl_{1-cn/3}]_dA_x(SO_4)_y(OH)_z \cdot pH_2O \qquad (1)$$

The antimicrobial particles of this invention are very specific with regard to their form, particle distribution, particle size, cohesiveness and uniformity and are excellent in dispersibility, affinity and stability in/to water and an organic dispersing medium. ("a")
"a" represents an amount of silver substituted in the compound of the formula (1) by ion-exchange. As the value of "a" increases, it means that silver is more substituted in the antimicrobial particles by ion-exchange, and they are improved in antimicrobial activities. However, when the above value is too large, silver is deposited or eluted from an ion-exchanger (solid solution) to form silver oxide, and an antimicrobial agent may be colored in dark brown. Further, it is not economical. Moreover, silver is not substituted by ion-exchange to such an extent that the value of "a" reaches 0.5 or more.

On the other hand, when the value of "a" is too small, it means that the amount of silver substituted in the antimicrobial particles by ion-exchange is that small, and antimicrobial activities are not exhibited. For properly balancing the antimicrobial activities and the color problem, therefore, it is desirable to bring "a" into a proper range. Therefore, the value of "a" in the antimicrobial particles is 0.00001 or more but less than 0.5, preferably 0.00001 or more but not more than 0.35, still more preferably 0.001 or more but not more than 0.3.

(B)

"B" in the antimicrobial particles is at least one monovalent cation selected from the group consisting of $Na^+$, $NH_4^+$, $K^+$ and $H_3O^+$. These cations have ionic radii relatively close to that of silver ion and can strongly form an ion exchanger in a relatively broad range, so that silver is not liberated from the ion exchanger and hence does not form silver oxide, and they have an advantage that an antimicrobial agent does not easily incur discoloration (a color change to dark brown or brown with the passage of time under the action of light). Further, they are excellent in safety and economic performances. Of these, $Na^+$, $NH_4^+$ and $H_3O^+$ are relatively preferred, and of these, $NH_4^+$ and $H_3O^+$ are more preferred, and $NH_4^+$ is the most preferred for the above purpose. From the viewpoint of prevention of the discoloration, the smaller the amount of $Na^+$ and/or $K^+$ for use as "B" is, the more it is preferred. In particular, the amount of $K^+$ for use is preferably a molar amount smaller than 1/2 of a total molar amount of monovalent cations as "B". However, the above discoloration is at a level at which it can be prevented by adding 0.000001 % to 0.1 % of a fluorescent whitener to an antimicrobial composition. When much $Na^+$ and $K^+$ are used as "B", therefore, it is preferred to use a fluorescent whitener for the prevention of discoloration.

When antimicrobial particles use three monovalent cations of $Na^+$, $NH_4^+$ and $H_3O^+$, the amount of Na for use is to be a molar amount smaller than 1/2 of a total molar amount of these monovalent cations as "B" for obtaining an antimicrobial composition that is not discolored or is relatively less discolored without using any fluorescent whitener. In this manner, there is prepared an antimicrobial composition that is free of discoloration or is less discolored.

When the fluorescent whitener is used, examples thereof include benzhexazole whiteners such as 2,5-thiophenediyl(5-tert-butyl-1,3-benzhexazol and 4,4'-bis(benzhexazol-2-yl)stilbene, pyrazoline whiteners and carmine whiteners.

"B" may be partially replaced with $Ca^{2+}$. The molar content of $Ca^{2+}$ is preferably 1/2 or less, more preferably 1/3 or less, of the molar content of "B".

("b")

In the antimicrobial particles, "b" is 0.8 or more but not more than 1.35, preferably 0.8 or more but not more than 1.2, still more preferably 0.9 or more but not more than 1.1.

($M^{n+}$)

In the antimicrobial particles, $M^{n+}$ is a metal ion composed mainly of $Cu^{2+}$. The amount ratio of $Cu^{2+}$ in $M^{n+}$ per mole of $M^{n+}$ is preferably 0.01 to 1 mol, more preferably 0.05 to 1 mol.

$M^{n+}$ is composed mainly of $Cu^{2+}$ and may contain at least one metal ion selected from the group consisting of $Ti^{4+}$ and $Zn^{2+}$. The total amount of $Ti^{4+}$ and $Zn^{2+}$ in $M^{n+}$ per mole of $M^{n+}$ is preferably 0.001 to 0.99 mol, more preferably 0.001 to 0.95 mol.

$Al^{3+}$ is partially replaced with $M^{n+}$, for example, by a method in which particles (x) or (y) to be described later are synthesized from a salt containing $M^{n+}$ such as a salt that is composed mainly of copper sulfate and that is optionally contains zinc sulfate, titanium sulfate, etc., or by a method in which particles (x) or (y) containing $Cu^{2+}$ are subjected to ion-exchange with a compound containing $Ti^{4+}$ and/or $Zn^{2+}$ in a solvent to obtain particles and the particles are further subjected to ion-exchange with silver. In this case, $Cu^{2+}$, $Zn^{2+}$ and $Ti^{4+}$ are elements having an antimicrobial activity exhibiting effect, and antimicrobial activities are exhibited even when the relative content of $Ag^{1+}$ in the formula (1) is decreased. As a result, they have an advantage that the coloring of an antimicrobial composition containing the antimicrobial particles is decreased.

("c")

In the antimicrobial particles, "c" represents an ion-exchange amount of $M^{n+}$ substituted in the compound of the formula (1). As the value of "c" increases, it shows that $M^{n+}$ is substituted in the antimicrobial particles that much by ion-exchange, and antimicrobial activities are improved. However, when it is too large, $M^{n+}$ is deposited or eluted from the ion exchanger (solid solution) to form copper oxide, and the antimicrobial agent may be colored in bluish green, and it is not economical. Further, $M^{n+}$ does not undergo ion-exchange to such an extent that the value of "c" reaches 0.5 or more.

When the value of "c" is too small, it shows that the amount of $M^{n+}$ substituted in the antimicrobial particles (X) by ion-exchange is so small, and antimicrobial activities are not exhibited. For properly balancing the antimicrobial activities and the coloring problem, it is desirable to bring "c" into a proper range.

Therefore, the value of "c" in the antimicrobial particles is over 0.00001 but less than 0.5, preferably over 0.00001 but not more than 0.35, still more preferably 0.001 or more but not more than 0.3.

("d")

In the antimicrobial particles, "d" is 2.7 or more but not more than 3.3, preferably 2.8 or more but not more than 3.2, more preferably 2.9 or more but not more than 3.1.

(1b+3d)

The ion valence x molar amount of cation in the antimicrobial particles is represented by (1b+3d). In this invention, the range thereof is over 8 but less than 12, preferably over 9 but less than 11.

(A)

In the antimicrobial particles, A represents an organic acid anion. The content ratio of the organic anion in the antimicrobial particles is preferably 0.01 to 10 mol%, more preferably 0.5 to 5 mol%, still more preferably 0.9 to 2 mol%.

The organic acid anion is preferably an anion derived from an organic carboxylic acid or an organic oxycarboxylic acid. The organic carboxylic acid or organic oxycarboxylic acid preferably has 1 to 15 carbon atoms or more preferably has 1 to 10 carbon atoms. The organic carboxylic acid or organic oxycarboxylic acid preferably has 1 to 4 carboxyl groups. Examples of the organic carboxylic acid or organic oxycarboxylic acid include a dicarboxylic acid, a monocarboxylic acid, a tricarboxylic acid, a chain carboxylic acid, an aromatic carboxylic acid, a hydroxyl acid, a ketonic acid, an aldehydic acid, a phenolic acid, an amino acid, a halogen carboxylic acid and salts of these. Above all, preferred is at least one member selected from the group consisting of oxalic acid ion, citric acid ion, malic acid ion, tartaric acid ion, glyceric acid ion, gallic acid ion and lactic acid ion.

In the synthesis of the antimicrobial particles, for selecting a particle form and particle size of the antimicrobial particles to be produced, adjusting a particle diameter distribution uniformly and bringing the particles into a monodisperse state, it is preferred to add an organic acid during a reaction.

("x")

The amount ratio "x" of the organic acid anion is 0 or more but not more than 0.5. Of the antimicrobial particles of this invention, particles that contain no organic acid anion (A), i.e., that satisfy x=0, will be referred to as antimicrobial particles (Y). In antimicrobial particles (X) which are particles containing the organic acid anion (A), "x" is preferably 0.0001 or more but not more than 0.5, more preferably 0.0001 or more but not more than 0.4, still more preferably 0.001 or more but not more than 0.2. When "x" is in the above range, uniform particle diameters are attained.

("y, z, p")

In the antimicrobial particles, "y" is over 1.7 but less than 2.5, preferably over 1.8 but less than 2.2.

"z" is over 4 but less than 7, preferably over 5 but less than 7.

In the antimicrobial particles, "p" represents an amount of water of crystallization, and "p" is 0 or more but not more than 5, preferably 0 or more but not more than 3. For bringing "p" close to 0 as close as possible or bringing it to 0, it is sufficient to carry out additional drying treatment at 350°C or lower or calcining treatment. The calcining treatment is preferably carried out at 600°C or lower. When this temperature exceeds 600°C, a water-soluble aluminum sulfate of the following formula (3) may be partially generated, and an antimicrobial composition containing it may be degraded in water resistance. However, when an antimicrobial composition contains a small amount of the particles, there is no problem on the water resistance.

$$[Ag_aB_{1-a}]_b[M^{n+}{}_cAl_{1-cn/3}]_dA_x(SO_4)_y \qquad (3)$$

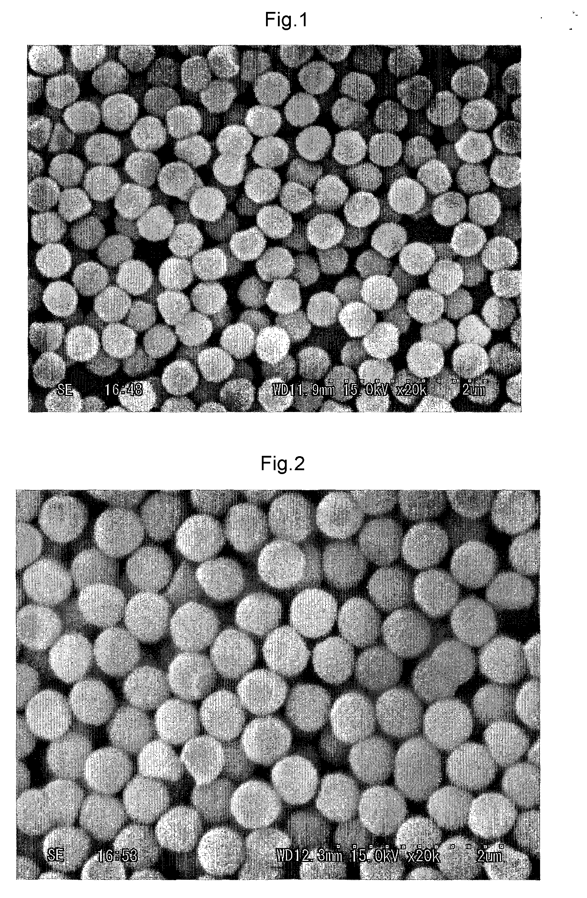

When the calcining temperature is 500°C or lower, in particular, 450°C or lower, the water-soluble aluminum sulfate of the formula (3) is not generated, and even when a large amount of the particles are added to an antimicrobial composition, there is no problem since the composition is not degraded in water resistance. Further, when the antimicrobial particles (X) of this invention are calcined at a temperature higher than 600°C, particle forms as shown in Figs. 1 to 13 may not be maintained. From the viewpoint of the above water resistance and form maintenance, the calcining temperature for the antimicrobial particles of this invention is 350 to 600°C, preferably 350 to 550°C, still more preferably 350 to 500°C, most preferably 350 to 450°C.

Desirably, the above drying treatment or calcining treatment is carried out in a nitrogen atmosphere in that the coloring of the antimicrobial particles and an antimicrobial composition containing the antimicrobial particles is prevented. It is also preferred in view of prevention of the coloring to carry out the drying treatment in a vacuum dry atmosphere.

When the antimicrobial particles are used in a manner that they are incorporated into a resin, for example, if it does not cause any problem on processing a resin that p is not zero since the amount of an antimicrobial agent to be added is so small or if water does not cause any special problem on the production of an antimicrobial composition, antimicrobial particles in which "p" satisfies 0≤p≤5, preferably 0≤p≤3, can be incorporated into the resin to produce an antimicrobial composition.

On the other hand, when it causes a problem that "p" is not 0 or is not brought close to 0, there can be used antimicrobial particles in which p=0 or "p" is extremely brought close to 0 by applying the additional drying treatment or calcining treatment.

In $(SO_4)_y$ of the antimicrobial particles, part of $(SO_4)_y$ or preferably 1/2 or less of "y" mole can be replaced with other inorganic acid ion. The amount for the replacement is particularly preferably 1/2 or less.

Examples of the inorganic acid ion include $SO_3^{2-}$, $PO_4^{3-}$, $HPO_3^{2-}$, $CO_3^{2-}$, $NO_3^-$, $SiO_4^{4-}$ and $BO_3^{3-}$. As a method of replacing part of $(SO_4)_y$ of the antimicrobial particles (X) with other inorganic acid ion, there is a method in which salts containing inorganic ion are used in place of aluminum sulfate, sodium sulfate, potassium sulfate, etc., in the preparation of the particles (i) and incorporated. Further, for example, there is a method in which the particles (i) are subjected to ion-exchange with a compound containing inorganic ion in a solvent and further subjected to ion-exchange with silver.

In this invention, $(OH)_z$ of the antimicrobial particles may be partially replaced with $Cl^-$. The content thereof in the antimicrobial particles is preferably 0.1 mol or less, more preferably 0.01 mol or less, still more preferably 0.001 mol or less from the viewpoint of prevention of coloring.

In the antimicrobial particles of this invention, preferably, the content of a compound composed of silver, copper and an organic acid other than the compound of the formula (1) is small to such an extent that peaks of the compound other than the compound of the formula (1) do not appear when they are measured by a powder X-ray diffraction method.

In the antimicrobial particles of this invention, the sharpness (Dr) of their particle diameter distribution represented by the following equation is 1 to 1.8, preferably 1.01 to 1.5, still more preferably 1.01 to 1.3, most preferably 1.01 to 1.2. This invention includes antimicrobial particles having a particle diameter distribution sharpness (Dr) of 1 to 1.4 and having the particle form of a sphere each.

$$Dr = D_{75}/D_{25}$$

in which $D_{25}$ is a particle diameter of 25 % value of a volume standard accumulative particle diameter distribution curve prepared on the basis of a laser diffraction scattering method and $D_{75}$ is a particle diameter of 75 % value thereof.

When the sharpness (Dr) is 1 to 1.8, the particles are excellent in dispersibility in water and other dispersing medium without forming aggregates, and as a result, the antimicrobial effect thereof can be improved.

The average secondary particle diameter of the antimicrobial particles of this invention, measured by a laser diffraction scattering method, is preferably 0.1 to 12 $\mu$m, more preferably 0.1 to 5 $\mu$m, still more preferably 0.1 to 2 $\mu$m, yet more preferably 0.1 to 1 $\mu$m, most preferably 0.1 to 0.5 $\mu$m. Particles having an average secondary particle diameter of less than 0.1 $\mu$m are difficult to produce, and particles having an average secondary particle diameter more than 12 $\mu$m may be those which do not have so high antimicrobial activities.

The BET specific surface area of the antimicrobial particles of this invention is preferably 0.1 to 250 $m^2/g$, more preferably 1 to 100 $m^2/g$, still more preferably 10 to 100 $m^2/g$, most preferably 30 to 100 $m^2/g$. A high BET specific area is advantageous for imparting high antimicrobial activities. However, particles having an extremely high BET specific area are difficult to disperse. On the other hand, when the BET specific surface area is too low, such particles cannot be imparted with sufficient antimicrobial activities.

The average secondary particle diameter, the BET specific surface area and the particle diameter distribution sharpness (Dr) are independent characteristics, respectively. Particles satisfying two characteristics of them at the same time are more preferred, and particles satisfying these three characteristics at the same time are the most preferred for achieving the object of this invention.

Antimicrobial particles formed of a compound of the formula (1) in which a, b, c, d, x, y, z and p satisfy the following conditions are preferred.

$0.001 \leq a < 0.3$
$0.9 \leq b \leq 1.2$
$0.00001 < c < 0.5$
$2.7 \leq d \leq 3.3$
$0.001 \leq x \leq 0.5$
$1.7 < y < 2.5$
$4 < z < 7$
$0 \leq p \leq 5$

(Particle form)

The antimicrobial particles of this invention are not particles formed of aggregates but in the state of being monodisperse, and also have a characteristic feature in having the following particle forms.

When largely classified, the form of the antimicrobial particles is classified into the forms of a sphere, a disk ("go" stone), one pair (like "hamburger"), a rice grain, a rectangular parallelepiped, a hexagonal plate, a column (barrel) and an octahedron.

The antimicrobial particles of this invention are preferably surface-treated with at least one member selected from the group consisting of higher fatty acids, a silane coupling agent, a titanate coupling agent, an aluminate coupling agent, alcohol phosphoric esters and surfactants.

<Antimicrobial particles (X)>

Of the antimicrobial particles of this invention, particles containing an organic acid anion (A) are referred to as antimicrobial particles (X) and particles containing no organic acid anion (A), i.e., x=0, are referred to as antimicrobial particles (Y).

The antimicrobial particles (X) are the same as the antimicrobial particles of the formula (1) except that the content "x" of the organic acid anion is 0.0001 or more but not more than 0.5. "x" is preferably 0.0001 or more but not more than 0.4, more preferably 0.001 or more but not more than 0.2. The antimicrobial particles (X) are excellent in dispersibility since they contain the organic acid anion.

(Particle form)

The antimicrobial particles (X) of this invention are not particles formed of aggregates but in the state of being monodisperse, and also have a characteristic feature in having the following particle forms.

When broadly classified, the form of the antimicrobial particles (X) is classified into the forms of a sphere, a disk ("go" stone), one pair (like "hamburger"), a rice grain, a rectangular parallelepiped, a hexagonal plate, a column (barrel) and an octahedron. These various particle forms are specifically explained with reference to Figs. 1 to 13.

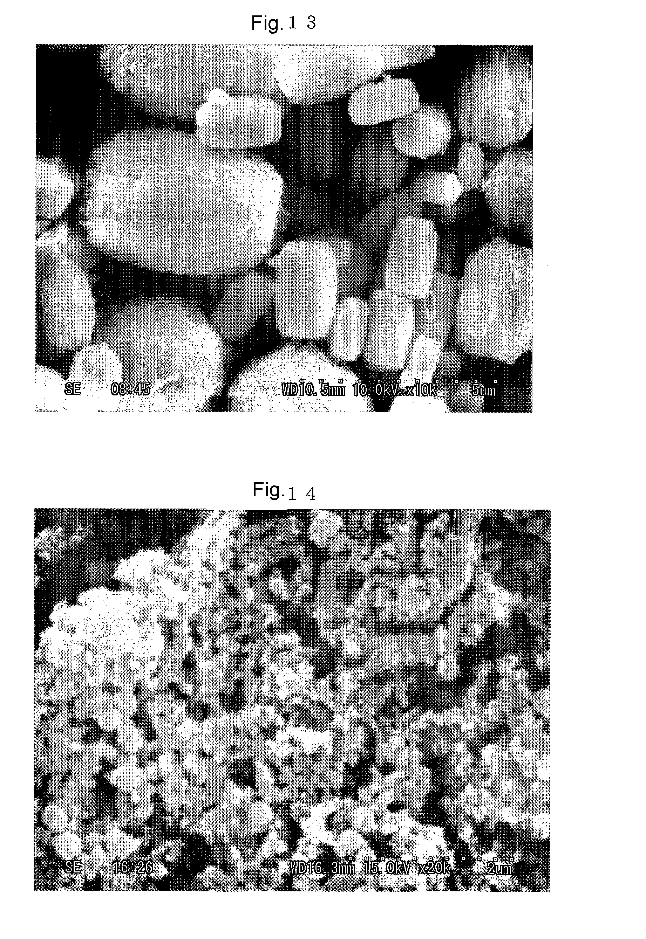

Figs. 1 to 13 are typical SEM photographs of particles obtained in Examples of this invention. Particle forms are observed on the basis of SEM photographs that are enlarged approximately 10,000 to 20,000 times. In addition, Fig. 14 is an SEM photograph of conventionally known alkali aluminum sulfate hydroxide particles.

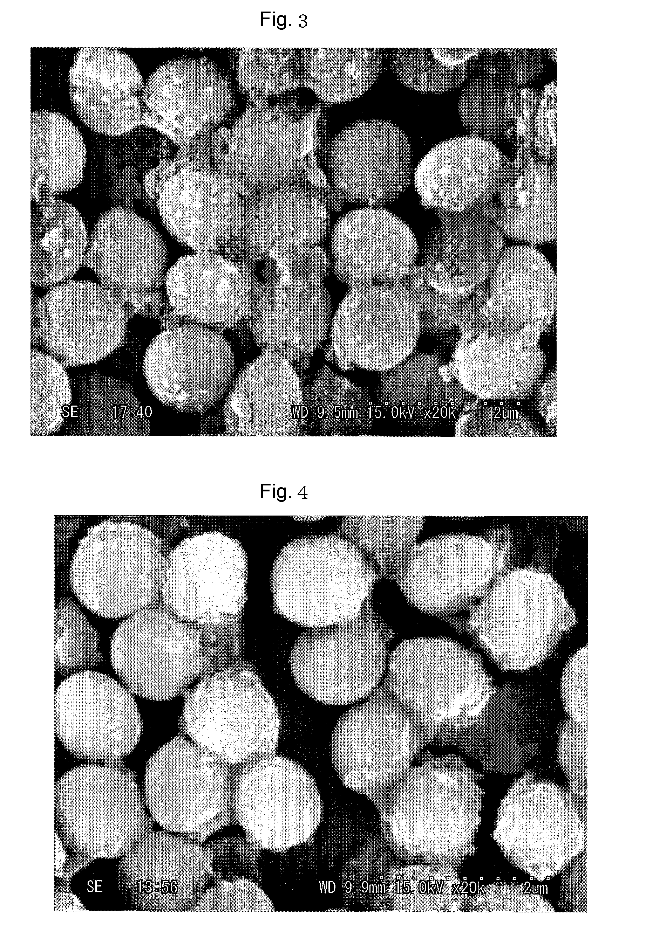

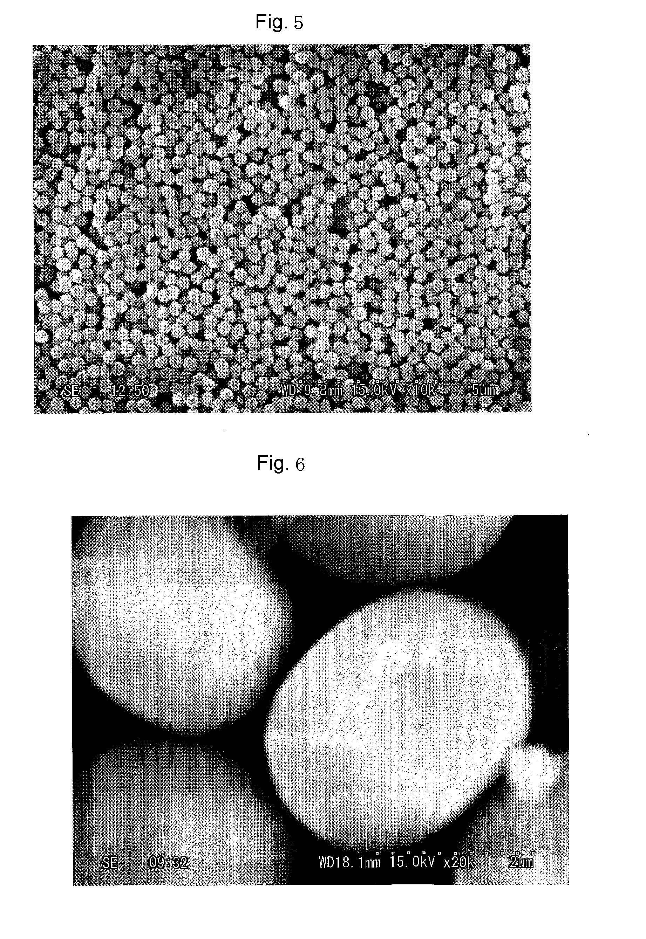

Examples of spherical particles are shown in Figs. 1 to 6. These spherical particles are classified into particles having a spherical form with a smooth surface as shown in Fig. 1, particles having a spherical form with small grains on a surface as shown in Fig. 2, particles having a spherical form with a rough surface and further with wrinkles (flaws and cracks) in the sphere as shown in Fig. 3, particles having a spherical form with small holes (concave and convex) as shown in Fig. 4, particles having a spherical form with a smooth surface and with a little more linear portions than those in Fig. 1 as shown in Fig. 5, and particles having a spherical form with a roughened surface and wrinkles as shown in Fig. 6.

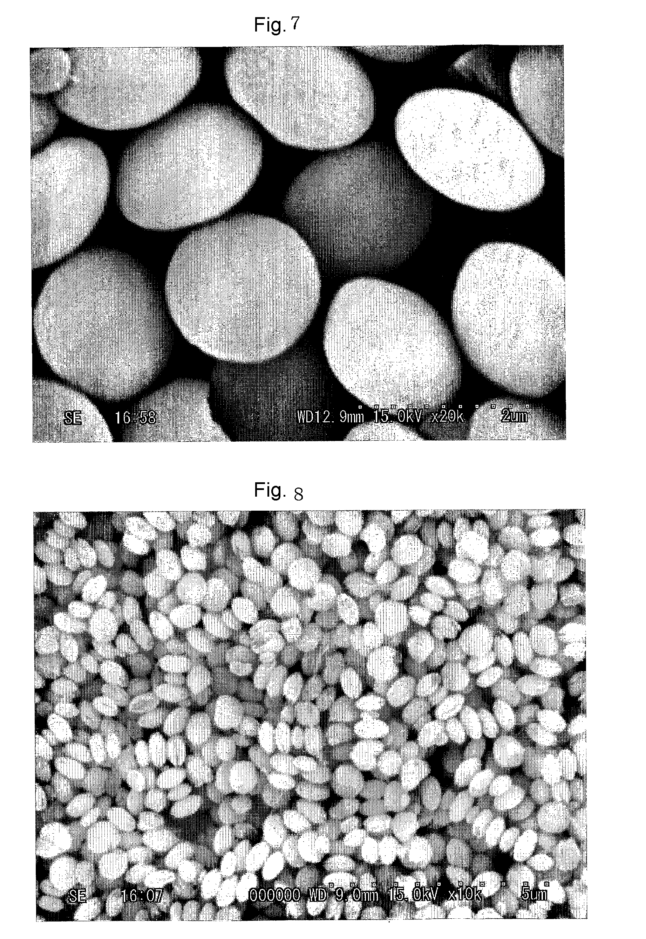

An example of particles having the form of a disk each is shown in Fig. 7, and this form has a front and a back which are nearly symmetrical and dome shape, and it is like a "go" stone. The particles having the form of a disk in Fig. 7 have smooth surfaces.

An example of particles having the form of one pair each is shown in Fig. 8. The feature of these particles is that two disk-shaped particles having a flat bottom surface and a dome-shaped opposite surface each have a form of one pair with the bottom surfaces being a plane of symmetry, and each particle has a space in a gap between circumferences of the two particles that are stacked one on the other. Further, aluminum salt hydroxide bonding the two disks is present in the central portion of a site where the two disks are contacted. This one pair of the particles looks like "hamburger".

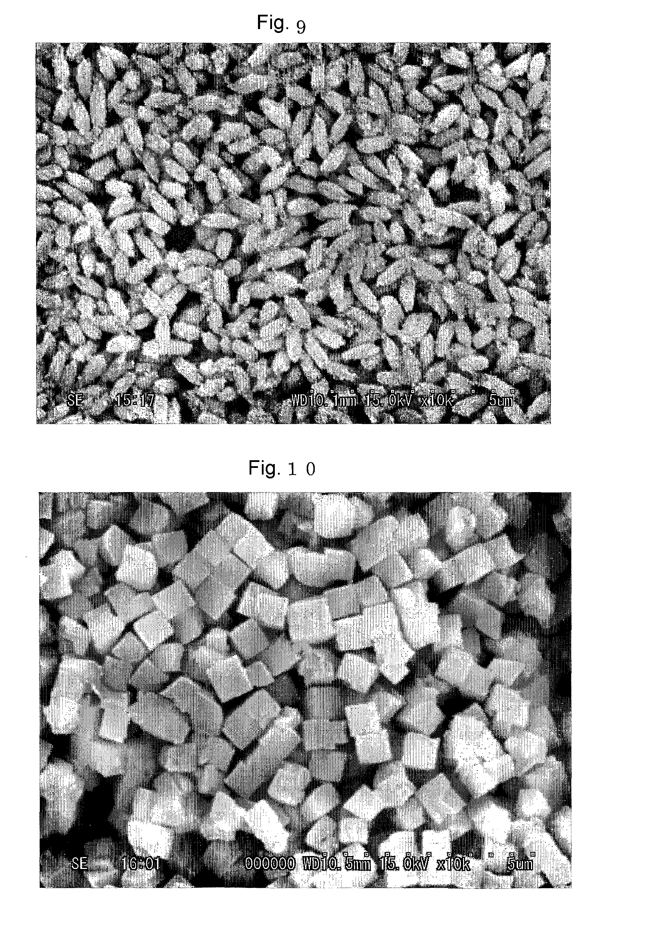

An example of particles having the form of a rice grain each is shown in Fig. 9. The rice-grain-shaped particle has the form of an ellipse when projected and has a nearly circular form in a cross section at right angles of the length direction. Particles in Fig. 9 have small wrinkles on their surfaces.

An example of particles having the form of a rectangular parallelepiped each is shown in Fig. 10, and they have the form of a rectangular parallelepiped close to a regular hexahedron and have smooth surfaces.

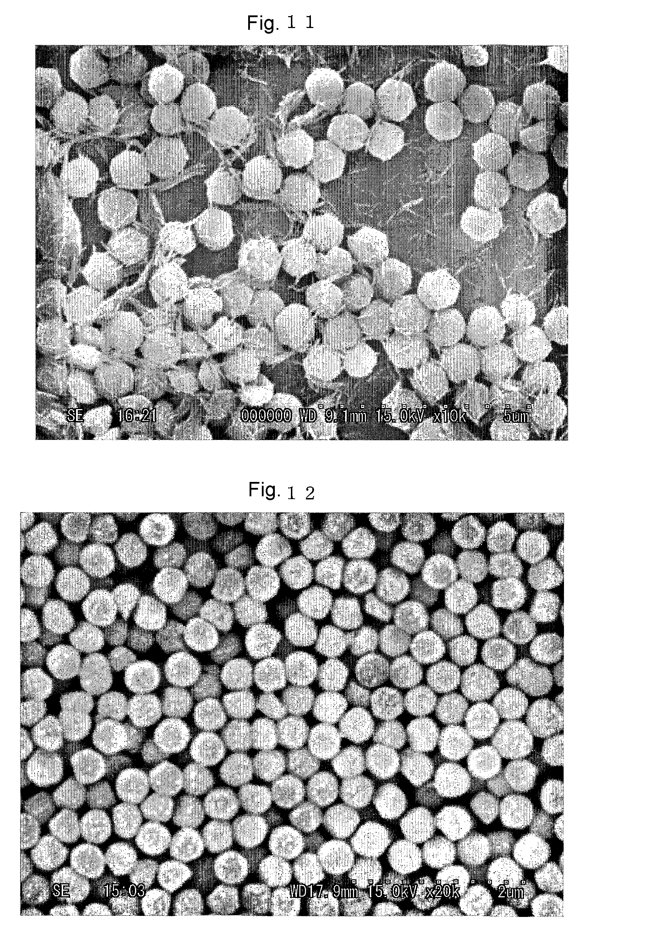

An example of particles having the form of a hexagonal plate each is shown in Fig. 11. Each particle having the form of a hexagonal plate is a plate-shaped particle having hexagonal surfaces formed of six sides each. The six sides are not required to be equal in length, and contact portions where two sides meet may be roundish.

An example of particles having the form of an octahedron is shown in Fig. 12, and they have an octahedron-shaped form like combined tetragonal pyramids or an inclined octahedron.

An example of particles having the form of a column is shown in Fig. 13. The particles having the form of a column may be particles whose middle portion swells each like a barrel (or a wine cask). They may also be cylindrical particles having nearly circular cross sections.

Particles shown in Fig. 13 have a number of valleys and hills on a surface each.

As is seen from Figs. 1 to 13, the particles of this invention have features that they uniform particle forms and have uniform sizes in each Figure (photograph) and that they are excellent in dispersibility. The particle forms described above are classified and so described for classification thereof, and they may include some deformed forms, and one form may include a small amount of the other form or forms. Further, being smooth, having fine valleys and hills and having wrinkles on the surface of each particle are not any special limitations, and such may be there or may not be there on each surface.

As measures for identifying the form of particles, there are the circularity and sphericity of Wadell that have been used in the field of powder industry. The circularity and sphericity of Wadell are as specified in "Powder Technology Manual Book", 2nd edition (compiled by the Society of Powder Technology, Japan, issued March 30, 1998) pages 37-38" and International Publication No. 2007/4713 (PCT/JP2006/313527).

In this invention, articles having the form of a sphere can be particles having a ball-like form as shown in Figs. 1 to 6, and the above sphericity s of Wadell thereof preferably satisfies $0.95 \leq s \leq 1$.

In this invention, having the form of a disk ("go" stone) concerning the form of particles refers to having the form of a spheroid with a miner diameter as a rotation axis as shown in Fig. 7. Specifically, in a projection image of each particle viewed from the direction in which the rotation axis extends, the circularity c of Wadell thereof preferably satisfies $0.95 \leq s \leq 1$, and the ratio a (minor diameter/major diameter) of an ellipse as a cross section preferably satisfies $0.05 \leq a \leq 0.5$.

In this invention, having the form of one pair (like "hamburger") concerning the form of particles refers to having the form of two semispherical particles that are stacked and that form a pair as shown in Fig. 8. And, a particle formed of one pair of particles has a gap (groove) in a circumference of a surface where two semispherical particles meet with each other. Preferably, the ratio t (minor diameter/major diameter) of each particle having the form of one pair satisfies $0.1 < t < 05$, and the ratio u (gap width in a surface where the two spheres meet/minor diameter) thereof satisfies $0.05 < u < 0.5$.

In this invention, having the form of a rice grain concerning the form of particles refers to having the form of a spheroid with its minor diameter being a rotation axis as shown in Fig. 9, and preferably, the ratio a (minor diameter/major diameter) of the ellipse thereof satisfies $0.1 \leq a \leq 0.5$, and the above sphericity s of Wadell thereof satisfies $0.4 \leq s < 0.75$.

In this invention, particles having the form of a rectangular parallelepiped can be particles having a form similar to a hexahedron or a regular hexahedron as shown in Fig. 10. Preferably, the above sphericity s of Wadell thereof satisfies $0.5 \leq s \leq 0.8$.

In this invention, having the form of a hexagonal plate concerning the form of particles refers to having a flat regular hexagon-like form as shown in Fig. 11. In their projection image viewed from the direction in which their upper or lower surfaces constitute front surfaces, preferably, the circularity c of Wadell thereof satisfies $0.95 \leq c < 0.99$ and the ratio b of a thickness/(a length of diagonal of a regular hexahedron) satisfies $0.05 \leq b \leq 0.5$.

In this invention, particles having the form of an octahedron appear to particles having an octahedron-shaped form like combined tetragonal pyramids or an inclined octahedron as shown in Fig. 12, and the above sphericity c of Wadell thereof preferably satisfies $0.5 \leq s \leq 0.9$. However, due to some unclearness caused by the insufficient resolving power of an SEM photograph, the above particles having the form of an octahedron may look like particles having the form of a hexahedron unless carefully observed.

In this invention, having the form of a column (barrel) concerning the form of particles refers to having a form which includes a columnar form as shown in Fig. 13 and in which the radius of a center portion in the height direction of the column is up to 1.0 to 1.2 times the radius of each of top and bottom surfaces. In an projection image of the top and bottom surfaces, preferably, the above circularity c of Wadell thereof satisfies $0.95 \leq c < 0.99$ and the value d of (height)/(diameter of top or bottom surface) thereof satisfies $1.5 \leq d \leq 3$.

According to this invention, the antimicrobial particles (X) can be provided in various forms such as the forms of a sphere, a disk ("go" stone), one pair, a rectangular parallelepiped, a rice grain, an octahedron and a column depending upon uses and purposes, and the particle diameter thereof can be controlled.

On the other hand, with regard to particle diameters, there can be provided antimicrobial particles (X) containing silver and copper and having an optimum diameter depending upon uses and necessary filling factors.

The antimicrobial particles (X) of this invention are free of aggregation of particles and excellent in dispersibility in an antimicrobial composition. This is considered to be one factor for the exhibition of antimicrobial activities even when the contents of silver and copper are very small. In this monodisperse particles forming technique alone, there are exhibited high unexpected antimicrobial activities that no prior art could not accomplish. With regard to a mechanism in which the antimicrobial particles (X) of this invention exhibit such high unexpected antimicrobial activities, it is assumed that the presence of an organic acid is a factor therefor. Further, it is also assumed that the synergistic effect of silver and copper or of silver, copper and an organic acid is a second factor therefor although no mechanism therefor is known clearly.

<Process for the preparation of antimicrobial particles (X)>

The process for preparing the antimicrobial particles (X) of this invention will be explained below.

The antimicrobial particles (X) can be prepared by producing particles (x) of the following formula (i) and then subjecting a portion of cations of the particles (x) to ion-exchange with silver. The particles (x) can be basically produced by a method described in International Publication No. 2005/085168 (PCT/JP2005/003831, filing date: March 1, 2005).

That is, the antimicrobial particles (X) of this invention can be prepared by the following steps (1) to (3).

(Step (1))

The step (1) is a step in which (1) a hydroxide (T component) of monovalent cation and an organic acid (U component) are added to a mixture aqueous solution of aluminum sulfate (Q component), a salt (R component) composed mainly of copper sulfate and sulfate and/or nitrate (S component) of monovalent cation, to obtain a reaction product.

The sulfate (S component) of monovalent cation includes sodium sulfate, potassium sulfate, ammonium sulfate, etc. The nitrate (S component) of monovalent cation includes sodium nitrate, potassium nitrate, ammonium nitrate, etc.

The hydroxide (T component) of monovalent cation includes sodium hydroxide, potassium hydroxide, aqueous ammonia, etc.

The R component is composed mainly of copper sulfate. Titanium sulfate, zinc oxide, etc., may be used as other components, and equivalent effects can be achieved with other soluble salts. The total amount of titanium sulfate and zinc oxide as titanium metal and zinc metal per mole of total of the copper metal, titanium metal and zinc metal is preferably 0.001 to 0.99 mol, more preferably 0.001 to 0.95 mol.

The organic acid (U component) includes an organic carboxylic acid and an organic oxycarboxylic acid. The organic carboxylic acid or organic oxycarboxylic acid preferably has 1 to 15 carbon atoms, more preferably 1 to 10 carbon atoms. The organic carboxylic acid or organic oxycarboxylic acid preferably has 1 to 4 carboxyl groups. Examples of the organic carboxylic acid or organic oxycarboxylic acid include a dicarboxylic acid, a monocarboxylic acid, a tricarboxylic acid, a chain carboxylic acid, an aromatic carboxylic acid, a hydroxyl acid, a ketonic acid, an aldehydic acid, a phenolic acid, an amino acid, a halogen carboxylic acid and salts of these. Above all, preferred is at least one member selected from the group consisting of oxalic acid ion, citric acid ion, malic acid ion, tartaric acid ion, glyceric acid ion, gallic acid ion and lactic acid ion. The U component is added so as to satisfy x in the formula (1).

For the reaction, preferably, T component is added in an amount of 1 to 4.2 mol per mole of Q component. When this amount of T component is less than 1 mol, a reaction product comes to be in an aggregate state. When it exceeds 4.2 mol, the yield of the reaction product sometimes decrease. The above amount is preferably in the range of 1 to 2.5 mol.

Preferably, S component is added in an amount of 0.01 to 5 mol per mole of Q component. When this amount of S component is less than 0.01 mol, it is difficult to form spherical particles. When it exceeds 5 mol, a reaction product is porous and has a large BET specific surface area and such particles are hard to disperse. The above amount is preferably in the range of 1 to 5 mol.

Preferably, R component is added in an amount of 0.1 to 2 mol per mole of Q component. When this amount of R component is less than 0.1 mol, a reaction product is poor in antimicrobial activities. When it exceeds 2 mol, there is caused the already described coloring problem of an antimicrobial composition. The above amount is preferably in the range of 0.1 to 1.1 mol.

For making it possible to disperse the antimicrobial particles (X) in an antimicrobial composition while they are in a monodisperse state, it is preferred to add an organic acid during the preparation of the particles (x). The added organic acid can be incorporated into the structure of each of the particles (x). However, a portion of the organic acid may be adsorbed on the surface of the antimicrobial particles (x).

(Step (2))

Step (2) is a step in which the thus-obtained reaction product is hydrothermally treated at 90 to 250°C to obtain particles (x) of a compound of the following formula (i),

$$[B]_b[M^{n+}{}_cAl^{3+}{}_{1-cn/3}]_dA_x(SO_4)_y(OH)_z \cdot pH_2O \qquad (i)$$

wherein B, $M^{n+}$, A, b, c, d, y, z, n and p are as defined in the formula (1) and x is 0.0001 or more but not more than 0.5.

The temperature for the hydrothermal treatment is preferably 90 to 250°C, more preferably 100 to 200°C, most preferably 100 to 170°C. The time period for the hydrothermal treatment is preferably 0.1 to 30 hours, more preferably 0.1 to 10 hours, most preferably 0.1 to 5 hours. The particles (x) are spherical and have a uniform particle diameter. The particles (x) include sodium type, potassium type, ammonium type and hydrogen type particles depending upon the kind of B.

(Step (3))

Step (3) is a step in which the thus-obtained particles (x) and an aqueous solution containing silver are contact-stirred to subject a portion of cations of the particles (x) to ion-exchange with silver to obtain antimicrobial particles (X) of the following formula (1-X),

$$[Ag_aB_{1-a}]_b[M^{n+}{}_cAl_{1-cn/3}]_dA_x(SO_4)_y(OH)_z \cdot pH_2O \qquad (1-X)$$

wherein B, $M^{n+}$, A, b, c, d, y, z, n and p are as defined in the formula (1) and x is 0.0001 or more but not more than 0.5.

The temperature for the ion-exchange is preferably 0 to 100°C, and the time period for the treatment is preferably 0.1 hour to 30 hours. The ion-exchange is preferably carried out while light is blocked.

With regard to the pulverization of the thus-prepared antimicrobial particles (X) of this invention, antimicrobial particles (X) free of aggregation can be obtained with a low-strength simple treatment without the need for a strong mechanical force that prior art requires, which is also one technical feature of this invention.

Examples of the processes for the production of the sodium type, potassium type, ammonium type and hydrogen type particles (X) will be described below.

(Process 1: Sodium type)

An example that can be illustrated is a process in which Al raw materials such as aluminum sulfate, etc., $SO_4$ raw materials such as sodium sulfate, zinc sulfate, etc., Cu raw materials such as copper sulfate, etc., Na raw materials such as sodium hydroxide, etc., organic acid raw materials such as oxalic acid, etc., and soluble silver salts such as silver nitrate, etc., as a silver raw material to be used for ion-exchange are used as raw materials, and the production is carried out according to the following method.

Aluminum sulfate, sodium sulfate (sodium nitrate), copper sulfate and oxalic acid are fully dissolved in water, and while the mixture is stirred, sodium hydroxide is added. After completion of the addition, preferably, the mixture is further stirred for 20 minutes or more to form a better dispersion. Then, hydrothermal treatment is carried out. The temperature for the hydrothermal treatment is preferably 100°C to 250°C, and the time period for the treatment is preferably 1 hour to 30 hours.

The thus-obtained particles (x) are recovered by filtering and they are washed with water as required. The particles are suspended in a liquid such as water and the suspension is mixed with a solution of a soluble salt such as silver sulfate, silver nitrate, etc., and stirred, so that ion-exchange treatment can be carried out, whereby the antimicrobial particles (X) of this invention can be prepared. The temperature for the ion-exchange reaction is preferably 0°C to 100°C, and the time period for the treatment is preferably 0.1 hour to 30 hours while light is blocked. When the temperature for the ion-exchange treatment is low and when the time period for the treatment is too short, an ion-exchange amount of silver may be small. On the other hand, when the temperature for the ion-exchange treatment is high and when the time period for the treatment is too long, an ion-exchange reaction product is liable to be colored in brown. The method of stirring during the treatment for the ion-exchange reaction includes the methods of vibration, rotation, etc.

The ion-exchange reaction product is isolated by a filtering/centrifugal separation method, and then, if necessary, washing with water, surface treatment, drying, pulverizing, etc., may be carried out as required, and the ion-exchange reaction product is recovered. When the isolation by filtering is difficult, the filtering procedure may be improved by using a flocculating agent to such an extent that the object of this invention is not impaired. As a flocculating agent, for example, a polymer flocculating agent such as polyacrylamide may be used. The amount of the polymer flocculating agent is preferably 0.2 % or less. Even when more than 0.2 % of the polymer flocculating agent is used, no further improvement in the filtering can be attained.

(Process 2: Potassium type)

An example that can be illustrated is a process in which Al raw materials such as aluminum sulfate, $SO_4$ raw materials such as potassium sulfate and zinc sulfate, Cu raw materials such as copper sulfate, K raw materials such as potassium hydroxide, organic acid raw materials such as oxalic acid, and soluble silver salts such as silver nitrate as a silver raw material to be used for ion-exchange are used as raw materials, and the production is carried out according to the following method.

For example, aluminum sulfate, potassium sulfate (or potassium nitrate), copper sulfate and oxalic acid are fully dissolved in water, and while the mixture is stirred, potassium hydroxide is added. Procedures thereafter are carried out as described in Process 1.

(Process 3: Ammonium type)

An example that can be illustrated is a process in which sulfates such as aluminum sulfate, ammonium sulfate and zinc sulfate, Cu raw materials such as copper sulfate, Al raw materials such as ammonium nitrate, $SO_4$ raw materials, $NH_4$ raw materials, organic acid raw materials such as oxalic acid, and soluble silver salts such as silver nitrate as a silver raw material to be used for ion-exchange are used as raw materials, and the production is carried out according to the following method. For example, aluminum sulfate, potassium sulfate (or potassium nitrate), copper sulfate and oxalic acid are fully dissolved in water, and while the mixture is stirred, aqueous ammonia is added. Procedures thereafter are carried out as described in Process 1.

(Process 4: Hydrogen type $(H_3O)^+$ type, in the form of rectangular parallelepiped)

The process for the preparation of particles having the form of a rectangular parallelepiped differs from the above preparation processes for spherical and disk-shaped particles. An aluminum sulfate aqueous solution, a copper sulfate aqueous solution, an aluminum hydroxide suspension and an organic acid such as oxalic acid, are mixed and stirred, and the mixture is hydrothermally treated at 100 to 250°C, preferably 120 to 200°C, for 0.5 hour or more, preferably 0.5 to 30 hours, more preferably 2 to 20 hours, whereby hydrogen type antimicrobial particles (x) having the form of a rectangular parallelepiped can be obtained.

Examples of the aluminum hydroxide include crystalline gibbsite, bialite, boehmite, pseudo boehmite, diaspore and amorphous aluminum hydroxide, while amorphous aluminum hydroxide is preferred in that the uniformity of particle diameters is improved.

Examples of the amorphous aluminum hydroxide include a dry aluminum hydroxide gel S-100 and a similar one FM both supplied by Kyowa Chemical Industry Co., Ltd.

For improving the formation of fine particles and the uniformity of particle diameters in this Process, a reaction product obtained by mixing and stirring an aluminum sulfate aqueous solution, a copper sulfate aqueous solution and an aluminum hydroxide suspension would rather not be hydrothermally treated immediately after it is obtained, but the reaction product would rather be hydrothermally treated after it takes some time after the reaction, for example, after it is allowed to stand for 0.5 hour or more, preferably 5 hours or more, still more preferably 16 hours or more, whereby fine antimicrobial particles (X) having the uniformity of particle diameters are obtained. Procedures thereafter are carried out as described in Process 1.

The antimicrobial particles (X) of this invention can be identified by a powder X-ray diffraction method. When silver and copper are substituted in the particles by the ion-exchange, the ion-exchanged particles have the same diffraction pattern as that which the particles before the ion-exchange have. Therefore, it is sufficient to carefully investigate the diffraction patterns while making a comparison with chemical analysis values. When particles in which silver or copper has not undergone the ion-exchange and is co-present as an impurity such as silver oxide or copper oxide are incorporated into an antimicrobial composition, undesirably, the composition shows a color in dark brown or bluish green, which is deviated from one important object of this invention to obtain an antimicrobial composition free of discoloration.

<Antimicrobial particles (Y)>

The antimicrobial particles (Y) of this invention have the same chemical composition as that in the formula (1) except that x is 0. They are hence represented by the following formula (1-Y).

$$[Ag_aB_{1-a}]_b[M^{n+}_cAl_{1-cn/3}]_d(SO_4)_y(OH)_z\cdot pH_2O \qquad (1-Y)$$

The antimicrobial particles (Y) have a feature that they contain silver and copper in molecules thereof but do not contain any organic acid anion. In the formula (1-Y), a, b, c, d, y, z, p, B, n and $M^{n+}$ are as defined in the formula (1).

The antimicrobial particles (Y) have the following embodiments.

(1) Particles having the form of a sphere:

Antimicrobial particles (Y) that have the formula (1-Y) in which $M^{n+}$ is $Cu^{2+}$, that have a particle diameter distribution sharpness (Dr) of 1 to 1.4 and that have the particle form of a sphere.

(2) Particles having the form of a disk:

Antimicrobial particles (Y) that have the formula (1-Y) but differ from the particles having the form of a sphere in that they mainly contain $Cu^{2+}$ as $M^{n+}$ and also contain $Zn^{2+}$ and that have the form of a disk. In the antimicrobial particles having the form of a disk, the molar ratio of each of $Cu^{2+}$ and $Zn^{2+}$ to $Al^{3+}$ ion is preferably from 0.01 to 0.35 and from 0.05 to 0.25, respectively. The particles having the form of a disk have a particle diameter distribution sharpness (Dr) of 1 to 1.8

(3) Particles having the form of a rectangular parallelepiped:

Antimicrobial particles (Y) that has the formula (1-Y) in which B is $H_3O^+$ ion, that mainly contain $Cu^{2+}$ as $M^{n+}$ and also contain $Zn^{2+}$ and that have the form of a rectangular parallelepiped. In the antimicrobial particles having the form of a rectangular parallelepiped, the molar ratio of each of $Cu^{2+}$ and $Zn^{2+}$ to $Al^{3+}$ ion is preferably from 0.01 to 0.45 and from 0.05 to 0.25, respectively. The particles having the form of a rectangular parallelepiped have a particle diameter distribution sharpness (Dr) of 1 to 1.8

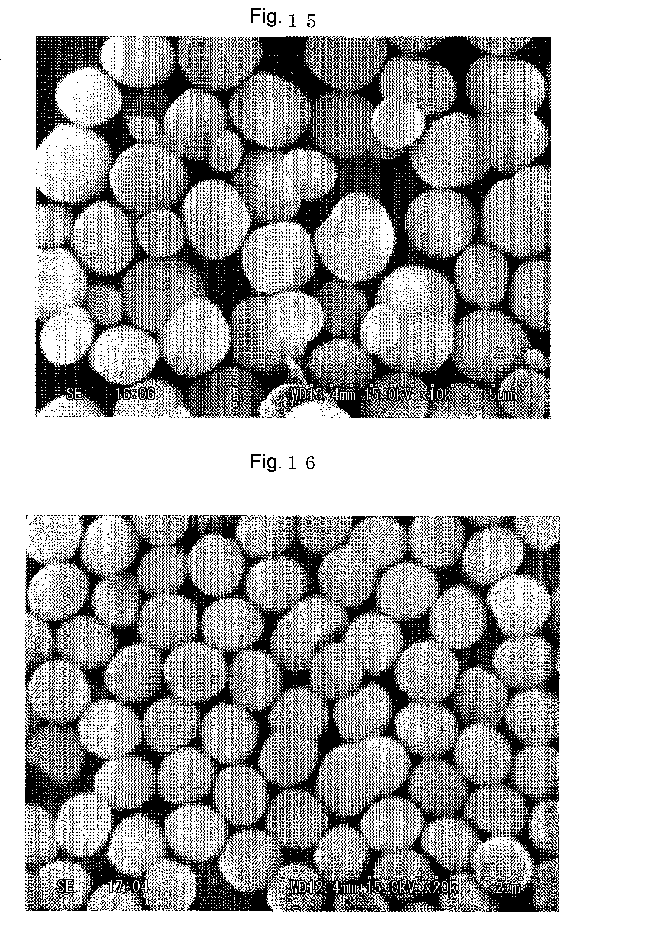

The antimicrobial particles (Y) of this invention have the form of a sphere, a disk or a rectangular parallelepiped and are morphologically uniform as shown in the SEM photographs of Figs. 15 to 20. Further, they are free of aggregation of particles and excellent in dispersibility in water and an organic dispersing medium. Further, when they are incorporated into an antimicrobial composition, no or almost no aggregation takes place.

An antimicrobial composition obtained by mixing the antimicrobial particles (Y) with other active ingredient exhibits antimicrobial activities even when the content of silver is very small.

Particles having the form of a sphere can be particles having the form of a ball each as shown in the SEM photographs of Figs. 15, 16, 17 and 19, and the above sphericity s of Wadell thereof preferably satisfies $0.95 \leq s \leq 1$.

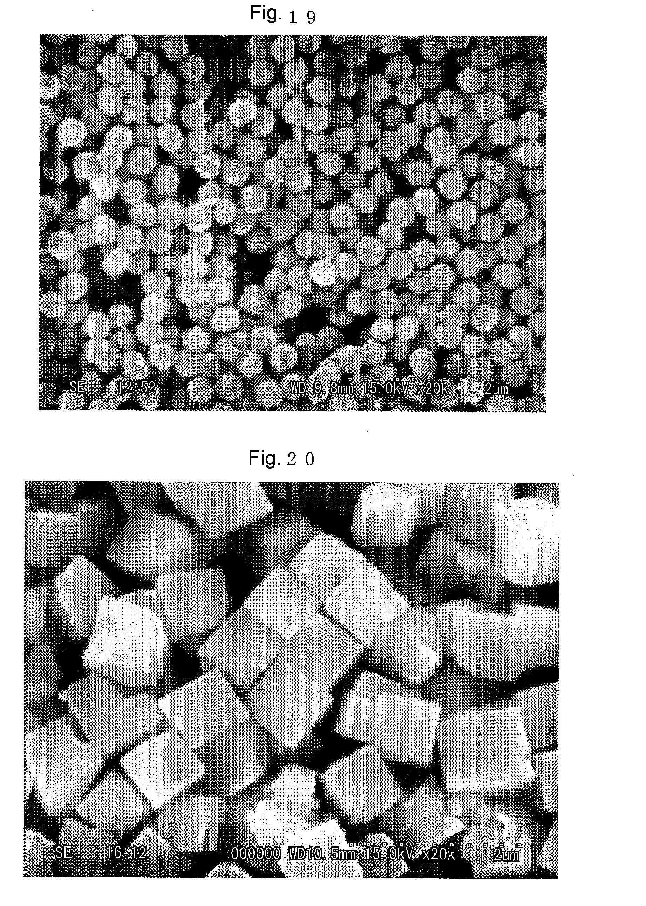

Particles having the form of a rectangular parallelepiped can be particles having a form similar to a hexahedron or a regular hexahedron as shown in the SEM photograph of Fig. 20, and the above sphericity s of Wadell thereof preferably satisfies $0.5 \leq s \leq 0.8$.

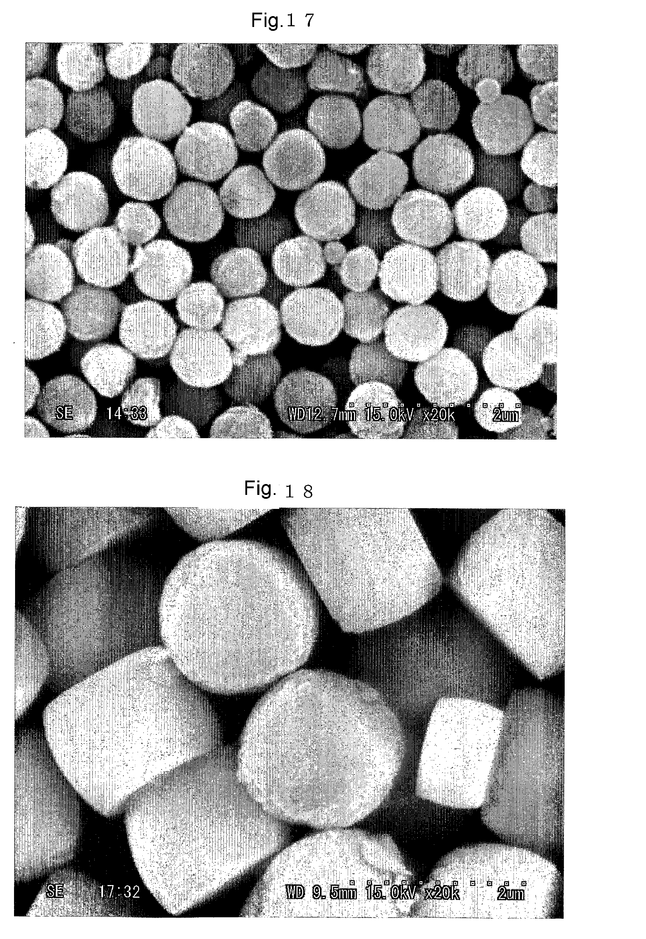

Having the form of a disk concerning the form of particles refers to having a flat columnar form, and in a projection image of particles viewed from the direction in which the top or bottom surface constitutes a front surface, preferably, the image thereof is a circular form in which the above circularity c of Wadell is $0.95 \leq c \leq 1$ and the ratio d of thickness/(diameter of a circle) is $0.5 \leq d \leq 0.6$. Particles having the above form of a disk are shown in the SEM photograph of Fig. 18.

(Process for the production of antimicrobial particles (Y))

The antimicrobial particles (Y) can be prepared by producing particles (y) of the following formula (ii) and then subjecting a portion of cations of the particles (y) to ion-exchange with silver. The particles (y) can be prepared by a method proposed by the present inventor and described in International Publication No. 2006/109847.

(a) Preparation of particles having the form of a sphere

The antimicrobial particles (Y) having the form of a sphere, provided by this invention, can be prepared by the following steps (1) to (3).

(Step (1))

Step (1) is a step in which a hydroxide (T component) of monovalent cation is added to a mixture aqueous solution containing aluminum sulfate (Q component), a salt (R component) composed mainly of copper sulfate and sulfate (S component) of monovalent cation, to obtain a reaction product. The R component is composed mainly of copper sulfate and contains titanium sulfate and/or zinc oxide as an optional component.

In the step (1), the molar ratio of the S component to the total of the Q component and the R component, {S/(Q+R)}, is from 0.3 to 3, preferably from 0.6 to 2.5, more preferably 0.6 to 2. When this molar ratio is from 0.3 to 3, there can be prepared antimicrobial particles (Y) that are excellent in uniformity of particle diameters and that are fine in size.

In the step (1), the alkali equivalent weight ratio of the T component to the total of the Q component and the R component, {T/(Q+R)}, is from 0.6 to 1, preferably from 0.7 to 0.9, more preferably from 0.75 to 0.9. When the alkali equivalent weight ratio is lower than 0.6, there may not be obtained antimicrobial particles (Y) that have the form of a sphere and that are excellent in uniformity of particle diameters. On the other hand, when it is higher than 1.0, in particular higher than 1.2, there may not be obtained antimicrobial particles (Y) that have the form of a sphere and that are excellent in uniformity of particle diameters, and, further, the antimicrobial particles (Y) may contain boehmite that is a kind of a crystal form of aluminum hydroxide.

As a monovalent cation sulfate (S component), there can be employed a sulfate of at least one monovalent cation selected from the group consisting of $Na^+$, $K^+$ and $NH_4^+$. That is, as a sulfate (S component) of monovalent cation, sodium sulfate, potassium sulfate, ammonium sulfate, etc., may be used.

As a hydroxide (T component) of monovalent cation, there can be employed a hydroxide of at least one monovalent cation selected from the group consisting of $Na^+$, $K^+$ and $NH_4^+$. That is, as a hydroxide of monovalent cation, sodium hydroxide, potassium hydroxide, aqueous ammonia, etc., may be used.

(Step (2))

Step (2) is a step in which the thus-obtained reaction product is hydrothermally treated at 90 to 250°C to obtain particles (y) of a compound of the following formula (ii),

$$[B]_b[M^{n+}{}_cAl_{1-cn/3}]_d(SO_4)_y(OH)_z \cdot pH_2O \qquad (ii)$$

wherein B, $M^{n+}$, b, c, d, y, z and p are as defined in the formula (1).

The temperature for the hydrothermal treatment is preferably 90 to 250°C, more preferably 100 to 200°C, most preferably 100 to 170°C. The time period for the hydrothermal treatment is preferably 0.1 to 30 hours, more preferably 0.1 to 10 hours, most preferably 0.1 to 5 hours. The particles (y) have the form of a sphere each and have uniform particle diameters.

(Step (3))

Step (3) is a step in which the thus-obtained particles (y) and an aqueous solution containing silver are contact-stirred to subject a proportion of cations of the particles (y) to ion-exchange with silver, to obtain antimicrobial particles (Y) of the following formula (1-Y),

$$[Ag_aB_{1-a}]_b[M^{n+}{}_cAl_{1-cn/3}]_d(SO_4)_y(OH)_z \cdot pH_2O \qquad (1\text{-}Y)$$

wherein B, $M^{n+}$, a, b, c, d, y, z and p are as defined in the formula (1).

The antimicrobial particles (Y) have a particle diameter distribution sharpness (Dr) of 1 to 1.4 and have the form of a sphere each.

(b) Preparation of particles having the form of a disk

The antimicrobial particles (Y) having the form of a disk, provided by this invention, can be prepared by the following steps (1) to (3).

(Step (1))

Step (1) is a step in which a hydroxide (T component) of monovalent cation is added to a mixture solution containing aluminum sulfate (Q component), a salt (R component) composed mainly of copper sulfate and a monovalent cation sulfate (S component) in a manner that the alkali equivalent weight ratio {T/(Q+R)} comes to be from 0.6 to 1, to obtain a reaction product. The R component is composed mainly of copper sulfate and optically contains titanium sulfate and/or zinc oxide.

As a monovalent cation sulfate (S component), there can be employed a sulfate of at least one monovalent cation selected from the group consisting of $Na^+$, $K^+$ and $NH_4^+$. As a hydroxide (T component) of monovalent cation, there can be employed a hydroxide of at least one monovalent cation selected from the group consisting of $Na^+$, $K^+$ and $NH_4^+$. The alkali equivalent weight ratio is preferably from 0.7 to 0.9, more preferably from 0.75 to 0.9. When the alkali equivalent weight ratio is within 0.6 to 1, there can be obtained antimicrobial particles (Y) having the form of a disk each and having excellent uniformity of particle diameters.

(Step 2)

Step (2) is a step in which the thus-obtained solution is hydrothermally treated at 90 to 250°C to obtain particles (y) of a compound of the following formula (ii),

$$[B]_b[M^{n+}{}_cAl^{3+}{}_{1-cn/3}]_d(SO_4)_y(OH)_z \cdot pH_2O \qquad (ii)$$

wherein B, $M^{n+}$, b, c, d, y, z, n and p are as defined in the formula (1).

The temperature for the hydrothermal treatment is preferably 90 to 250°C, more preferably 100 to 200°C, most preferably 100 to 170°C. The time period for the hydrothermal treatment is preferably 0.1 to 30 hours, more preferably 0.1 to 10 hours, most preferably 0.1 to 5 hours. The particles (y) have the form of a sphere each and have uniform particle diameters.

When the alkali equivalent weight ratio is from 0.78 to 0.9, the temperature for the hydrothermal treatment is preferably 90 to 250°C, more preferably 100 to 250°C, still more preferably 120 to 250°C, yet more preferably 150 to 200°C. When the above temperature is 100°C or lower, in particular, 90°C or lower, particles excellent in uniformity of particle diameters may not be prepared. When it is higher than 250°C, there is no further effect on an improvement in uniformity of particle diameters, and such a high temperature is not economical, either. When the alkali equivalent weight ratio is from 0.9 to 1.1, the temperature for the hydrothermal treatment is preferably 110 to 250°C, more preferably 150 to 250°C, still more preferably 150 to 200°C. When the above temperature is lower than 110°C, particles excellent in uniformity of particle diameters may not be prepared. When it is higher than 250°C, there is no further effect on an improvement in uniformity of particle diameters, and such a high temperature is not economical, either.

When the alkali equivalent weight ratio is from 0.78 to 0.9, the time period for the hydrothermal treatment is preferably 0.3 to 30 hours, more preferably 1 to 20 hours, most preferably 1.5 to 6 hours. When the alkali equivalent weight ratio is from 0.9 to 1.1, the time period for the hydrothermal treatment is preferably 0.5 to 30 hours, more preferably 1 to 20 hours, most preferably 1.5 to 6 hours. When the time period for the hydrothermal treatment is less than 0.3 hours or 0.5 hours, there may not be prepared particles excellent in uniformity of particle diameters. Even when it exceeds 30 hours, there is no further special effect on an improvement in uniformity of particle diameter, and such a long time treatment is not economical, either.

(Step (3))

Step (3) is a step in which the thus-obtained particles (y) and an aqueous solution containing silver are contact-stirred to subject a portion of cations of the particles (y) to ion-exchange with silver, to obtain antimicrobial particles (Y) of the following formula (1-Y),

$$[Ag_aB_{1-a}]_b[M^{n+}{}_cAl_{1-cn/3}]_d(SO_4)_y(OH)_z \cdot pH_2O \qquad (1\text{-}Y)$$

wherein B, $M^{n+}$, a, b, c, d, y, z, n and p are as defined in the formula (1).

In the antimicrobial particles (Y), c preferably satisfies $2.5 \leq c < 3$, more preferably $2.5 \leq c \leq 2.99$, still more preferably $2.61 \leq c \leq 2.9$.

In the antimicrobial particles (Y), $M^{n+}$ is a metal ion composed mainly of $Cu^{2+}$. The amount ratio of $Cu^{2+}$ in $M^{n+}$ per mole of $M^{n+}$ is preferably 0.01 to 1 mol, more preferably 0.05 to 1 mol. $M^{n+}$ is composed mainly of $Cu^{2+}$ and may contain at least one metal ion selected from the group consisting of $Ti^{4+}$ and $Zn^{2+}$. The total amount ratio of $Ti^{4+}$ and $Zn^{2+}$ in $M^{n+}$ per mole of $M^{n+}$ is preferably 0.001 to 0.99 mol, more preferably 0.001 to 0.95 mol.

The antimicrobial particles (Y) have the form of a disk and have a particle diameter distribution sharpness (Dr) of 1 to 1.8.

(c) Preparation of particles having the form of a rectangular parallelepiped

The antimicrobial particles (Y) having the form of a rectangular parallelepiped, provided by the present invention, can be prepared by the following steps (1) and (2).

(Step (1))

Step (1) is a step in which a suspension of aluminum hydroxide is added to a mixture aqueous solution containing aluminum sulfate (Q component) and a salt (R component) composed mainly of copper sulfate to obtain a reaction product. The R component is composed mainly of copper sulfate and optionally contains titanium sulfate and/or zinc oxide.

As an aluminum hydroxide, amorphous aluminum hydroxide is preferred since it has high effects that particles are imparted with the form of a rectangular parallelepiped and that the uniformity of particle diameters is improved. Examples of the amorphous aluminum hydroxide include a dry aluminum hydroxide gel S-100 and a similar one FM both supplied by Kyowa Chemical Industry Co., Ltd.

The amount of aluminum hydroxide to be added per mole of aluminum sulfate (Q component) is preferably 0.8 to 1.25 mol for the purpose of forming particles having the form of a rectangular parallelepiped each. The amount of the R component per mol of the Q component is preferably 0.1 to 2 mol. When this amount is less than 0.1 mol, the antimicrobial activities are poor. When it exceeds 2 mol, there is caused the already described coloring problem. It is preferably in the range of 0.1 to 1.1 mol.

(Step (2))

Step (2) is a step in which the thus-obtained reaction product is hydrothermally treated. The temperature for the hydrothermal treatment is preferably 100 to 250°C, more preferably 120 to 200°C. The time period for the hydrothermal treatment is preferably 0.5 hours or more, more preferably 0.5 to 30 hours, still more preferably 2 to 20 hours.

The obtained particles (y) are represented by $(H_3O)(Al,Cu)_3(SO_4)_2(OH)_6$.

For improving the formation of fine particles and the uniformity of particle diameters in this method, a reaction product obtained by mixing and stirring an aluminum sulfate aqueous solution (Q component), a salt (R component) composed mainly of copper sulfate and an aluminum hydroxide suspension (W component) would rather not be hydrothermally treated immediately after it is obtained, but the reaction product would rather be hydrothermally treated after it takes some time after the reaction, for example, after it is allowed to stand for 1 hour or more, preferably 1 to 300 hours, still more preferably 5 to 200 hours, whereby there are obtained copper-containing aluminum sulfate hydroxide particles having fine particle sizes and uniformity of particle diameters.

(Step (3))

Step (3) is a step in which the thus-obtained particles (y) and an aqueous solution containing silver are contact-stirred to subject a proportion of cations of the particles (y) to ion-exchange with silver, to obtain antimicrobial particles (Y) of the following formula (1-Y),

$$[Ag_aB_{1-a}]_b[M^{n+}_cAl_{1-cn/3}]_d(SO_4)_y(OH)_z \cdot pH_2O \qquad (1-Y)$$

The temperature for the ion-exchange treatment is 0 to 100°C, preferably 10 to 80°C, most preferably 20 to 80°C. The time period for the ion-exchange treatment is 0.1 to 30 hours. Preferably, the ion-exchange treatment is carried out while light is blocked. When the treatment temperature during the ion-exchange is low or when the treatment time period is short, the ion-exchange amount of silver may be small. When the treatment temperature during the ion-exchange is too high, when the treatment time period is too long, or when the ion-exchange is carried out while light is not blocked, an ion-exchange treatment product is liable to be colored in brown. The method of stirring in the treatment for the ion-exchange reaction includes methods of vibration, rotation, and the like.

After the ion-exchange is carried out, the procedures of filtering, washing with water, surface treatment, drying, pulverizing, etc., are carried out as required, and the ion-exchange reaction product is recovered, whereby antimicrobial particles (Y) can be obtained. When the filter is difficult to carry out by a filter passing method, it may be carried out by a decantation method or a centrifugal separation method or a flocculating agent may be used to such an extent that the object of this invention is not impaired. As a flocculating agent, for example, a polymer flocculating agent such as polyacrylamide may be used. The amount of the polymer flocculating agent is preferably 0.2 % or less. As far as it is 0.2 % or less, nothing affects the dispersibility of the antimicrobial particles (Y) of this invention, and the filtering operation is improved.

With regard to the pulverization treatment, this invention also has a characteristic feature that antimicrobial particles (Y) that are free of aggregation and that are in a monodisperse state or nearly in a monodisperse state can be obtained with a low-strength simple treatment without the need for a strong mechanical force, as is seen in the SEM photographs.

The antimicrobial particles (Y) of this invention can be identified by a powder X-ray diffraction method. When silver is substituted by the ion-exchange, the ion-exchanged particles have the same diffraction pattern as that which the particles before the ion-exchange have. Therefore, it is sufficient to carefully investigate the diffraction patterns while making a comparison with chemical analysis values. When particles in which silver has not undergone the ion-exchange and is co-present as an impurity such as silver oxide are incorporated into an antimicrobial composition, undesirably, the composition shows a color in dark brown.

In this invention, 1/5 or less of y mol of $(SO_4)_y$ in the antimicrobial particles (Y) may be replaced with other inorganic acid ion. When the replacement amount is in particular 1/10 or less, the particle form and particle diameter of the antimicrobial particles (Y) can be maintained without any problem, and the object of this invention can be achieved. Examples of the above inorganic acid ion include $SO_3^{2-}$, $PO_4^{3-}$, $HPO_3^{2-}$, $CO_3^{2-}$, $NO_3^-$, $SiO_4^{4-}$ and $BO_3^{3-}$. As a method for replacing a portion of $(SO_4)_y$ of the antimicrobial particles (Y) with other inorganic acid ion, for example, there is a method in which a compound containing an inorganic acid ion is added to a suspension containing particles (y) to carry out ion-exchange in the solvent and, further, ion-exchange with silver is carried out by the method of the step (3).

Particles obtained by replacing a portion of the antimicrobial particles (Y) with an inorganic acid ion in the above manner can be used as an antimicrobial agent after they are dried, calcined, surface-treated and surface-coated for durability against acids, or can be mixed with other effective component to obtain an antimicrobial composition.

In this invention, a portion of $(OH)_z$ of the antimicrobial particles (Y) may be sometimes replaced with $Cl^-$. In view of the prevention of a coloring, the content thereof in the above antimicrobial agent is 0.1 mol or less, preferably 0.01 mol or less, most preferably 0.001 mol or less.

<Antimicrobial composition>

The antimicrobial particles {including the antimicrobial particles (X) and antimicrobial particles (Y)} can be applied to various antimicrobial compositions by taking advantage of their dispersibility, uniformity of particle forms and uniformity of particle diameters.

The antimicrobial composition of this invention contains the antimicrobial particles of this invention and a dispersing medium, and the content of the antimicrobial particles per 100 parts by weight of the antimicrobial composition is 0.001 to 300 parts by weight, preferably 0.001 to 10 parts by weight, more preferably 0.001 to 2 parts by weight. The dispersing medium includes water, an organic solvent, etc. The organic solvent includes ethanol, ethylene glycol, glycerin, etc. A surfactant, a freshness preserver, an emulsifier, an acid resistance modifier, a discoloration preventing agent, a surface treating agent, etc., may be dispersed in a dispersing agent that is proper depending upon a field of use.

The antimicrobial composition of this invention has properties excellent in antimicrobial activities and dispersibility and is excellent in the capability of maintaining antimicrobial activities after it is placed in an environment where it is brought into contact with tap water. An antimicrobial composition containing 0.001 to 10 parts by weight, per 100 parts by weight of the antimicrobial composition, of the antimicrobial particles is excellent in transparency and coloring resistance.

The antimicrobial composition of this invention has high acid resistance. For imparting higher acid resistance to prevent discoloration, it is preferred to surface-treat the antimicrobial particles with at last one acid resistance modifier selected from the group consisting of a silicon compound, a phosphorus compound, a boron compound, an aluminum compound, a zirconium compound, a titanium compound, a zinc compound and a tin compound.

As the above acid resistance modifiers, the silicon compound includes sodium metasilicate, sodium orthosilicate, potassium metasilicate, potassium orthosilicate, water glass, silicic acid and silicone oil; the boron compound includes sodium tetraborate, sodium metaborate, potassium tetraborate, potassium metaborate and boric acid; the aluminum compound includes sodium orthoaluminate, sodium metaaluminate, potassium orthoaluminate, potassium metaaluminate, aluminum chloride, aluminum nitrate, aluminum sulfate and aluminum phosphate; the phosphorus compound includes potassium phosphate, sodium phosphate and phosphoric acid; the zirconium compound includes zirconium phosphate, sodium zirconate, potassium zirconate and zirconic acid, the titanium compound includes titanium chloride, sodium titanate, potassium titanate and titanic acid; the zinc compound includes zinc chloride, zinc nitrate, zinc carbonate, zinc sulfate and zincate; the tin compound includes sodium stannate and potassium stannate; and the ammonium salt includes ammonium sulfate, ammonium nitrate, ammonium phosphate, ammonium carbonate and ammonium acetate.

The antimicrobial particles of this invention are originally monodisperse particles and are hence excellent in dispersibility in the antimicrobial composition, and yet, for further improving the dispersibility in a resin, etc., or preventing the discoloration of the antimicrobial composition, the antimicrobial particles of this invention may be surface-treated with at least one member selected from the group consisting of higher fatty acids, a silane coupling agent, an aluminate coupling agent, alcohol phosphoric esters, surfactants, etc.

Examples of the above surface treatment agents include higher fatty acids such as stearic acid, oleic acid, erucic acid, palmitic acid, lauric acid and behenic acid, and salts thereof, surfactants such as sulfate of polyethylene ether, amid-bonded sulfate, ester-bonded sulfate, ester-bonded sulfonate, amide-bonded sulfonate, ether-bonded sulfonate, ether-bonded alkylallyl sulfonate and amide-bonded alkylallyl sulfonate, sulfates of higher alcohols such as stearyl alcohol and oleyl alcohol, an acid type or alkali metal salt or amine salt of a mono- or diester or a mixture of orthophosphoric acid and stearyl alcohol or oleyl alcohol, or the like, silane coupling agents such as vinylethoxysilane, vinyl-tolyl(2-methoxy-ethoxy)silane, gamma-methacryloxypropyltrimethoxysilane, gamma-aminopropyltrimethoxysilane, N-phenyl-gamma-aminopropyltrimethoxysilane, N-beta(aminoethyl)gamma-aminopropyltrimethoxysilane, N-beta(aminoethyl) gammaaminopropyltriethoxysilane, N-phenyl-gammaaminopropyltriethoxysilane, beta(3,4-epoxycyclohexyl)ethyltrimethoxysilane and gamma-mercaptopropyltrimethoxysilane, titanate coupling agents such as isopropyltriisostearoyl titanate, isopropyltri(aminoethyl) titanate and isopropyltridecylbenzenesulfonyl titanate, and aluminate coupling agents such as acetoalkoxyaluminum diisopropylate.

The antimicrobial composition includes an antifungal agent containing the antimicrobial particles of this invention as an effective component. Further, it also includes an agricultural chemical containing the antimicrobial particles of this invention as an effective component.

Examples

The process for the preparation of the antimicrobial particles of this invention and use thereof will be specifically explained on the basis of Examples.

Methods for measuring antimicrobial particles and antimicrobial composition for their physical properties will be described below.

(1) Average secondary particle diameter

Measured with a particle size distribution measuring apparatus LA-910 (laser diffraction scattering method) supplied by HORIBA, Ltd.

(2) Sharpness (DR) of particle diameter distribution

A sharpness of a particle diameter distribution obtained by dividing a particle diameter $D_{75}$ (large particle

diameter side) that is a 75 % value of a laser diffraction scattering method volume standard cumulative particle diameter distribution curve measured with a particle size distribution measuring apparatus LA-910 supplied by HORIBA, Ltd., by a particle diameter $D_{25}$ (finer particle diameter side) that is a 25 % value thereof was defined as Dr = $D_{75}/D_{25}$. As the value of Dr becomes smaller, the sharpness of a particle diameter distribution is recognized to increase in degree, which means a higher degree of uniformity of particle diameters.

With regard to spherical particles, however, $D_{75}/D_{25}$ measured by a laser diffraction scattering method and the following particle diameter distribution measuring method based on an SEM photograph were combined to evaluate particle diameters. In such a case, the value of $D_{75}/D_{25}$ according to the laser diffraction scattering method was nearly equivalent to the value of $D_{75}/D_{25}$ based on an SEM photograph to such an extent that they were different by approximately -10 to +10 %, so that this invention has used $D_{75}/D_{25}$ values obtained according the laser diffraction scattering method.

Method for measuring a particle diameter distribution on the basis of electron microscope photograph (SEM photograph)(cases of spherical particles):

Spherical particles of all of particles (50 to several hundreds) observed on one SEM photograph were individually measured for a major diameter and a minor diameter each to 1/50 mm with a slide gauge, an average of the major diameter and minor diameter was determined for each of particles and such average values were used as particle diameters (converted to $\mu$m). Then, particle diameters corresponding to $D_{75}$% and $D_{25}$% of accumulative particle diameters were determined and Dr = $D_{75}/D_{25}$ was calculated.

(3) BET specific surface area

Measured with a 12-sample full automatic surface measuring apparatus, Multisorb-12, supplied by Yuasa Ionics, Inc.

(4) Form of particles

Observed through a scanning electron microscope (SEM photograph).

(5) Ion-exchanger formation

An investigation was made for a diffraction pattern of antimicrobial particles and any other diffraction pattern with a powder X-ray diffraction method.

(6) Content of organic acid

Antimicrobial particles were calcined at 1,000°C to generate $CO_2$, the $CO_2$ was measured according to JIS R 9101, a content of carbon was calculated on the basis of the measurement and a content of an organic acid was determined on the basis of the calculation.

(7) Method of antimicrobial activity test.

In all of the following antimicrobial activity tests, E. coli NBRC 3972 was used as colon bacillus and S. aureus NBRC 12732 was used as Staphylococcus aureus. Antimicrobial activities were evaluated on the basis of an inhibitory concentration (MIC value). A lower inhibitory concentration (MIC value) means higher antimicrobial activities. Inhibitory concentrations were determined by a method according to Japanese Society of Chemotherapy standard method (revised in 1980). However, MHB agar media were sued as media for sensitive disks.

(8) Dispersibility

An antimicrobial composition obtained by dispersing an antimicrobial agent and other component in water was fully stirred and then allowed to stand, and the dispersibility was evaluated on the basis of a sedimentation velocity.

Method: A sedimentation tube with a prepared slurry in it was allowed to stand at room temperature and interfaces of an A layer (supernatant liquid layer), a B layer (suspension liquid layer) and a D layer (sedimentation layer) were determined according to a method described in ENCYCLOPAEDIA CHIMICA, compact edition, Vol. 5, page 981 (KYORITSU SHUPPAN CO., LTD., issued on March 20, 1967). A change ratio of a height of the interface between the A layer (supernatant liquid layer) and the B layer (suspension liquid layer) of these, i.e., a sedimentation interface height, to a time was determined as a sedimentation velocity (mm/hr) according to the following equation.

$$\text{Sedimentation velocity (mm/hr) = (initial}$$
$$\text{sedimentation interface height - a sedimentation}$$
$$\text{interface height after the lapse of a time T)}$$

(9) Discoloration resistance

An antimicrobial agent sample was left in a room blocked off the direct rays of the sun on the north side for 60 days and then visually observed to see to what extent it was discolored.

(10) Capability of maintaining antimicrobial activities after contact to tap water

Antimicrobial particles were dispersed in 1,000 ml of tap water and the thus-prepared dispersion was allowed to stand at 90°C or 50°C for 16 hours. Then, the antimicrobial particles were evaluated by the method of the antimicrobial activity test in the above (7). The reason for heating the tap water to 90°C or 50°C was to decrease the time period for testing the capability of maintaining antimicrobial activities after the contact of the antimicrobial particles to tap water, and it was an acceleration test to a case where the capability of maintaining antimicrobial activities after the contact to tap water was tested at room temperature.

Figures (photographs) and Antimicrobial particles of Examples and Comparative Examples are related as follows.

Fig. 1 Spherical particles having a smooth surface each, A1 particles
Fig. 2 Spherical particles having small grains on a surface each, A20 particles
Fig. 3 Spherical particles having a roughened surface each and further having wrinkles (flaws and cracks) on a surface each, A21 particles
Fig. 4 Spherical particles having holes (valleys and hills), A22 particles
Fig. 5 Spherical particles having a smooth surface each and having a little more linear portions than those in Fig. 1, A30 particles
Fig. 6 Spherical particles having a roughened surface and having wrinkles on a surface each, A31 particles
Fig. 7 Particles having the form of a disk each, B1-1 particles
Fig. 8 Particles having the form of one pair ("hamburger"-shaped particles), C1 particles
Fig. 9 Particles having the form of a rice grain, D1 particles
Fig. 10 Particles having the form of a rectangular parallelepiped each, E1 particles
Fig. 11 Particles having the form of a hexagonal plate, F1 particles
Fig. 12 Particles having the form of an octahedron, each, G1 particles
Fig. 13 Particles having the form of a column (barrel) each, H1 particles
Fig. 14 Aggregate particles having a surface in a state of being roughened and stretched each, V1 particles
Fig. 15 Spherical particles having a smooth surface each (Y-A-1 particles)
Fig. 16 Spherical particles having cracks in a surface each and particles having a partially broken surface each (Y-A-4 particles)
Fig. 17 Spherical particles having cracks in a surface each (Y-A-5 particles)
Fig. 18 Particles having the form of a disk each (Y-A-19 particles)
Fig. 19 Spherical particles (Y-A-18 particles)
Fig. 20 Particles having the form of a rectangular parallelepiped (Y-A-30 particles)

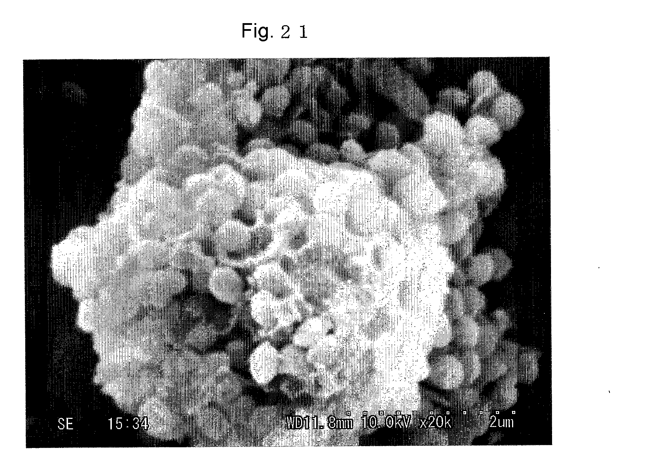

Fig. 21 Aggregate particles in the form of a mass formed by stacking of a number of spherical particles (Y-V-1 particles)

<Spherical antimicrobial particles (X)>

Examples 1 to 31 and Comparative Examples 1 to 4

Tables 1 and 2 show the production methods of spherical antimicrobial particles (X) and properties thereof, and Table 2 shows Comparative Examples to them. When the value of "b" is 1 in formulae in the following Examples, "1" is omitted.

Example 1

A1 particles as ammonium type particles (X) were obtained from the following raw materials by the following synthesis method.

Raw materials used

| Ammonium sulfate $(NH_4)_2SO_4$ | 264.28 g | 2 mol |
| Copper sulfate $(CuSO_4 \cdot 5H_2O)$ | 200 g | 0.8 mol |
| Oxalic acid $(H_2C_2O_4 \cdot 2H_2O)$ | 38 g | 0.3 mol |
| 1.04mol/L of aluminum sulfate | 1923 ml | 2.0 mol |
| 9.0mol/L of aqueous ammonia | 894.5 ml | 8.05 mol |

(Preparation of particles (x))

264.28 Grams of ammonium sulfate and 200 g of copper sulfate were dissolved in 4.0 L of deionized water, 38 g of oxalic acid was dissolved in 1.0 L of deionized water. While the mixture solution of ammonium sulfate and copper sulfate which was stirred, the oxalic acid aqueous solution and the aluminum sulfate aqueous solution was added thereto to prepare a mixture acid aqueous solution.

The mixture acid aqueous solution was heated to 50°C or lower with fully stirring (for dissolving a precipitated crystallized product), and then 894.5 ml of aqueous ammonia was added to the mixture acid aqueous solution over the time period of 25 minutes, to prepare a slurry of ammonium type particles (x). The slurry was further hydrothermally treated at 100°C for 1 hour. After the treatment, a precipitate was recovered by filtering, washed with water, dried and pulverized to obtain particles (x).

(Ion-exchange)

100 Grams of the particles (x) were suspended in 600 ml of a 0.025 mol/L silver sulfate aqueous solution and the dispersion was stirred to carry out ion-exchange of ammonium ion and silver ion at 30°C for 8 hours while light was blocked. After the ion-exchange, a sample was recovered by filtering, washed with water, dried (105°C x 6 hours) and pulverized. Through these treatment procedures, A1 particles as $NH^{4+}$ type particles (X) were obtained.

Example 2

The A1 particles obtained in Example 1 were dried at 150°C for 2 hours to give A2 particles.

Example 3

The treatment steps of Example 1 were repeated except that the amount of oxalic acid was changed to 0.0005 mol (0.063 g), and the resultant product was dried at 150°C for 2 hours to give A3 particles.

Example 4

The treatment steps of Example 1 were repeated except that the amount of oxalic acid was changed to 0.05 mol (6.3 g), and the resultant product was dried at 150°C for 2 hours to give A4 particles.

Example 5

The treatment steps of Example 1 were repeated except that the amount of oxalic acid was changed to 1.5 mol (189.1 g), and the resultant product was dried at 150°C for 2 hours to give A5 particles.

Example 6

The treatment steps of Example 1 were repeated except that the amount of aluminum sulfate was changed to 1,731 ml (1.8 mol) and that the amount of copper sulfate was changed to 180 g (0.72 mol) and the resultant product was dried at 150°C for 2 hours to give A6 particles.

Example 7

The treatment steps of Example 1 were repeated except that the amount of aluminum sulfate was changed to 2,115 ml (2.2 mol) and that the amount of copper sulfate was changed to 220 g (0.88 mol) and the resultant product was dried at 150°C for 2 hours to give A7 particles.

Example 8

The treatment steps of Example 1 were repeated except that the amount of ammonium sulfate was changed to 2.3 mol (303.9 g) and the resultant product was dried at 150°C for 2 hours to give A8 particles.

Example 9

The treatment steps of Example 1 were repeated except that the stirring time period after the addition of aqueous ammonia was changed to 2 hours, that the amount of aqueous ammonia to be added was changed to 1,093 ml (9.84 mol) and that the time period for the hydrothermal treatment was changed to 30 minutes, and the resultant product was dried at 150°C for 2 hours to give A9 particles.

Example 10

The treatment steps of Example 1 were repeated except that the time period for the hydrothermal treatment at 100°C was changed to 45 minutes, and the resultant product was dried at 150°C for 2 hours to give A10 particles.

Example 11

The treatment steps of Example 1 were repeated except that the time period for the addition of aqueous ammonia was changed to 40 minutes and that the amount of aqueous ammonia to be added was changed to 755 ml (6.8 mol), and the resultant product was dried at 150°C for 2 hours to give A11 particles.

Example 12

The treatment steps of Example 1 were repeated except that the amount of the silver sulfate aqueous solution for ion-exchange was changed to 1,800 mol, and the resultant product was dried at 150°C for 2 hours to give A12 particles.

Example 13

The treatment steps of Example 1 were repeated except that the silver sulfate aqueous solution for ion-exchange was changed to a silver nitrate aqueous solution, that the concentration thereof was changed to 0.001 mol/L , that the amount of the solution was changed to 300 ml and that the ion-exchange treatment temperature was changed to 15°C, and the resultant product was dried at 150°C for 2 hours to give A13 particles.

Example 14

The treatment steps of Example 1 were repeated except that the concentration of the silver nitrate aqueous solution for ion-exchange was changed to 0.00001 mol/L, and the resultant product was dried at 150°C for 2 hours to give A14 particles.

Example 15

50 Grams of the sample obtained in Example 1 was suspended in a 80°C aqueous solution containing 1.5 g of sodium stearate, the suspension was stirred for 30 minutes to carry out surface treatment, and the thus surface-treated particles were dehydrated, washed with water, dried (105°C x 6 hours) and pulverized to give A15 particles.

Example 16

Part of the sample obtained in Example 1 was subjected to moisture absorption treatment in an NaCl atmosphere at 30°C and a relative humidity of 75 % for 25 hours to give A16 particles.

Example 17

Part of the sample obtained in Example 1 was calcined in a nitrogen atmosphere at 400°C for 1 hour, to give A17 particles. According to a powder X-ray diffraction method, the thus-obtained particles were entirely formed of $[Ag_{0.1}(NH_4)_{0.9}]$ $[Cu_{0.345}Al_{0.77}]_3(C_2O_4)_{0.1}(SO_4)_{1.9}(OH)_6$. They had the form of a sphere each. 10.00 Grams of the A17 particles were placed in 100 ml of deionized water and the mixture was stirred at 20°C for 30 minutes. The mixture was dehydrated, washed with water at 120°C for 16 hours and dried, and it was thereafter found that they had no weight loss and weighed 10.00 g.

Example 18

Part of the sample obtained in Example 1 was calcined in a nitrogen atmosphere at 500°C for 1 hour to give A18 particles. According to a powder X-ray diffraction method, the thus-obtained particles were entirely formed of

$$[Ag_{0.1}(NH_4)_{0.9}] \, [Cu_{0.345}Al_{0.77}]_3(C_2O_4)_{0.1}(SO_4)_{1.9}(OH)_6.$$

They had the form of a sphere each. 10.00 Grams of the A18 particles were placed in 100 ml of deionized water and the mixture was stirred at 20°C for 30 minutes. The mixture was dehydrated, washed with water at 120°C for 16 hours and dried, and it was thereafter found that they had no weight loss and weighed 10.00 g.

Example 19

A 19 particles as potassium type particles (X) were obtained from the following raw materials by the following method.

Raw materials used

| | | |
|---|---|---|
| Potassium sulfate | 2 mol | 348 g |
| Copper sulfate | 0.8 mol | 200 g |
| Oxalic acid ($H_2C_2O_4 \cdot 2H_2O$) | 0.3 mol | 38 g |
| 1.04 mol/L aluminum sulfate aqueous solution | 2.0 mol | 1923 ml |
| 7.5 mol/L KOH aqueous solution | 8.4 mol | 1120 ml |

(Preparation of potassium type particles (x))

348 Grams of potassium sulfate and 200 g of copper sulfate were dissolved in 4.0 L of deionized water. 38 Grams of oxalic acid was dissolved in 1.0 L of deionized water. While the mixture solution of potassium sulfate and copper sulfate was stirred, the oxalic acid aqueous solution and the aluminum sulfate aqueous solution were added thereto to prepare a mixture acid aqueous solution. The mixture acid aqueous solution was fully stirred, and 1,120 ml of the potassium hydroxide aqueous solution was added to the mixture acid aqueous solution over the time period of 25 minutes to prepare a slurry of potassium type particles (x). The slurry was stirred further for 1 hour and then hydrothermally treated with an autoclave at 140°C for 2 hours. After the treatment, a precipitate was recovered by filtering, washed with water and dried to give potassium type particles (x).

(Ion-exchange)

100 Grams was sampled and suspended in 300 ml of a 0.001 mol/L silver nitrate aqueous solution, and the suspension was stirred to carry out ion-exchange treatment of potassium and silver at 25°C for 1 hour while light was blocked. The ion-exchanged sample was recovered by filtering, washed with water, dried (105°C x 6 hours) and pulverized. Through these treatments, the sample was further dried at 200°C for 2 hours, to give A19 particles as potassium type particles (X).

Example 20

A20 particles were obtained in the same manner as in the treatment steps of Example 19 except that the potassium sulfate was replaced with potassium nitrate ($KNO_3$).

Example 21

A21 particles were obtained in the same manner as in the treatment steps of Example 19 except that $K_2SO_4$ was replaced with $KNO_3$ and that the hydrothermal treatment conditions were changed to 160°C x 2 hours.

Example 22

A22 particles were obtained in the same manner as in the treatment steps of Example 19 except that the temperature for the hydrothermal treatment was changed from 140°C to 170°C.

Example 23

A23 particles as sodium type particles (X) were obtained from the following raw materials by the following method.

Raw materials used

| | | |
|---|---|---|
| Potassium sulfate | 2 mol | 284.06 g |
| Copper sulfate | 0.8 mol | 200 g |
| Citric acid ($C_6H_8O_7 \cdot H_2O$) | 0.3 mol | 63 g |
| 1.04 mol/L aluminum sulfate aqueous solution | 2.0 mol | 1923 ml |
| 3.36 mol/L NaOH aqueous solution | 8.2 mol | 2440.5 ml |

(Preparation of sodium type particles (x)

284.06 Grams of sodium sulfate and 200 g of copper sulfate were dissolved in 4.0 L of deionized water. 63 Grams of citric acid was dissolved in 1.0 L of deionized water. While the mixture solution of sodium sulfate and copper sulfate was stirred, the citric acid aqueous solution and the aluminum sulfate aqueous solution were added thereto to prepare a mixture acid aqueous solution. While the mixture acid aqueous solution was stirred, 2,440.5 ml of the sodium hydroxide aqueous solution was added thereto over the time period of 25 minutes, to prepare a slurry of sodium type particles (x). The slurry was further continuously stirred for 10 hours and then hydrothermally treated with an autoclave at 170°C for 2 hours. After the hydrothermal treatment, a precipitate was recovered by filtering, washed with water, dried and pulverized to give sodium type particles (x). Other treatment procedures were carried out in the same manner as in Example 1 and the resultant product was dried at 150°C for 2 hours, to give A23 particles as sodium type particles (X).

Example 24

A24 particles were obtained in the same manner as in the treatment steps of Example 23 except that the time period for adding sodium hydroxide was changed to 40 minutes and that the time period for stirring after the addition of sodium hydroxide was changed to 1 hour, and the thus-obtained particles were further dried at 150°C for 2 hours.

Example 25

A25 particles as sodium type particles (X) were obtained from the following raw materials by the following method.

Raw materials used

| Sodium sulfate | 2 mol | 284.06 g |
| Copper sulfate | 0.8 mol | 200 g |
| Tartaric acid ($C_4H_6O_6$) | 0.3 mol | 45 g |
| 1.04mol/L of aluminum sulfate aqueous solution | 2.0 mol | 1923 ml |
| 3.36mol/L NaOH aqueous solution | 8.2 mol | 2440.5 ml |

284.06 Grams of sodium sulfate and 200 g of copper sulfate were dissolved in 4.0 L of deionized water. 45 Grams of tartaric acid was dissolved in 1.0 L of deionized water. While the potassium sulfate aqueous solution was stirred, the oxalic acid aqueous solution and the mixture solution of aluminum sulfate and copper sulfate were added thereto to prepare a mixture acid aqueous solution. The mixture acid aqueous solution was fully stirred, and 244.05 ml of the sodium hydroxide aqueous solution was added to the mixture acid aqueous solution over the time period of 25 minutes, to prepare a slurry of sodium type particles (x).

The slurry was stirred further for 5 hours and then hydrothermally treated at 170°C for 2 hours. After the hydrothermal treatment, a suspension was filtered to recover particles, and the particles were washed with water, dried and pulverized. Other treatment procedures were carried out in the same manner as in Example 1 and the resultant product was dried at 150°C for 2 hours to prepare A25 particles.

Example 26

A26 particles were obtained in the same manner as in the treatment steps of Example 25 except that the amount of sodium hydroxide was changed to 8 mol (2,381 ml) and that the time period for the addition thereof was also changed to 40 minutes.

Example 27

A27 particles as ammonium type particles (X) were obtained in the same manner as in Example 1 except that a sulfuric acid solution containing 2.5 g of zinc sulfate and 2.5 g of titanium sulfate {$Ti_2(SO_4)_3$} was additionally added to the mixture acid solution (provided that the amount of the aluminum sulfate aqueous solution for the mixture acid solution was decreased to 1,885 ml and the amount of the copper sulfate was decreased to 196 g), that the temperature for the ion-exchange with silver was changed to 80°C and that the treatment time period therefor was changed to 16 hours.

Example 28

A28 particles were obtained in the same manner as in Example 1 except that a sulfuric acid solution containing 125 g of zinc sulfate and 63 g of titanium sulfate was additionally added to the mixture acid solution (provided that the amount of the aluminum sulfate aqueous solution for the mixture acid solution was decreased to 1,442 ml and the amount of the copper sulfate was decreased to 150 g), that the temperature for the ion-exchange with silver was changed to 80°C and that the treatment time period therefor was changed to 30 hours.

Example 29

371 Grams of the A1 particles that were just before ion-exchange with silver (but after hydrothermal treatment) were added to a solution of 74.5 g of ammonium phosphate in 500 ml of water, and the mixture was stirred at 100°C for 1 hour to incorporate $PO_4^{3-}$ into the particles. Treatment procedures thereafter were carried out in the same manner as in Example 1, followed by drying at 150°C for 2 hours, to give aluminum sulfate phosphate hydroxide A29 particles containing silver and organic acid anion.

In addition, this Example was repeated except that the ammonium phosphate was replaced with sodium carbonate, sodium nitrate, sodium silicate or sodium borate, whereby there were obtained aluminum inorganic acid hydroxide particles containing inorganic ion of $CO_3^{2-}$, $NO_3^-$, $SiO_4^{2-}$ or $BO_3^{3-}$, having particle properties similar to those of the A29 particles and containing silver and an organic acid anion.

Example 30

A30 particles were obtained in the same manner as in the treatment steps of Example 25 except that the organic acid was changed from tartaric acid to DL-malic acid. They had the particle form of a sphere each as shown in Fig. 5.

Example 31

A31 particles were obtained in the same manner as in the treatment steps of Example 23 except that the organic acid was changed from citric acid to gallic acid [$C_6H_4(OH)_3COOH$]. They had the particle form of a sphere each as shown in Fig. 6.

Comparative Example 1

The treatment procedures of Example 1 were repeated except that oxalic acid was not used, and the thus-obtained product was further dried at 150°C for 2 hours to give V1 particles.

Comparative Example 2

The treatment procedures of Example 1 were repeated except that the ion-exchange in a silver solution was not carried out, and the thus-obtained product was further dried at 150°C for 2 hours to give V2 particles.

Comparative Example 3

The treatment procedures of Example 19 were repeated except that the ion-exchange in a silver solution was not carried out, to give V3 particles.

Table 1

| Antimicrobial particles \ Examples | Chemical formula, etc., of antimicrobial particles * means a product obtained by drying at 150°C for 2 hours. | Particle Name | Particle form |
|---|---|---|---|
| Example 1 | $[Ag_{0.1}(NH_4)_{0.9}][Cu_{0.345}Al_{0.77}]_3(C_2O_4)_{0.1}(SO_4)_{1.9}(OH)_6 \cdot 0.5H_2O$ | A1 | Spherical |
| Example 2 | $[Ag_{0.1}(NH_4)_{0.9}][Cu_{0.3453}Al_{0.77}]_3(C_2O_4)_{0.1}(SO_4)_{1.9}(OH)_6$ * | A2 | Spherical |
| Example 3 | $[Ag_{0.1}(NH_4)_{0.9}][Cu_{0.3453}Al_{0.77}]_3(C_2O_4)_{0.0001}(SO_4)_{1.9999}(OH)_6$ * | A3 | Spherical |
| Example 4 | $[Ag_{0.1}(NH_4)_{0.9}][Cu_{0.345}Al_{0.77}]_3(C_2O_4)_{0.01}(SO_4)_{1.999}(OH)_6$ * | A4 | Spherical |
| Example 5 | $[Ag_{0.1}(NH_4)_{0.9}][Cu_{0.3453}Al_{0.77}]_3(C_2O_4)_{0.4}(SO_4)_{1.7}(OH)_{5.8}$ * | A5 | Spherical |
| Example 6 | $[Ag_{0.1}(NH_4)_{0.9}][Cu_{0.345}Al_{0.77}]_{2.7}(C_2O_4)_{0.1}(SO_4)_{1.9}(OH)_{5.1}$ * | A6 | Spherical |
| Example 7 | $[Ag_{0.1}(NH_4)_{0.9}][Cu_{0.345}Al_{0.77}]_{3.3}(C_2O_4)_{0.1}(SO_4)_{1.9}(OH)_{6.9}$ * | A7 | Spherical |
| Example 8 | $[Ag_{0.1}(NH_4)_{0.9}][Cu_{0.345}Al_{0.77}]_3(C_2O_4)_{0.1}(SO_4)_{2.4}(OH)_5$ * | A8 | Spherical |
| Example 9 | $[Ag_{0.08}(NH_4)_{0.92}]_{1.2}[Cu_{0.345}Al_{0.77}]_3(C_2O_4)_{0.1}(SO_4)_{1.9}(OH)_{6.02}$ * | A9 | Spherical |
| Example 10 | $[Ag_{0.1}(NH_4)_{0.9}][Cu_{0.345}Al_{0.77}]_3(C_2O_4)_{0.1}(SO_4)_{1.9}(OH)_6$ * | A10 | Spherical |
| Example 11 | $[Ag_{0.12}(NH_4)_{0.88}]_{0.86}[Cu_{0.345}Al_{0.77}]_3(C_2O_4)_{0.1}(SO_4)_{1.9}(OH)_{5.68}$ * | A11 | Spherical |
| Example 12 | $[Ag_{0.3}(NH_4)_{0.7}][Cu_{0.345}Al_{0.77}]_3(C_2O_4)_{0.1}(SO_4)_{1.9}(OH)_6$ * | A12 | Spherical |
| Example 13 | $[Ag_{0.001}(NH_4)_{0.999}][Cu_{0.345}Al_{0.77}]_3(C_2O_4)_{0.1}(SO_4)_{1.9}(OH)_6$ * | A13 | Spherical |
| Example 14 | $[Ag_{0.00001}(NH_4)_{0.99999}][Cu_{0.345}Al_{0.77}]_3(C_2O_4)_{0.1}(SO_4)_{1.9}(OH)_6$ ※ | A14 | Spherical |
| Example 15 | $[Ag_{0.1}(NH_4)_{0.9}][Cu_{0.345}Al_{0.77}]_3(C_2O_4)_{0.1}(SO_4)_{1.9}(OH)_6 \cdot 0.5H_2O$ surface-treatment | A15 | Spherical |
| Example 16 | $[Ag_{0.1}(NH_4)_{0.9}][Cu_{0.345}Al_{0.77}]_3(C_2O_4)_{0.1}(SO_4)_{1.9}(OH)_6 \cdot 2H_2O$ | A16 | Spherical |
| Example 17 | Product obtained by calcining the product of Example 1 at 400°C for 1 hour. | A17 | Spherical |
| Example 18 | Product obtained by calcining the product of Example 1 at 500°C for 1 hour. | A18 | Spherical |
| Example 19 | $[Ag_{0.001}K_{0.999}][Cu_{0.345}Al_{0.77}]_3(C_2O_4)_{0.1}(SO_4)_{1.9}(OH)_6$ * | A19 | Spherical |
| Example 20 | $[Ag_{0.0008}K_{0.9992}]_{1.18}[Cu_{0.345}Al_{0.77}]_3(SO_4)_{2.26}(NO_3)_{0.04}(C_2O_4)_{0.07}(OH)_{5.48}$ * | A20 | Spherical |

Table 1 (continued)

| Antimicrobial particles / Examples | Average secondary particle diameter μm | Sharpness of particle diameter distribution $Dr=D_{75}/D_{25}$ | BET specific surface area $m^2/g$ | Color | Powder X-ray diffraction pattern (Any peak other than peaks of compound of the formula (1)) |
|---|---|---|---|---|---|
| Example 1 | 0.5 | 1.1 | 37 | white | nil |
| Example 2 | 0.5 | 1.1 | 37 | white | nil |
| Example 3 | 0.5 | 1.7 | 37 | white | nil |
| Example 4 | 0.5 | 1.5 | 37 | white | nil |
| Example 5 | 0.5 | 1.01 | 37 | white | nil |
| Example 6 | 0.5 | 1.29 | 37 | white | nil |
| Example 7 | 0.5 | 1.15 | 37 | white | nil |
| Example 8 | 0.5 | 1.15 | 37 | white | nil |
| Example 9 | 0.2 | 1.1 | 200 | white | nil |
| Example 10 | 0.35 | 1.1 | 75 | white | nil |
| Example 11 | 1 | 1.1 | 9 | white | nil |
| Example 12 | 0.5 | 1.1 | 37 | white | nil |
| Example 13 | 0.5 | 1.1 | 37 | white | nil |
| Example 14 | 0.5 | 1.1 | 37 | white | nil |
| Example 15 | 0.5 | 1.1 | 37 | white | nil |
| Example 16 | 0.5 | 1.1 | 37 | white | nil |
| Example 17 | 0.5 | 1.1 | 37 | white | nil |
| Example 18 | 0.5 | 1.1 | 37 | white | nil |
| Example 19 | 0.5 | 1.1 | 37 | white | nil |
| Example 20 | 0.5 | 1.1 | 37 | white | nil |

EP 2 123 160 A1

Table 2

| Antimicrobial particles / Examples | Chemical formula, etc., of antimicrobial particles * means a product obtained by drying at 150°C for 2 hours. | Particle Name | Particle form |
|---|---|---|---|
| Example 21 | $[Ag_{0.0008}K_{0.9992}]_{1.18}[Cu_{0.345}Al_{0.77}]_3(SO_4)_{2.26}(NO_3)_{0.04}(C_2O_4)_{0.07}(OH)_{5.48}$ * | A21 | Spherical |
| Example 22 | $[Ag_{0.001}K_{0.999}][Cu_{0.345}Al_{0.77}]_3(C_2O_4)_{0.1}(SO_4)_{1.9}(OH)_6$ * | A22 | Spherical |
| Example 23 | $[Ag_{0.1}Na_{0.9}][Cu_{0.345}Al_{0.77}]_3Al_3(C_6H_5O_7)_{0.067}(SO_4)_{1.9}(OH)_6$ * | A23 | Spherical |
| Example 24 | $[Ag_{0.1}Na_{0.9}][Cu_{0.345}Al_{0.77}]_3(C_6H_5O_7)_{0.067}(SO_4)_{1.9}(OH)_6$ * | A24 | Spherical |
| Example 25 | $[Ag_{0.1}Na_{0.9}][Cu_{0.345}Al_{0.77}]_3(C_4H_4O_6)_{0.1}(SO_4)_{1.9}(OH)_6$ * | A25 | Spherical |
| Example 26 | $[Ag_{0.1}Na_{0.9}][Cu_{0.345}Al_{0.77}]_3(C_4H_4O_6)_{0.1}(SO_4)_{1.9}(OH)_6$ * | A26 | Spherical |
| Example 27 | $[Ag_{0.1}(NH_4)_{0.9}][Cu_{0.345}Al_{0.764}Zn_{0.03}Ti_{0.03}]_{2.94}(C_2O_4)_{0.1}(SO_4)_{1.9}(OH)_6 \cdot 0.5H_2O$ | A27 | Spherical |
| Example 28 | $[Ag_{0.1}(NH_4)_{0.9}][Cu_{0.21}Al_{0.54}Zn_{0.17}Ti_{0.08}]_3(C_2O_4)_{0.1}(SO_4)_{1.9}(OH)_6 \cdot 0.5H_2O$ | A28 | Spherical |
| Example 29 | $[Ag_{0.1}(NH_4)_{0.9}][Cu_{0.345}Al_{0.77}]_3(C_2O_4)_{0.1}(SO_4)_{1.15}(PO_4)_{0.5}(OH)_6$ * | A29 | Spherical |
| Example 30 | $[Ag_{0.1}Na_{0.9}][Cu_{0.345}Al_{0.77}]_3(SO_4)_{1.9}(C_4H_4O_5)_{0.1}(OH)_6$ * | A30 | Spherical |
| Example 31 | $[Ag_{0.1}Na_{0.9}][Cu_{0.345}Al_{0.77}]_3Al_3(SO_4)_{1.9}[C_6H_2(OH)_3COO]_{0.067}(OH)_6$ * | A31 | Spherical |
| Comparative Example 1 | $[Ag_{0.1}(NH_4)_{0.9}][Cu_{0.345}Al_{0.77}]_3(SO_4)_2(OH)_6$ * | V1 | Aggregate mass |
| Comparative Example 2 | $NH_4[Cu_{0.345}Al_{0.77}]_3(C_2O_4)_{0.1}(SO_4)_{1.9}(OH)_6$ * | V2 | Spherical |
| Comparative Example.3 | $K[Cu_{0.345}Al_{0.77}]_3(C_2O_4)_{0.1}(SO_4)_{1.9}(OH)_6$ * | V3 | Spherical |
| Comparative Example 4 | $[Ag_{0.1}Na_{0.9}]Al_3(SO_4)_{1.9}(C_4H_4O_5)_{0.1}(OH)_6$ * | V4 | Spherical |

Table 2 (continued)

| Antimicrobial particles / Examples | Average secondary particle diameter μm | Sharpness of particle diameter distribution Dr=$D_{75}/D_{25}$ | BET specific surface area $m^2/g$ | Color | Powder X-ray diffraction pattern (Any peak other than peaks of compound of the formula (1)) |
|---|---|---|---|---|---|
| Example 21 | 1.2 | 1.15 | 37 | white | nil |
| Example 22 | 1.6 | 1.2 | 5 | white | nil |
| Example 23 | 0.2 | 1.1 | 200 | white | nil |
| Example 24 | 1 | 1.1 | 9 | white | nil |
| Example 25 | 0.2 | 1.1 | 200 | white | nil |
| Example 26 | 1 | 1.1 | 9 | white | nil |
| Example 27 | 0.5 | 1.15 | 38 | white | nil |
| Example 28 | 0.5 | 1.15 | 38 | white | nil |
| Example 29 | 0.6 | 1.15 | 30 | white | nil |
| Example 30 | 0.4 | 1.07 | 115 | white | nil |
| Example 31 | 2.5 | 1.14 | 35 | white | nil |
| Comparative Example 1 | 5 | 6 | 30 | white | nil |
| Comparative Example 2 | 0.5 | 1.1 | 37 | white | nil |
| Comparative Example 3 | 0.5 | 1.1 | 37 | white | nil |
| Comparative Example 4 | 0.4 | 1.07 | 115 | white | nil |

Examples 32 to 35 and Comparative Examples 5 and 6

Examples 32 to 35 (and Comparative Examples 5 and 6), a method for producing particles having the form of a disk (particles having the form of "go" stone) in Table 3 and properties thereof will be described below.

Example 32

B1 particles were obtained from the following raw materials by the following method.

Raw materials used

| | | |
|---|---|---|
| Sodium sulfate | 2 mol | 284.06 g |
| Copper sulfate | 0.8 mol | 200 g |
| Oxalic acid ($H_2C_2O_4 \cdot 2H_2O$) | 0.3 mol | 38 g |
| 1.04 mol/L aluminum sulfate aqueous solution | 2.0 mol | 1923 ml |
| 3.36 mol/L NaOH aqueous solution | 8.2 mol | 2440.5 ml |

(Preparation of sodium type particles (x))

284.06 Grams of sodium sulfate and 200 g of copper sulfate were dissolved in 4.0 L of deionized water. 38 Grams of oxalic acid was dissolved in 1.0 L of deionized water. While the mixture solution of sodium sulfate and copper sulfate was stirred, the oxalic acid aqueous solution and the aluminum sulfate aqueous solution were added thereto to prepare a mixture acid aqueous solution. The mixture acid aqueous solution was fully stirred, and 2,440.5 ml of the sodium hydroxide aqueous solution was added to the mixture acid aqueous solution over the time period of 20 minutes to prepare a slurry of sodium type particles (x). The slurry was stirred further for 5 hours and then hydrothermally treated with an autoclave at 170°C for 2 hours. After the treatment, a precipitate was recovered by filtering, washed with water and dried to give sodium type particles (x).

(Ion-exchange)

100 Grams was sampled from the above particles and suspended in 600 ml of a 0.025 mol/L silver sulfate aqueous solution, and the suspension was stirred and subjected to ion-exchange treatment of sodium and silver at 25°C for 5 hours. To the ion-exchanged sample was added 0.02 g of a polymer flocculating agent (trade name: SUMIFLOC FN-20/Sumitomo Chemical Co., Ltd.), and the mixture was stirred for 10 minutes and then filtered, washed with water, dried (105°C x 6 hours) and pulverized. After these treatment procedures, the resultant product was further dried at 200°C for 2 hours to give B1-1 particles.

Example 33

2.6 Grams of zinc sulfate heptahydrate (Wako-Purechemical Ind. Co., Ltd. reagent 1st grade) and 2.2 g of ammonium sulfate (Wako-Purechemical Ind. Co., Ltd. reagent 1st grade) were placed in 1,000 ml of deionized water at 80°C, to prepare a mixture liquid. To the mixture liquid was added 95 g of B1-1 particles, and the mixture was stirred for 6 hours, followed by dehydration, washing with water and drying, whereby there were prepared B1-2 particles treated with zinc and ammonium. The above particles had an Zn content of 0.1 % and an $NH_4$ content of 0.4 % and had a BET specific surface area of 60 m$^2$/g, and other particle properties thereof were the same as those of B1-1 particles.
Then, A20 particles, C1 particles, D1 particles, E1 particles, F1 particles, G1 particles and H1 particles were treated in the same manner as above, and treated products were obtained.
The thus-treated products nearly similarly had a Zn content of 0.1 % and an $NH_4$ content of 0.4 % each.
All the treated products had BET specific surface areas that were approximately 6 times the BET specific surface areas that they had had before the treatment. The average secondary particle diameters, particle diameter uniformity, particle forms and other particle properties of the treated products were nearly the same as those that they had before the treatment.

Example 34

B2 particles were obtained in the same manner as in the treatment steps of Example 32 except that the sodium sulfate used was replaced with 4.0 L of a reaction mother liquor containing 0.5 mol/L sodium sulfate, that the time period for the addition of sodium hydroxide was changed to 40 minutes and that the stirring time period after the addition was changed to 1 hour.

Example 35

B3 particles were obtained in the same manner as in the treatment steps of Example 32 except that the concentration of a silver sulfate aqueous solution was changed to 0.00025 mol/L.

Comparative Example 5

W1 particles were obtained in the same manner as in the treatment steps of Example 32 except that the treatment for the ion-exchange with silver ion was not carried out.

Comparative Example 6

W2 particles were obtained in the same manner as in the treatment steps of Example 32 except that no oxalic acid was used.

Table 3

| Antimicrobial particles / Examples | Chemical formula, etc., of antimicrobial particles * means a product obtained by drying at 150°C for 2 hours. | Particle name | Particle form |
|---|---|---|---|
| Example 32 | $[Ag_{0.1}Na_{0.9}]$ $[Cu_{0.345}Al_{0.77}]_3(C_2O_4)_{0.1}(SO_4)_{1.9}(OH)_6$ * | B1-1 | Disk |
| Example 34 | $[Ag_{0.1}Na_{0.9}]$ $[Cu_{0.345}Al_{0.77}]_3(C_2O_4)_{0.1}(SO_4)_{1.9}(OH)_6$ * | B2 | Disk |
| Example 35 | $[Ag_{0.001}Na_{0.999}]$ $[Cu_{0.345}Al_{0.77}]_3(C_2O_4)_{0.1}(SO_4)_{1.9}(OH)_6$ * | B3 | Disk |
| Comparative Example 5 | $[Ag_{0.1}Na_{0.9}]Al_3(C_2O_4)_{0.1}(SO_4)_{1.9}(OH)_6$ * | W1 | Disk |
| Comparative Example 6 | $[Ag_{0.1}Na_{0.9}]$ $[Cu_{0.345}Al_{0.77}]_3(SO_4)_2(OH)_6$ * | W2 | Aggregate |

Table 3 (continued)

| Antimicrobial particles / Examples | Average secondary particle diameter μm | Sharpness of particle diameter distribution $Dr= D_{75}/D_{25}$ | BET specific surface area $m^2/g$ | Color | Powder X-ray diffraction pattern (Any peak other than peaks of compound of the formula (1)) |
|---|---|---|---|---|---|
| Example 32 | 1.3 | 1.1 | 10 | White | nil |
| Example 34 | 7.0 | 1.1 | 0.6 | White | nil |
| Example 35 | 1.3 | 1.1 | 10 | White | nil |
| Comparative Example 5 | 0.2 | 1.1 | 220 | White | nil |
| Comparative Example 6 | 2 | 6.5 | 180 | White | nil |

Examples 36 to 38 and Comparative Examples 7 and 8

Examples 36 to 38 (Comparative Examples 7 and 8), a method for the preparation of particles having the form of one pair (form of "hamburger") in Table 4 and properties thereof will be described below.

Example 36

C1 particles were obtained in the same manner as in the treatment steps of Example 32 except that the temperature for the autoclave treatment was changed to 180°C and that the time period for the autoclave treatment was changed to 10 hours.

Example 37

C2 particles were obtained in the same manner as in the treatment steps of Examples 32 except that the temperature for the autoclave treatment was changed to 180°C, that the time period for the autoclave treatment was changed to 10 hours, that 4.0 L of a reaction mother liquor containing 0.5 mol/L of sodium sulfate was used for sodium sulfate and that the time period for the addition of sodium hydroxide was changed to 40 minutes.

Example 38

C3 particles were obtained in the same manner as in the treatment steps of Example 32 except that the concentration of a silver sulfate solution was changed to 0.00025 mol/L, that the temperature for the autoclave treatment was changed to 180°C and that the time period for the autoclave treatment was changed to 10 hours.

Comparative Example 7

X1 particles were obtained in the same manner as in the treatment steps of Example 36 except that the treatment for the ion-exchange with silver ion was not carried out.

Comparative Example 8

X2 particles were obtained in the same manner as in the treatment steps of Example 36 except that no oxalic acid was used.

EP 2 123 160 A1

Table 4

| Antimicrobial particles / Examples | Chemical formula, etc., of antimicrobial particles * means a product obtained by drying at 150°C for 2 hours. | Particle name | Particle form |
|---|---|---|---|
| Example 36 | $[Ag_{0.1}Na_{0.9}]$ $[Cu_{0.345}Al_{0.77}]_3(C_2O_4)_{0.1}(SO_4)_{1.9}(OH)_6$  * | C1 | One pair |
| Example 37 | $[Ag_{0.1}Na_{0.9}]$ $[Cu_{0.345}Al_{0.77}]_3(C_2O_4)_{0.1}(SO_4)_{1.9}(OH)_6$  * | C2 | One pair |
| Example 38 | $[Ag_{0.001}Na_{0.999}]$ $[Cu_{0.345}Al_{0.77}]_3(C_2O_4)_{0.1}(SO_4)_{1.9}(OH)_6$  * | C3 | One pair |
| Comparative Example 7 | $[Ag_{0.1}Na_{0.9}]Al_3(C_2O_4)_{0.1}(SO_4)_{1.9}(OH)_6$  * | X1 | One pair |
| Comparative Example 8 | $[Ag_{0.1}Na_{0.9}]$ $[Cu_{0.345}Al_{0.77}]_3(SO_4)_2(OH)_6$  * | X2 | Aggregate |

Table 4 (continued)

| Antimicrobial particles / Examples | Average secondary particle diameter µm | Sharpness of particle diameter distribution $Dr= D_{75}/D_{25}$ | BET specific surface area $m^2/g$ | Color | Powder X-ray diffraction pattern (Any peak other than peaks of compound of the formula (1)) |
|---|---|---|---|---|---|
| Example 36 | 0.6 | 1.1 | 7 | white | nil |
| Example 37 | 4.0 | 1.1 | 5 | white | nil |
| Example 38 | 0.6 | 1.1 | 7 | white | nil |
| Comparative Example 7 | 0.3 | 1.1 | 10 | white | nil |
| Comparative Example 8 | 3 | 6 | 8 | white | nil |

35

Examples 39 to 41 and Comparative Examples 9 and 10

Examples 39 to 41 (Comparative Examples 9 and 10), a method for the preparation of particles having the form of rice grains in Table 5 and properties thereof will be described below.

Example 39

The treatment steps of Example 23 were repeated except that citric acid was replaced with tartaric acid, and the resultant particles were further dried at 150°C for 2 hours to give D1 particles.

Example 40

The treatment steps of Example 23 were repeated except that citric acid was replaced with tartaric acid and that the time period for the addition of the NaOH aqueous solution was changed to 35 minutes, and the resultant particles were further dried at 150°C for 2 hours to give D2 particles.

Example 41

The treatment steps of Example 23 were repeated except that citric acid was replaced with tartaric acid and that concentration of silver ion was changed to 0.00025 mol/L, and the resultant particles were further dried at 150°C for 2 hours to give D3 particles.

Comparative Example 9

Y1 particles were obtained in the same manner as in the treatment steps of Example 39 except that the ion-exchange with silver ion was not carried out.

Comparative Example 10

The treatments steps of Example 39 were repeated except that no tartaric acid was used, and the resultant product was further dried at 200°C for 2 hours to give Y2 particles.

Table 5

| Antimicrobial particles / Examples | Chemical formula, etc., of antimicrobial particles (* means a product obtained by drying at 150°C for 2 hours.) | Particle name | Particle form |
|---|---|---|---|
| Example 39 | $[Ag_{0.1}Na_{0.9}][Cu_{0.345}Al_{0.77}]_3(C_4H_4O_6)_{0.1}(SO_4)_{1.9}(OH)_6$ * | D1 | Rice grain |
| Example 40 | $[Ag_{0.1}Na_{0.9}][Cu_{0.345}Al_{0.77}]_3(C_4H_4O_6)_{0.1}(SO_4)_{1.9}(OH)_6$ * | D2 | Rice grain |
| Example 41 | $[Ag_{0.001}Na_{0.999}][Cu_{0.345}Al_{0.77}]_3(C_4H_4O_6)_{0.1}(SO_4)_{1.9}(OH)_6$ * | D3 | Rice grain |
| Comparative Example 9 | $[Ag_{0.1}Na_{0.9}]Al_3(C_4H_4O_6)_{0.1}(SO_4)_{1.9}(OH)_6$ * | Y1 | Rice grain |
| Comparative Example 10 | $[Ag_{0.1}Na_{0.9}][Cu_{0.345}Al_{0.77}]_3(SO_4)_2(OH)_6$ * | Y2 | Aggregate |

Table 5 (continued)

| Antimicrobial particles / Examples | Average secondary particle diameter μm | Sharpness of particle diameter distribution $Dr=D_{75}/D_{25}$ | BET specific surface area $m^2/g$ | Color | Powder X-ray diffraction pattern (Any peak other than peaks of compound of the formula (1)) |
|---|---|---|---|---|---|
| Example 39 | 1.4 | 1.1 | 70 | White | nil |
| Example 40 | 4 | 1.1 | 49.2 | White | nil |
| Example 41 | 1.4 | 1.1 | 70 | White | nil |
| Comparative Example 9 | 0.6 | 1.1 | 100 | White | nil |
| Comparative Example 10 | 6 | 7 | 80 | White | nil |

Examples 42 to 45 and Comparative Examples 11 to 13

Examples 42 to 45 (Comparative Examples 11 to 13), a method for the preparation of particles having the form of a rectangular parallelepiped in Table 6 and properties thereof will be described below.

Example 42

E1 particles were obtained from the following raw materials by the following method.

Raw materials used

| | | |
|---|---|---|
| 1.04 mol/L aluminum sulfate | 2.0 mol | 1923 ml |
| Copper sulfate | 0.8 mol | 200 g |
| Amorphous aluminum hydroxide | 2.0 mol | 156.02 g |
| Oxalic acid ($H_2C_2O_4 \cdot 2H_2O$) | 0.25 mol | 31.52 g |

(Preparation of particles (x))

While a mixture solution containing aluminum sulfate and copper sulfate was stirred, oxalic acid was added, and further, amorphous aluminum hydroxide (trade name: S-100, supplied by Kyowa Chemical Industry Co., Ltd.) was added with stirring, to give a slurry of hydrogen type particles (x). Deionized water was added to the slurry to dilute it so that the amount of the slurry was 7.0 L. Further, the slurry was stirred at room temperature for 15 hours and then hydrothermally treated in an autoclave at 170°C for 5 hours. The thus-treated solution was filtered to recover a solid, and the solid was washed with water, dried and pulverized to give a powder of particles (x).

Other treatment steps were carried out in the same manner as in Example 1, and the resultant product was dried at 150°C for 2 hours to give E1 particles.

Example 43

E2 particles were obtained in the same manner as in the treatment steps of Example 42 except that the time period for the stirring before the autoclave treatment was changed to 30 minutes, the temperature for the autoclave treatment was changed to 150°C and that the time period for the autoclave treatment was changed to 2 hours.

Example 44

E3 particles were obtained in the same manner as in the treatment steps of Example 42 except that the concentration of silver ion for the exchange was changed to 0.00025 mol/L.

Example 45

E4 particles were obtained in the same manner as in the treatment steps of Example 42 except that the time period for the stirring before the autoclave treatment was changed to 2 hours.

Comparative Example 11

Z1 particles were obtained in the same manner as in the treatment steps of Example 42 except that the treatment for the ion-exchange with silver was not carried out.

Comparative Example 12

Z2 particles were obtained in the same manner as in the treatment steps of Example 42 except that no oxalic acid was used.

Comparative Example 13

R1 particles of Comparative Example 13 were of silver-supporting zirconium phosphate which had an average secondary particle diameter of 1.0 $\mu$m, a Dr of 4.5, a BET specific surface area of 4 $m^2/g$ and a silver content of 3 %. Table 6 shows particle properties of the R1 particles.

Table 6

| Antimicrobial particles / Examples | Chemical formula, etc., of antimicrobial particles * means a product obtained by drying at 150°C for 2 hours. | Particle name | Particle form |
|---|---|---|---|
| Example 42 | $[Ag_{0.1}(H_3O)_{0.9}][Cu_{0.345}Al_{0.77}]_3(C_2O_4)_{0.1}(SO_4)_{1.9}(OH)_6$ * | E1 | Rectangular parallelepiped |
| Example 43 | $[Ag_{0.1}(H_3O)_{0.9}][Cu_{0.345}Al_{0.77}]_3(C_2O_4)_{0.1}(SO_4)_{1.9}(OH)_6$ * | E2 | Rectangular parallelepiped |
| Example 44 | $[Ag_{0.001}(H_3O)_{0.999}][Cu_{0.345}Al_{0.77}]_3(C_2O_4)_{0.1}(SO_4)_{1.9}(OH)_6$ * | E3 | Rectangular parallelepiped |
| Example 45 | $[Ag_{0.1}(H_3O)_{0.9}][Cu_{0.345}Al_{0.77}]_3(C_2O_4)_{0.1}(SO_4)_{1.9}(OH)_6$ * | E4 | Rectangular parallelepiped |
| Comparative Example 11 | $[Ag_{0.1}(H_3O)_{0.9}]Al_3(C_2O_4)_{0.1}(SO_4)_{1.9}(OH)_6$ * | Z1 | Rectangular parallelepiped |
| Comparative Example 12 | $[Ag_{0.1}(H_3O)_{0.9}][Cu_{0.345}Al_{0.77}]_3(SO_4)_2(OH))_6$ * | Z2 | Aggregate mass |
| Comparative Example 13 | Silver-supporting zirconium phosphate (Ag content 3 %) * | R1 | Rectangular parallelepiped |

Table 6 (continued)

| Antimicrobial particles / Examples | Average secondary particle diameter μm | Sharpness of particle diameter distribution Dr= $D_{75}/D_{25}$ | BET specific surface area $m^2/g$ | Color | Powder X-ray diffraction pattern (Any peak other than peaks of compound of the formula (1)) |
|---|---|---|---|---|---|
| Example 42 | 0.8 | 1.1 | 12 | White | nil |
| Example 43 | 3.0 | 1.6 | 0.6 | White | nil |
| Example 44 | 0.8 | 1.1 | 12 | White | nil |
| Example 45 | 1.0 | 1.4 | 4 | White | nil |
| Comparative Example 11 | 0.5 | 1.1 | 20 | White | nil |
| Comparative Example 12 | 5 | 6.4 | 16 | White | nil |
| Comparative Example 13 | 1.0 | 1.4 | 4 | White | - |

Examples 46 to 48

Examples 46 to 48 and methods for preparing particles having the form of a hexagonal plate, particles having the form of an octahedron and particles having the form of a column (barrel) in Table 7 and properties thereof will be described below.

Example 46

2 Mol of aluminum sulfate, 200 g (0.8 mol) of copper sulfate and 2 mol of sodium sulfate were dissolved in 6,000 ml of pure water, and 31.52 g (0.25 mol) of oxalic acid was placed therein. While the mixture was stirred, 1,800 ml of an aqueous solution containing 8.8 mol (352 g) of sodium hydroxide was added, and the mixture was stirred at room temperature for 30 minutes and then hydrothermally treated at 180°C for 20 hours. Then, the reaction mixture was cooled to room temperature, and a solid was recovered by filtering, washed with water and dried at 95°C for 15 hours to give particles (x).

Treatment steps thereafter were carried out in the same manner as in Example 1, and further the particles (x) were dried at 150°C for 2 hours to give F1 particles. The thus-obtained particles had the form of a hexagonal plate each as shown in Fig. 11.

Example 47

G1 particles were obtained in the same manner as in the treatment steps of Example 23 except that the organic acid was changed from citric acid to L-lactic acid [$CH_3CH(OH)COOH$]. The thus-obtained particles had the form of an octahedron each as shown in Fig. 12.

Example 48

H1 particles were obtained in the same manner as in the treatment steps of Example 23 except that the organic acid was changed from citric acid to DL-glyceric acid [$HOCH_2CH(OH)COOH$]. The thus-obtained particles had the form of a column (barrel) each as shown in Fig. 13.

Table 7

| Antimicrobial particles / Examples | Chemical formula, etc., of antimicrobial particles (* means a product obtained by drying at 150°C for 2 hours.) | Particle name | Particle form |
|---|---|---|---|
| Example 46 | $[Ag_{0.1}Na_{0.9}][Cu_{0.345}Al_{0.77}]_3Al_3(SO_4)_{1.9}(C_2O_4)_{0.1}(OH)_6$ * | F1 | Hexagonal plate |
| Example 47 | $[Ag_{0.1}Na_{0.9}][Cu_{0.345}Al_{0.77}]_3Al_3(SO_4)_{1.9}[CH_3CH(OH)COO]_{0.067}(OH)_6$ * | G1 | Octahedron |
| Example 48 | $[Ag_{0.1}Na_{0.9}][Cu_{0.345}Al_{0.77}]_3Al_3(SO_4)_{1.9}[HOCH_2CH(OH)COO]_{0.067}(OH)_6$ * | H1 | Column (barrel) |

Table 7 (continued)

| Antimicrobial particles / Examples | Average secondary particle diameter μm | Sharpness of particle diameter distribution $Dr= D_{75}/D_{25}$ | BET specific surface area $m^2/g$ | Color | Powder X-ray diffraction pattern (Any peak other than peaks of compound of the formula (1)) |
|---|---|---|---|---|---|
| Example 46 | 0.8 | 1.15 | 10.5 | White | nil |
| Example 47 | 0.6 | 1.06 | 30 | White | nil |
| Example 48 | 3.1 | 1.18 | 9 | White | nil |

The A1 to A31, B1 to B3, C1 to C3, D1 to D3, E1 to E4, F1, G1 and H1 particles of the above Examples were synthesized from high-purity raw materials (which had been purified so that the content of each of Pb, Cd, As and Ba as impurities was 0.1 ppm or less, that the content of Fe as an impurity was 10 ppm or less and that the content of each of Mn, Cu, Cr and Ni as impurities was 1 ppm or less) by means of apparatuses constituted of anti-corrosive materials.

With regard to the contents of impurities, therefore, differing from natural alunite, the content of each of Pb, Cd, As and Ba was 0.1 ppm or less, the content of Fe was 10 ppm or less, the content of each of Mn, Cu, Cr and Ni was 1 ppm or less) and the content of Cl was 100 ppm or less.

The content of each of the impurities was measured by an atomic absorption method, an ICP-AES method (Inductively Coupled Plasma-Atomic Emission Spectroscopy) or a fluorescent X-ray method.

Example 49

A method for preparing an antimicrobial composition that is a dispersion of the antimicrobial agent of this invention in water will be specifically explained with reference to Example hereinafter.

Preparation of antimicrobial compositions;

0.048 Gram of particles shown in Table 1 were uniformly mixed with, and dispersed in, 15 mL of deionized water to prepare an antimicrobial composition. Each of the thus-prepared antimicrobial compositions was measured for antimicrobial activity (immediately after their preparations), coloring resistance (color) and dispersibility (sedimentation velocity) according the already described methods. Further, 0.048 g of Y-A-1 particles shown in Table 14 to be described later were uniformly mixed with, and dispersed in, 15 mL of tap water, and the mixture was heated to 90°C and measured for their capability of maintaining antimicrobial activities after contact to tap water according the already described method.

Antimicrobial compositions were also prepared from the particles shown in Tables 2 to 7 and subjected to the above tests. Tables 8 to 10 show the results.

Comparative Examples 14, 19, 21, 23 and 25 used, as antimicrobial particles, V1, W2, X2, Y2 and Z2 particles that were particles containing no organic acid and that had a large width of Dr (particle size distribution width). Comparative Example 26 used, as antimicrobial particles, R1 particles that were of silver-supporting zirconium phosphate. In the tests of Comparative Example 27, no antimicrobial agent was added. Comparative Examples 15 and 16 used particles containing no silver. Comparative Examples 17, 18, 20, 22 and 24 used particles that contained silver but did not contain copper. Table 11 shows the results.

Table 8

| Composition, antimicrobial activity, etc. Examples | Name of antimicrobial particles | Colon bacillus minimum inhibitory concentration (ppm) | | Staphylococcus aureus minimum inhibitory concentration (ppm) | |
|---|---|---|---|---|---|
| | | Immediately after drying (before contact with tap water) | After contact with tap water at 90°C | Immediately after drying (before contact with tap water) | After contact with tap water at 90°C |
| Example 49 | A1 | 50 | 50 | 50 | 50 |
| | A2 | 50 | 50 | 50 | 50 |
| | A3 | 50 | 50 | 50 | 50 |
| | A4 | 50 | 50 | 50 | 50 |
| | A5 | 50 | 50 | 50 | 50 |
| | A6 | 50 | 50 | 50 | 50 |
| | A7 | 50 | 50 | 50 | 50 |
| | A8 | 50 | 50 | 50 | 50 |
| | A9 | 70 | 70 | 70 | 70 |
| | A10 | 50 | 50 | 50 | 50 |
| | A11 | 50 | 50 | 50 | 50 |
| | A12 | 50> | 50> | 50> | 50> |
| | A13 | 100 | 100 | 100 | 100 |
| | A14 | 300 | 300 | 300 | 300 |
| | A15 | 50 | 50 | 50 | 50 |
| | A16 | 50 | 50 | 50 | 50 |
| | A17 | 50 | 50 | 50 | 50 |

Table 8(continued)

| Composition, antimicrobial activity, etc. / Examples | Name of antimicrobial particles | Color | Sedimentation velocity (mm/hr) |
|---|---|---|---|
| Example 49 | A1 | Colorless (white) | 0.066 |
| | A2 | Colorless (white) | 0.066 |
| | A3 | Colorless (white) | 0.066 |
| | A4 | Colorless (white) | 0.066 |
| | A5 | Colorless (white) | 0.066 |
| | A6 | Colorless (white) | 0.066 |
| | A7 | Colorless (white) | 0.066 |
| | A8 | Colorless (white) | 0.066 |
| | A9 | Colorless (white) | 0.066 |
| | A10 | Colorless (white) | 0.066 |
| | A11 | Colorless (white) | 0.094 |
| | A12 | Colorless (white) | 0.066 |
| | A13 | Colorless (white) | 0.066 |
| | A14 | Colorless (white) | 0.066 |
| | A15 | Colorless (white) | 0.066 |
| | A16 | Colorless (white) | 0.066 |
| | A17 | Colorless (white) | 0.066 |

Table 9

| Composition, antimicrobial activity, etc. / Examples | Name of anti-microbial particles | Colon bacillus minimum inhibitory concentration (ppm) | | Staphylococcus aureus minimum inhibitory concentration (ppm) | |
|---|---|---|---|---|---|
| | | Immediately after drying (before contact with tap water) | After contact with tap water at 90°C | Immediately after drying (before contact with tap water) | After contact with tap water at 90°C |
| Example 49 | A18 | 50 | 50 | 50 | 50 |
| | A19 | 100 | 100 | 100 | 100 |
| | A20 | 200 | 200 | 200 | 200 |
| | A21 | 200 | 200 | 200 | 200 |
| | A22 | 100 | 100 | 100 | 100 |
| | A23 | 50 | 50 | 50 | 50 |
| | A24 | 50 | 50 | 50 | 50 |
| | A25 | 50 | 50 | 50 | 50 |
| | A26 | 50 | 50 | 50 | 50 |
| | A27 | 50 | 50 | 50 | 50 |
| | A28 | 50 | 50 | 50 | 50 |
| | A29 | 50 | 50 | 50 | 50 |
| | A30 | 50 | 50 | 50 | 50 |
| | A31 | 50 | 50 | 50 | 50 |

Table 9 (continued)

| Composition, antimicrobial activity, etc. / Examples | Name of antimicrobial particles | Color | Sedimentation velocity (mm/hr) |
|---|---|---|---|
| Example 49 | A18 | Colorless (white) | 0.17 |
| | A19 | Colorless (white) | 0.13 |
| | A20 | Colorless (white) | 0.094 |
| | A21 | Colorless (white) | 0.12 |
| | A22 | Colorless (white) | 0.13 |
| | A23 | Colorless (white) | 0.066 |
| | A24 | Colorless (white) | 0.094 |
| | A25 | Colorless (white) | 0.094 |
| | A26 | Colorless (white) | 0.13 |
| | A27 | Colorless (white) | 0.066 |
| | A28 | Colorless (white) | 0.066 |
| | A29 | Colorless (white) | 0.066 |
| | A30 | Colorless (white) | 0.066 |
| | A31 | Colorless (white) | 0.17 |

Table 10

| Composition, antimicrobial activity, etc. / Examples | Name of antimicrobial particles | Colon bacillus minimum inhibitory concentration (ppm) | | Staphylococcus aureus minimum inhibitory concentration (ppm) | |
|---|---|---|---|---|---|
| | | Immediately after drying (before contact with tap water) | After contact with tap water at 90°C | Immediately after drying (before contact with tap water) | After contact with tap water at 90°C |
| Example 49 | B1-1 | 50 | 50 | 50 | 50 |
| | B1-2 | 50 | 50 | 50 | 50 |
| | B2 | 50 | 50 | 50 | 50 |
| | B3 | 100 | 100 | 100 | 100 |
| | C1 | 50 | 50 | 50 | 50 |
| | C2 | 50 | 50 | 50 | 50 |
| | C3 | 100 | 50 | 50 | 50 |
| | D1 | 50 | 50 | 50 | 50 |
| | D2 | 50 | 50 | 50 | 50 |
| | D3 | 100 | 100 | 100 | 100 |
| | E1 | 50 | 50 | 50 | 50 |
| | E2 | 50 | 50 | 50 | 50 |
| | E3 | 100 | 100 | 100 | 100 |
| | E4 | 300 | 300 | 300 | 300 |
| | F1 | 50 | 50 | 50 | 50 |
| | G1 | 50 | 50 | 50 | 50 |
| | H1 | 50 | 50 | 50 | 50 |

Table 10 (continued)

| Composition, antimicrobial activity, etc. / Examples | Name of antimicrobial particles | Color | Sedimentation velocity (mm/hr) |
|---|---|---|---|
| Example 49 | B1-1 | Colorless (white) | 0.17 |
| | B1-2 | Colorless (white) | 0.17 |
| | B2 | Colorless (white) | 1.2 |
| | B3 | Colorless (white) | 0.17 |
| | C1 | Colorless (white) | 0.13 |
| | C2 | Colorless (white) | 1.03 |
| | C3 | Colorless (white) | 0.099 |
| | D1 | Colorless (white) | 0.12 |
| | D2 | Colorless (white) | 0.13 |
| | D3 | Colorless (white) | 0.12 |
| | E1 | Colorless (white) | 0.17 |
| | E2 | Colorless (white) | 0.13 |
| | E3 | Colorless (white) | 0.13 |
| | E4 | Colorless (white) | 0.13 |
| | F1 | Colorless (white) | 0.099 |
| | G1 | Colorless (white) | 0.066 |
| | H1 | Colorless (white) | 0.82 |

Table 11

| Composition, antimicrobial activity, etc. Examples | Name of antimicrobial particles | Colon bacillus minimum inhibitory concentration (ppm) | | Staphylococcus aureus minimum inhibitory concentration (ppm) | |
|---|---|---|---|---|---|
| | | Immediately after drying (before contact with tap water) | After contact with tap water at 90°C | Immediately after drying (before contact with tap water) | After contact with tap water at 90°C |
| C. Example 14 | V1 | 200 | 200 | 200 | 200 |
| C. Example 15 | V2 | 800 | 800 | 800 | 800 |
| C. Example 16 | V3 | 800 | 800 | 800 | 800 |
| C. Example 17 | V4 | 200 | 200 | 200 | 200 |
| C. Example 18 | W1 | 200 | 200 | 200 | 200 |
| C. Example 19 | W2 | 100 | 100 | 100 | 100 |
| C. Example 20 | X1 | 200 | 200 | 200 | 200 |
| C. Example 21 | X2 | 200 | 200 | 200 | 200 |
| C. Example 22 | Y1 | 100 | 100 | 100 | 100 |
| C. Example 23 | Y2 | 200 | 200 | 200 | 200 |
| C. Example 24 | Z1 | 200 | 200 | 200 | 200 |
| C. Example 25 | Z2 | 100 | 100 | 100 | 100 |
| C. Example 26 | R1 | 100 | 100 | 100 | 100 |
| C. Example 27 | — | >3200 | >3200 | >3200 | >3200 |

C.Ex.: Comparative Example

Table 11 (continued)

| Composition, antimicrobial activity, etc. Examples | Name of antimicrobial particles | Color | Sedimentation velocity (mm/hr) |
|---|---|---|---|
| Comparative Example 14 | V1 | Colorless (white) | 2.55 |
| Comparative Example 15 | V2 | Colorless (white) | 0.096 |
| Comparative Example 16 | V3 | Colorless (white) | 0.096 |
| Comparative Example 17 | V4 | Colorless (white) | 0.096 |
| Comparative Example 18 | W1 | Colorless (white) | 0.066 |
| Comparative Example 19 | W2 | Colorless (white) | 2.92 |
| Comparative Example 20 | X1 | Colorless (white) | 0.066 |
| Comparative Example 21 | X2 | Colorless (white) | 3.12 |
| Comparative Example 22 | Y1 | Colorless (white) | 0.096 |
| Comparative Example 23 | Y2 | Colorless (white) | 2.49 |
| Comparative Example 24 | Z1 | Colorless (white) | 0.066 |
| Comparative Example 25 | Z2 | Colorless (white) | 2.92 |
| Comparative Example 26 | R1 | Colorless (white) | 0.32 |
| Comparative Example 27 | − | Colorless (white) | − |

It has been confirmed that those compositions of Example 49 are excellent in the properties of antimicrobial activities immediately after their preparations, the capability of maintaining antimicrobial activities after their contact with tap water, color and dispersibility. On the other hand, compositions in Comparative Examples had problems concerning one or more of these properties.

In these experiments, further, it has been found that with a decrease in the average secondary particle diameter of antimicrobial particles or with an increase in antimicrobial activities of the BET specific surface area, the antimicrobial activities are more enhanced and that particles having a smaller width of Dr (particle size distribution width), having uniform particle diameters and containing an organic acid in predetermined range tend to exhibit higher antimicrobial activities.

On the other hand, with regard to Comparative Examples, when there were used V1, W2, X2, Y2 and Z2 particles that were particles containing no organic acid and that had a large width of Dr (particle size distribution width), the compositions in these Comparative Examples are insufficient in antimicrobial activities as a characteristic of not containing the above organic acid, and it was also found that the particles formed aggregates and caused sedimentation since they were poor in dispersibility.

In Comparative Example 26 in which the composition contained R1 particles of zirconium phosphate, it was found that the composition was poor in the capability of maintaining antimicrobial activities after its contact with tap water and dispersibility as compared with Examples.

In Comparative Example 27, no antimicrobial agent was incorporated, so that no antimicrobial effect was recognized, and it goes without saying that the object of this invention was not achieved.

In Comparative Example 18, particles were incorporated, but the particles did not contain copper, so that the antimicrobial effect was poor.

To summarize Comparative Examples, as is seen from Comparative Examples 15 and 16 and Comparative Examples 17, 18, 20, 22 and 24, no high antimicrobial activities can be imparted when particles are used but when the particles do not contain both silver and copper.

That is, the antimicrobial composition of this invention exhibits a synergistic effect due to the co-presence of silver and copper therein and hence exhibits excellent antimicrobial activities over particles and silver not containing copper.

Example 50 (Antifungal activity)

The antimicrobial particles (X) of this invention were measured for antifungal activities in the same manner as in the minimum growth inhibitory concentration measurement method (Revised version of the year 2003) provided by Japanese Society of Chemotherapy except that a potato dextrose agar medium supplied by Nissui Pharmaceutical Co., Ltd. was used as a culture medium in place of a culture medium supplied by Difco. Table 12 shows the results thereof as minimum growth inhibitory concentrations (MIC values). The smaller a value is, the higher the antifungal activity is.

Fungi used for the test are as follows.

*1: Cladosporium cladosporioides NBRC 6348 (Black leather fungus)
*2: Colletotrichum coccodes NBRC 5256 (Eggplant black root rot pathogenic fungus)
*3: Ustilaginoidea virens NBRC 9175 (Rice plant green mold pathogenic germ)

Table 12

| Fungi used / Antifungal agent | | Minimum inhibitory concentration ppm | | |
| --- | --- | --- | --- | --- |
| | | *1 | *2 | *3 |
| Example 50 | A1 particles | 300 or less | 30 or less | 15 or less |
| | B1-1 particles | 300 or less | 30 or less | 15 or less |
| | C1 particles | 300 or less | 30 or less | 15 or less |
| | D1 particles | 300 or less | 30 or less | 15 or less |
| | E1 particles | 300 or less | 30 or less | 15 or less |
| | F1 particles | 300 or less | 30 or less | 15 or less |
| | G1 particles | 300 or less | 30 or less | 15 or less |
| | H1 particles | 300 or less | 30 or less | 15 or less |
| | B1-2 particles | 300 or less | 30 or less | 15 or less |
| Comparative Example 28 R1 particles (Silver-supporting zirconium phosphate) Average secondary particle diameter; 1μm BET specific surface area; 4 m²/g Ag content; 3% *R1 particles are the same as those used in experiments hereinafter. | | 6400 | 3000 | 20 |
| Comparative Example 29 Bordeaux ground powder (Commercial product, content of 11.1% as copper sulfate, content of 6.0% as copper) | | 6400< | 6400< | 800 |
| Comparative Example 30 V4 particles | | 500 | 100 | 100 |

It has been found that the antimicrobial particles of this invention exhibit remarkably excellent antifungal activities over conventionally known antifungal agents. As is seen from the comparison of the results of Comparative Example 30 and the results of Example 50, the antimicrobial particles of this invention have higher antifungal effects than the antifungal agent containing silver alone. It is seen that the co-presence of silver and copper exhibits a synergistic effect.

Example 51

Agricultural chemical (antifungal agent)

In this Example, 10 parts by weight of antimicrobial particles (X) of this invention, 30 parts by weight of a silane-coupling agent surface-modifying precipitated calcium carbonate (inorganic fine powder), 5 parts by weight of polyoxyethylene alkylally ether (surfactant), 10 parts by weight of ethylene glycol (surfactant), 0.2 party by weight of xanthan gum (emulsion stabilizer) and 44.8 parts by weight of water were homogeneously mixed with a homomixer, and the mixture was uniformly wet-pulverized to prepare an agricultural chemical composition in an aqueous suspension state. This composition was diluted 1/100 times with water and the diluted composition was placed in a commercially available plastic spray unit and used as a diluted agricultural chemical composition.
In Comparative Examples, experiments of Example 51 were repeated except that the particles used in Example 51 were replaced with the following particles or Bordeaux ground powder.
In each experiment, eggplants and rice plants that grown to about 20 cm were provided. With regard to the eggplants, 1 g of an agricultural chemical composition of Colletotrichum coccodes NBRC 5256 (Eggplant black root rot pathogenic fungus) that had been adjusted to $1 \times 10^6$ microorganisms/ml was sprayed to the leaves, stalk and root thereof, and after one day, 1 g of the diluted agricultural chemical composition was similarly sprayed. Thirty days thereafter, the eggplants were observed for a degree of occurrence of eggplant black root rot. In the test with the egg plants, each pot having a diameter of 33 cm and a depth of 30 cm was filled with soil such that the soil was 27 cm high.
With regard to the rice plants, 1 g of an agricultural chemical composition of Ustilaginoidea virens NBRC 9175 (Rice plant green mold pathogenic germ) that had been adjusted to $1 \times 10^6$ microorganisms/ml was sprayed to the leaves, stalk and root thereof, and after one day, 1 g of the diluted agricultural chemical composition was similarly sprayed. Thirty days thereafter, the rice plants were observed for a degree of occurrence of rice plant green mold. The test with the rice plants was carried out under conditions where each pot having a diameter of 33 cm and a depth of 30 cm was filled with soil such that the soil was 27 cm high, and water in soil was barely absent on the soil surface but was fully present in the soil. The following Table 13 shows the test results.

Table 13

| Plant / Antifungal agent | | Eggplant<br>Eggplant black root rot | Rice plant<br>Rice plant green mold |
|---|---|---|---|
| Example 51 | A1 particles | No occurrence, grown normally | No occurrence, grown normally |
| | B1-1 particles | No occurrence, grown normally | No occurrence, grown normally |
| | C1 particles | No occurrence, grown normally | No occurrence, grown normally |
| | D1 particles | No occurrence, grown normally | No occurrence, grown normally |
| | E1 particles | No occurrence, grown normally | No occurrence, grown normally |
| | F1 particles | No occurrence, grown normally | No occurrence, grown normally |
| | G1 particles | No occurrence, grown normally | No occurrence, grown normally |
| | H1 particles | No occurrence, grown normally | No occurrence, grown normally |
| | B1-2 particles | No occurrence, grown normally | No occurrence, grown normally |
| Comparative Example 31, R1 particles (silver-supporting zirconium phosphate) | | Occurred on the entire roots, withered | Occurred on the entire roots, withered |
| Comparative Example 32 Bordeaux ground powder (Commercial product, Ground Bordeaux powder, content of 11.1% as copper sulfate, content of 6.0% as copper) | | Occurred on the entire roots, withered | Occurred on the entire roots, withered |
| Comparative Example 33, V4 particles | | Occurred on the entire roots, withered | No occurrence, grown normally |

It has been found that the agricultural chemical composition of this invention exhibits far excellent agricultural chemical performances over the conventionally known agricultural chemical compositions. As is seen from a comparison between the results of Comparative Example 33 and the results of Example 51, the agricultural chemical composition of this invention has a higher antifungal effect than the agricultural chemical composition containing silver alone. It is seen that the co-presence of silver and copper produces a synergistic effect.

<Spherical antimicrobial particles (Y)>

The method for preparation of the antimicrobial particles (Y) and use thereof will be specifically explained on the basis of the following Examples.

(Examples 52 to 70 (Spherical particles))

Example 52

A 2,000 ml mixture was prepared from 508 ml of a 1.025 mol/L aluminum sulfate, 25 g (0.1 mol) of copper sulfate, 36.92 g (0.26 mol) of sodium sulfate and a balance of deionized water, and while the mixture was stirred at room temperature, 615 ml of a 3.382N sodium hydroxide was added over the time period of approximately 4 minutes. (Alkali equivalent weight ratio 0.999, (sulfate of monovalent cation)/aluminum sulfate) = 1.0). After the mixture was further stirred for 20 minutes, it was placed in an autoclave and hydrothermally treated at 170°C for 2 hours. The reaction mixture was cooled to 25°C, and a solid was recovered by filtering, washed with 500 ml of water and dried at 105°C for 22 hours to give particles (y) having the form of a sphere each. 100 Grams was sampled from the particles and suspended in 600 ml of a 0.025 mol/L silver sulfate aqueous solution, and the suspension was stirred at 25°C for 1 hour while light was blocked, to carry out the ion-exchange of a portion of sodium ions with silver ions.
The ion-exchanged sample was recovered by filtering, washed with water, dried (105°C x 6 hours + 200°C x 1 hour) and pulverized. These treatment steps gave spherical Y-A-1-1 particles that were particles (Y). Table 14 shows particle properties of the Y-A-1-1 particles and Fig. 15 shows an SEM photograph of their forms.

Example 53

2.6 Grams of zinc sulfate heptahydrate (Wako-Purechemical Ind. Co., Ltd. reagent 1st grade) and 2.2 g of ammonium sulfate (Wako-Purechemical Ind. Co., Ltd. reagent 1st grade) were placed in 1,000 ml of deionized water at 80°C to prepare a mixture liquid.
To the mixture liquid were added 95 g of the Y-A-1-1 particles, and the mixture was stirred for 6 hours. Then, it was dehydrated and the resultant product was washed with water and dried to give Y-A-1-2 particles treated with zinc and ammonium.
The above particles had a Zn content of 0.1 %, an $NH_4$ content of 0.4 % and a BET specific surface area of 60 $m^2$/g, while they had the same particle properties as those of the Y-A-1-1 particles.
Y-A-3 particles, Y-A-5 particles, Y-A-8 particles, Y-A-10 particles, Y-A-11 particles and Y-A-31 particles to be described in the following Examples were also treated in the same manner as in the above treatment.
All of the thus-treated products had a Zn content of 0.1 % and an $NH_4$ content of 0.4 % and had nearly equal contents of them.
Any one of the thus-treated products had a BET specific surface area that was approximately 6 times the BET specific surface area which the particles before the treatment had, while other particle properties of the treated products such as the average secondary particle diameter, particle diameter uniformity, particle form, etc., were almost the same as those which the particles before the treatment had. The whiteness of each of resin compositions obtained by adding the treated products was more improved than those obtained by adding particles that had not subjected to the above treatment.

Example 54

Y-A-2 particles were obtained in the same manner as in the treatment steps of Example 52 except that the alkali equivalent weight ratio was changed to 0.95.

Example 55

Y-A-3 particles were obtained in the same manner as in the treatment steps of Example 52 except that the alkali equivalent weight ratio was changed to 0.90.

Example 56

Y-A-4 particles were obtained in the same manner as in the treatment steps of Example 52 except that the alkali equivalent weight ratio was changed to 0.835. Fig. 16 shows an SEM photograph of the thus-synthesized spherical Y-A-4 particles.

Example 57

A 2,000 ml mixture was prepared from 223 ml of a 1.025 mol/L of aluminum sulfate, 11.5 g (0.045 mol) of copper sulfate, 64.61 g (0.455 mol) of sodium sulfate and a balance of deionized water, and while the mixture was stirred at room temperature, 486 ml of a 3.382N sodium hydroxide was added over the time period of approximately 4 minutes (alkali equivalent weight ratio: 0.9). After the resultant mixture was further stirred for 20 minutes, it was placed in an autoclave and allowed to hydrothermally react at 100°C for 29 hours. The reaction product was cooled to 25°C, and a solid was recovered by filtering, washed with 500 ml of water and dried at 105°C for 22 hours to give particles (y) having the form of a sphere each.

Treatment steps thereafter were carried out in the same manner as in Example 52 except that the ion-exchange was followed by adding 0.02 g of a polyacrylamide flocculating agent (SUMIFLOC FN-20, supplied by Sumitomo Chemical Co., Ltd.) and stirring for 10 minutes, to give Y-A-5 particles. Fig. 17 shows an SEM photograph of the thus-synthesized spherical silver-containing aluminum sulfate hydroxide particles.

Example 58

Y-A-6 particles were obtained in the same manner as in the treatment steps of Example 57 except that the alkali equivalent weight ratio was changed to 0.835 and that the drying conditions after the ion-exchange with silver were changed to only 105°C x 6 hours.

Example 59

Y-A-7 particles were obtained in the same manner as in the treatment steps of Example 57 except that a (sulfate of monovalent cation)/(aluminum sulfate) ratio = 0.33 was employed, that the reaction temperature was changed to 200°C and the reaction time period was changed to 1.5 hours.

Example 60

Y-A-8 particles were obtained in the same manner as in the treatment steps of Example 57 except that a (sulfate of monovalent cation)/(aluminum sulfate) ratio = 2.0 was employed, that the reaction temperature was changed to 250°C and the reaction time period was changed to 1 hour.

Example 61

A 1,500 ml mixture was prepared from 189 ml of a 1.025 mol/L aluminum sulfate, 9.7 g (0.039 mol) of copper sulfate, 67.95 g (0.39 mol) of potassium sulfate and a balance of deionized water, and while the mixture was stirred at room temperature, 596 ml of a 2.34N potassium hydroxide was added over the time period of approximately 4 minutes (alkali equivalent weight ratio: 0.9). After the mixture was further stirred for 20 minutes, it was placed in an autoclave and allowed to hydrothermally react at 170°C for 2 hours. After the reaction mixture was cooled to 25°C, a solid was recovered by filtering, washed with 500 ml of water and dried at 105°C for 22 hours to give particles (y) having the form of a sphere each. Treatment steps thereafter were carried out in the same manner as in Example 52 to give Y-A-9 particles.

Example 62

A 500 ml mixture was prepared from 129 ml of a 1.025 mol/L aluminum sulfate, 6.6 g (0.026 mol) of copper sulfate, 17.18 g (0.13 mol) of sodium sulfate, 22.65 g (0.13 mol) of potassium sulfate and a balance of deionized water, and while the mixture was stirred at room temperature, 140 ml of 3.382N sodium hydroxide and 140 ml of 3.382N potassium hydroxide were added over the time period of approximately 1 minute (alkali equivalent weight ratio: 0.9). After the mixture was further stirred for 20 minutes, it was placed in an autoclave and allowed to hydrothermally react at 170°C for 2 hours. The reaction mixture was cooled to 25°C, and then a solid was recovered by filtering, washed with 500 ml of water and dried at 105°C for 22 hours to give particles (y) having the form of a sphere each. Treatment steps thereafter were carried out in the same manner as in Example 52 to give Y-A-10 particles.

Example 63

Y-A-11 particles were obtained in the same manner as in Example 52 except that 6.53 g of titanium sulfate $\{Ti_2(SO_4)_3\}$ was additionally added to an aluminum sulfate aqueous solution and that the temperature for the ion-exchange treatment was changed to 60°C.

Example 64

A 1,400 ml mixture was prepared from 378 ml of a 1.03 mol/L aluminum sulfate aqueous solution, 19.5 g (0.078 mol) of copper sulfate, 36.93 g of sodium sulfate and a balance of deionized water, and while the mixture was stirred at room temperature, 413 ml of a 3.4N sodium hydroxide aqueous solution was added over the time period of approximately 4 minutes. After the mixture was further stirred for 30 minutes, a solution of 9.9 g of sodium phosphate dodecahydrate ($Na_3PO_4 \cdot 12H_2O$) in 300 ml of deionized water was added. The mixture was stirred for 30 minutes, and then it was placed in an autoclave and allowed to hydrothermally react at 170°C for 2 hours. After the reaction mixture was cooled, a solid was recovered by filtering, washed with water and dried at 105°C for 22 hours.

Ion-exchange treatment with silver ion thereafter was carried out in the same manner as in Example 52 to give silver-containing aluminum sulfate phosphate hydroxide Y-A-12 particles.

In addition, this Example was repeated except that the sodium phosphate was replaced with sodium carbonate, sodium nitrate, sodium silicate or sodium borate, whereby there were obtained silver-containing aluminum inorganic acid hydroxide particles containing inorganic ion of $CO_3^{2-}$, $NO_3^-$, $SiO_4^{2-}$ or $BO_3^{3-}$ and having particle properties similar to those of the Y-A-12 particles.

Example 65

Y-A-13 particles were obtained in the same manner as in the treatment steps of Example 52 except that the amount of the silver sulfate aqueous solution in the step of ion-exchange between silver and sodium was changed to 1,800 ml.

Example 66

Y-A-14 particles were obtained in the same manner as in the treatment steps of Example 52 except that silver sulfate was changed to silver nitrate having concentration of 0.001 mol/L, and that the amount thereof was changed to 300 ml, in the step of ion-exchange between silver and sodium.

Example 67

Y-A-15 particles were obtained in the same manner as in the treatment steps of Example 52 except that silver sulfate was changed to silver nitrate having concentration of 0.00001 mol/L, and that the amount thereof was changed to 300 ml, in the step of ion-exchange between silver and sodium.

Example 68

Y-A-1 particles were calcined in a nitrogen atmosphere at 400°C for 1 hour to give Y-A-16 particles. According to a powder X-ray diffraction method, no peaks of $[Ag_{0.104}Na_{0.896}]_{0.96}[Cu_{0.15}Al_{0.9}]_3(SO_4)_{1.92}$ (water-soluble compound) were not observed, and all the peaks that were observed were peaks of $[Ag_{0.1}Na_{0.86}]_{0.96}Al_3(SO_4)_{1.92}(OH)_{6.12}$. The particles had the form of a sphere each.

10.00 Grams of Y-A-16 particles were placed in 100 ml of deionized water, and the mixture was stirred at 20°C for 30 minutes, dehydrated, washed with water and dried at 120°C for 16 hours. The particles weighed 10.0 g without any weight loss.

Example 69

A Henschel mixer was charged with 1 kg of Y-A-1 particles, and the particles were sprayed with a dilution of 20 g of γ-aminopropyltriethoxysilane in 50 g of water, followed by surface treatment under a stirring blade rotation speed conditions of 1,500 rpm at a temperature of 120°C for 30 minutes. The thus-surface-treated product was dried at 200°C for 1 hour to give Y-A-17 particles.

Example 70

A 2,000 ml mixture was prepared from 508 ml of 1.025 mol/L aluminum sulfate, 25 g (0.1 mol) of copper sulfate, 68.72 g (0.52 mol) of ammonium sulfate and a balance of deionized water, and while the mixture was stirred at room temperature, 616 ml of 3.382N aqueous ammonia was added over the time period of approximately 4 minutes (alkali equivalent weight ratio: 0.999). After the mixture was further stirred for 20 minutes, it was placed in an autoclave, hydrothermally treated at 100°C for 1 hour and cooled to 25°C, and the reaction product was recovered by filtering, washed with 500 ml of water and dried at 105°C for 22 hours to give ammonium type particles (y) having the form of a sphere each. Treatment steps thereafter were carried out in the same manner as in Example 52 to give Y-A-18 particles. Fig. 19 shows an SEM photograph thereof.

(Examples 71 to 81, disk-like particles)

Example 71

A 2,000 ml mixture was prepared from 352 ml of 1.025 mol/L aluminum sulfate, 22.12 g of ZnO, 5 g (0.02 mol) of copper sulfate, 51.12 g (0.36 mol) of sodium sulfate and a balance of deionized water, and while the mixture was stirred at room temperature, 284 ml of 3.382N sodium hydroxide was added over the time period of approximately 4 minutes. After the mixture was further stirred for 20 minutes, it was placed in an autoclave and allowed to hydrothermally react at 170°C for 2 hours. The reaction mixture was cooled to 25°C, and the reaction product was recovered by filtering, washed with 500 ml of water and dried at 105°C for 22 hours, to give particles (y) having the form of a disk each.
Treatment steps thereafter were carried out in the same manner as in Example 52 except that the temperature for the ion-exchange treatment with silver was changed to 80°C and that the time period for the treatment was changed to 30 hours, to give Y-A-19 particles. Fig. 18 shows an SEM photograph of the Y-A-19 particles.

Example 72

A 2,000 ml mixture was prepared from 352 ml of 1.025 mol/L aluminum sulfate, 22.12 g of ZnO, 25 g (0.1 mol) of copper sulfate, 62.72 g (0.36 mol) of potassium sulfate and a balance of deionized water, and while the mixture was stirred at room temperature, 268 ml of 3.4N potassium hydroxide was added over the time period of approximately 4 minutes (alkali equivalent weight ratio: 0.758, (sulfate of monovalent cation)/(aluminum sulfate) = 1.0). After the mixture was further stirred for 20 minutes, it was placed in an autoclave and allowed to hydrothermally react at 170°C for 2 hours. The hydrothermal reaction mixture was cooled to room temperature, and then the reaction product was recovered by filtering, washed with water and dried at 105°C for 24 hours, to give particles (y) having the form of a disk each. Treatment steps thereafter were carried out in the same manner as in Example 71 to give Y-A-20 Particles.

Example 73

A 2,000 ml mixture was prepared from 352 ml of 1.025 mol/L aluminum sulfate, 22.12 g of ZnO, 12.5 g (0.05 mol of copper sulfate, 51.12 g (0.36 mol) of sodium sulfate and a balance of deionized water, and while the mixture was stirred at room temperature, 332 ml of 3.382N sodium hydroxide was added over the time period of approximately 4 minutes (alkali equivalent weight ratio: 0.868, (sulfate of monovalent cation)/(aluminum sulfate) = 1.0). After the mixture was further stirred for 20 minutes, it was placed in an autoclave and allowed to hydrothermally react at 170°C for 2 hours. The hydrothermal reaction mixture was cooled to room temperature, and then the reaction product was recovered by filtering, washed with water and dried at 105°C for 24 hours, to give particles (y) having the form of a disk each. Treatment steps thereafter were carried out in the same manner as in Example 71 to give Y-A-21 Particles.

Example 74

Y-A-22 particles were obtained in the same manner as in the treatment steps of Example 73 except that silver sulfate was replaced with silver nitrate, that the silver nitrate concentration was changed to 0.3 mol/L, and that the amount thereof was changed to 300 ml, in the treatment step of ion-exchange between silver and sodium.

Example 75

Y-A-23 particles were obtained in the same manner as in the treatment steps of Example 73 except that the silver nitrate concentration in the treatment step of ion-exchange between silver and sodium was changed to 0.001 mol/L.

Example 76

Y-A-24 particles were obtained in the same manner as in the treatment steps of Example 73 except that the silver nitrate concentration in the treatment step of ion-exchange between silver and sodium was changed to 0.00001 mol/L.

Example 77

A 2,000 ml mixture was prepared from 350 ml of 1.03 mol/L aluminum sulfate, 12.5 g (0.05 mol) of copper sulfate and a balance of deionized water. While the mixture was stirred at room temperature, 22.12 g of a ZnO powder (reagent first grade) was added, and the mixture was stirred for 10 minutes. Then, 284 ml of 3.385N sodium hydroxide was added over the time period of approximately 2 minutes. After the mixture was further stirred for 30 minutes, it was placed in an autoclave and allowed to hydrothermally react at 170°C for 2 hours.

The hydrothermal reaction mixture was cooled to room temperature, and then the reaction product was recovered by filtering, washed with water and dried at 105°C for 22 hours, to give particles (y) having the form of a disk each. Treatment steps thereafter were carried out in the same manner as in Example 71 to give Y-A-25 Particles.

Example 78

A 2,000 ml mixture was prepared from 350 ml of 1.03 mol/L aluminum sulfate, 12.5 g (0.05 mol) of copper sulfate, 51.12 g (0.36 mol) of sodium sulfate and a balance of deionized water. While the mixture was stirred at room temperature, 22.12 g of a ZnO powder (reagent first grade) was added, and the mixture was stirred for 10 minutes. Then, 188 ml of 3.385N sodium hydroxide was added over the time period of approximately 1 minute. After the mixture was further stirred for 30 minutes, it was placed in an autoclave and allowed to hydrothermally react at 170°C for 2 hours. The hydrothermal reaction mixture was cooled to room temperature, and then the reaction product was recovered by filtering, washed with water and dried at 105°C for 20 hours, to give particles (y) having the form of a disk each. Treatment steps thereafter were carried out in the same manner as in Example 71 to give Y-A-26 Particles.

Example 79

Y-A-27 particles were obtained in a manner that the alkali equivalent weight ratio in the production of particles having the form of a disk each in Example 73 was changed to 0.90 and that other treatment steps were carried out in the same manner as in Example 71.

Example 80

Y-A-28 particles were obtained in the same manner as in the treatment steps of Example 71 except that the molar ratio of (sulfate of monovalent cation)/(aluminum sulfate) in the production of particles having the form of a disk each was changed to 3.0.

Example 81

Y-A-29 particles were obtained in the same manner as in the treatment steps of Example 71 except that the molar ratio of (sulfate of monovalent cation)/(aluminum sulfate) was changed to 0.20.

(Examples 82 and 83, particles having the form of a rectangular parallelepiped)

Example 82

Y-A-30 particles were obtained from the following raw materials by the following synthesis method.

Raw materials used

| | | |
|---|---|---|
| 1.04 mol/L aluminum sulfate | 2.0 mol | 1923 ml |
| Copper sulfate | 0.8 mol | 200 g |
| Amorphous aluminum hydroxide | 2.0 mol | 156.02 g |

Synthesis method

While an aluminum sulfate aqueous solution was stirred, copper sulfate and aluminum hydroxide (trade name of dry aluminum hydroxide gel: S-100, supplied by Kyowa Chemical Industry Co., Ltd.) were added to prepare a slurry of hydrogen type particles (y). Deionized water was added to the slurry to dilute it so that the amount of the slurry was 7.0 L. The slurry was further stirred at room temperature for 5 hours, and then a reaction mixture was hydrothermally treated with an autoclave at 170°C for 5 hours.

The thus-treated solution was filtered, and a solid was washed with water, dried and pulverized to give hydrogen type (hydronium type) particles (Y) having the form of a rectangular parallelepiped each. Treatment steps thereafter were carried out in the same manner as in Example 52 to give Y-A-30 particles having the form of a rectangular parallelepiped. Fig. 20 shows an SEM photograph thereof.

Example 83

Y-A-31 particles having the form of a rectangular parallelepiped were obtained in the same manner as in the treatment steps of Example 82 except that the time period for stirring at room temperature before a reaction product was treated with the autoclave was changed to 168 hours.

(Comparative Examples 34 to 40, form of aggregate mass)

Comparative Example 34

A 1,900 ml mixture was prepared from 381 ml of 1.025 mol/L aluminum sulfate, 39 g (0.16 mol) of copper sulfate, 48.5 g (0.34 mol) of sodium sulfate and a balance of deionized water. While the mixture was stirred, 357 ml of 3.382N sodium hydroxide was added over the time period of approximately 3 minutes (alkali equivalent weight ratio: 0.775, (sulfate of monovalent cation)/aluminum sulfate) molar ratio = 0.28). After the mixture was further stirred for 20 minutes, it was placed in an autoclave and allowed to hydrothermally react at 100°C for 2 hours. The reaction mixture was cooled to 25°C, and then the reaction product was recovered by filtering, washed with 500 ml of water and dried at 105°C for 22 hours to give particles (y) having the form of aggregate mass.
Then, the ion-exchange step thereafter was carried out in the same manner as in Example 52 to give Y-V-1 particles. Table 14 shows properties of the Y-V-1 particles, and they were poor in the uniformity of particle diameters and had the form of aggregate mass as shown in the SEM photograph of Fig. 21. It is considered that the reason why the particles obtained in this experiment had the form of an aggregate mass and were poor in the uniformity of particle diameters is that none of the alkali equivalent weight ratio and the (sulfate of monovalent cation)/(aluminum sulfate) molar ratio to be controlled during the reaction, which are very important for producing spherical particles in this invention, were not controlled to ensure that they were in the ranges defined in this invention.

Comparative Example 35

Y-V-2 particles were obtained in the same manner as in Comparative Example 34 except that the alkali equivalent weight ratio was increased to 0.8. In this experiment, the alkali equivalent weight ratio was brought into the range defined in this invention unlike Comparative Example 34, but the (sulfate of monovalent cation)/(aluminum sulfate) molar ratio was still 0.28 like Comparative Example 34 and outside the range defined in this invention. Therefore, although the product had some improvement over the particles of Comparative Example 34 in the uniformity of particle diameters, it was still poor, and it had the form of aggregate mass.

Comparative Example 36

Y-V-3 particles were obtained in the same manner as in the treatment steps of Comparative Example 34 except that the alkali equivalent weight ratio was further increased up to 1.0. The Y-V-3 particles were poor in the uniformity of particle diameters and they were particles having the form of aggregate mass.
Like Comparative Example 35, this experiment also resulted in showing that even if the alkali equivalent weight ratio is within the range defined in this invention but if the (sulfate of monovalent cation)/(aluminum sulfate) molar ratio is not within the range defined in this invention, there cannot be obtained any copper-containing aluminum sulfate hydroxide particles of this invention that are excellent in the uniformity of particle diameters and that also have the form of a sphere each.
That is, the following can be understood from Comparative Examples 35 and 36. Even if the alkali equivalent weight ratio that is to be controlled in the reaction of this invention is 0.8 or 1.0 in a preferred range, it is not all that is required, and if the (sulfate of monovalent cation)/(aluminum sulfate) molar ratio is not controlled so that it is within the range defined in this invention, there cannot be obtained any antimicrobial particles of this invention that are excellent in the uniformity of particle diameters.

Comparative Example 37

Y-V-4 particles were obtained in the same manner as in the treatment steps of Example 52 except that the ion-exchange with silver was not carried out.

Comparative Example 38

Y-V-5 particles were obtained in the same manner as in the treatment steps of Example 55 except that the alkali equivalent weight ratio in the production of spherical particles was changed to 1.3 that was outside the range defined in this invention. The particles had the form of aggregate mass and the uniformity of particle diameters $D_{75}/D_{25}$ was as poor as 8.52. In an X-ray diffraction pattern, there was observed a peak of boehmite gel that was morphologically a kind of crystal form of aluminum hydroxide.

Comparative Example 39

Y-V-6 particles were obtained in the same manner as in the treatment steps of Example 55 except that the (sulfate of monovalent cation)/(aluminum sulfate) molar ratio was changed to 3.0 that was outside the range defined in this invention. The particles had the form of aggregate mass and had a large average secondary particle diameter of as large as 16.72.

Comparative Example 40

Y-V-7 particles were obtained in the same manner as in the treatment steps of Example 55 except that the temperature for the hydrothermal treatment was changed to 80°C that was outside the range defined in this invention. The particles had the form of aggregate mass and an average secondary particle diameter of 25.8 $\mu$m, and the uniformity of particle diameters thereof $D_{75}/D_{25}$ was as poor as 4.02. It was found from XRD that they were amorphous.

The above Y-A1 to Y-A31 particles were synthesized from high-purity raw materials (which had been purified so that the content of each of Pb, Cd, As and Ba as impurities was 0.1 ppm or less, that the content of Fe as an impurity was 10 ppm or less and that the content of each of Mn, Cu, Cr and Ni as impurities was 1 ppm or less) by means of apparatuses made from the above anti-corrosive materials. With regard to the contents of impurities, therefore, differing from natural alunite, the content of each of Pb, Cd, As and Ba was 0.1 ppm or less, the content of Fe was 10 ppm or less, the content of each of Mn, Cu, Cr and Ni was 1 ppm or less) and the content of C1 was 100 ppm or less. The content of each of the impurities was measured by an atomic absorption method, an ICP-AES method (Inductively Coupled Plasma-Atomic Emission Spectroscopy) or a fluorescent X-ray method.

Table 14

| Examples | Chemical formula, etc., of antimicrobial particles | Particle form | Particle name |
|---|---|---|---|
| Example 52 | $[Ag_{0.1}Na_{0.9}]_{0.96}[Cu_{0.15}Al_{0.9}]_3(SO_4)_{1.92}(OH)_{6.12}$ | Spherical | Y-A-1-1 |
| Example 54 | $[Ag_{0.09}Na_{0.91}]_{1.12}[Cu_{0.15}Al_{0.9}]_3(SO_4)_{2.17}(OH)_{5.78}$ | Spherical | Y-A-2 |
| Example 55 | $[Ag_{0.09}Na_{0.91}]_{1.14}[Cu_{0.15}Al_{0.9}]_3(SO_4)_{2.30}(OH)_{5.54}$ | Spherical | Y-A-3 |
| Example 56 | $[Ag_{0.09}Na_0O_{0.91}]_{1.11}[Cu_{0.15}Al_{0.9}]_3(SO_4)_{2.33}(OH)_{5.45}$ | Spherical | Y-A-4 |
| Example 57 | $[Ag_{0.09}Na_{0.91}]_{1.06}[Cu_{0.15}Al_{0.9}]_3(SO_4)_{2.35}(OH)_{5.36}$ | Spherical | Y-A-5 |
| Example 58 | $[Ag_{0.1}Na_{0.9}]_{1.04}[Cu_{0.15}Al_{0.9}]_3(SO_4)_{2.34}(OH)_{5.36} \cdot 2.6H_2O$ | Spherical | Y-A-6 |
| Example 59 | $[Ag_{0.09}Na_{0.91}]_{1.07}[Cu_{0.15}Al_{0.9}]_3(SO_4)_{2.32}(OH)_{5.43}$ | Spherical | Y-A-7 |
| Example 60 | $[Ag_{0.09}Na_{0.91}]_{1.09}[Cu_{0.15}Al_{0.9}]_3(SO_4)_{2.3}(OH)_{5.49}$ | Spherical | Y-A-8 |
| Example 61 | $[Ag_{0.08}K_{0.92}]_{1.2}[Cu_{0.15}Al_{0.9}]_3(SO_4)_{2.2}(OH)_{5.8}$ | Spherical | Y-A-9 |
| Example 62 | $[Ag_{0.1}K_{0.45}Na_{0.45}]_1[Cu_{0.15}Al_{0.9}]_3(SO_4)_{1.99}(OH)_{6.22}$ | Spherical | Y-A-10 |
| Example 63 | $[Ag_{0.1}Na_{0.9}]_1[Ti_{0.01}Cu_{0.075}Al_{0.94}]_3(SO_4)_2(OH)_{5.86}$ | Spherical | Y-A-11 |
| Example 64 | $[Ag_{0.1}Na_{0.9}]_1[Cu_{0.15}Al_{0.9}]_3(SO_4)_{2.2}(PO_4)_{0.1}(OH)_{5.4}$ | Spherical | Y-A-12 |
| Example 65 | $[Ag_{0.31}Na_{0.69}]_{0.96}[Cu_{0.15}Al_{0.9}]_3(SO_4)_{1.92}(OH)_{6.12}$ | Spherical | Y-A-13 |
| Example 66 | $[Ag_{0.001}Na_{0.999}]_{0.96}[Cu_{0.15}Al_{0.9}]_3(SO_4)_{1.92}(OH)_{6.12}$ | Spherical | Y-A-14 |
| Example 67 | $[Ag_{0.00001}Na_{0.99999}]_{0.96}[Cu_{0.15}Al_{0.9}]_3(SO_4)_{1.92}(OH)_{6.12}$ | Spherical | Y-A-15 |
| Example 68 | Product obtained by calcining the product of Example 1 at 400°C for 1 hour. | Spherical | Y-A-16 |
| Example 69 | Product obtained by surface-treatment of the product of Example 1 | Spherical | Y-A-17 |
| Example 70 | $[Ag_{0.1}(NH_4)_{0.9}]_{0.96}[Cu_{0.15}Al_{0.9}]_3(SO_4)_{1.92}(OH)_{6.12}$ | Spherical | Y-A-18 |

Table 14 (continued)

| Antimicrobial particles / Examples | Average secondary particle diameter μm | Sharpness of particle diameter distribution $Dr=D_{75}/D_{25}$ | BET specific surface area $m^2/g$ | Color | Powder X-ray diffraction pattern (Any peak other than peaks of compound of the formula (1)) |
|---|---|---|---|---|---|
| Example 52 | 2.32 | 1.19 | 9.9 | White | nil |
| Example 54 | 1.13 | 1.16 | 4.4 | White | nil |
| Example 55 | 0.75 | 1.15 | 5.4 | White | nil |
| Example 56 | 0.80 | 1.19 | 6.9 | White | nil |
| Example 57 | 0.81 | 1.10 | 121.1 | White | nil |
| Example 58 | 0.69 | 1.29 | 97.1 | White | nil |
| Example 59 | 4.55 | 1.18 | 50.2 | White | nil |
| Example 60 | 0.88 | 1.15 | 45.7 | White | nil |
| Example 61 | 0.80 | 1.10 | 11.3 | White | nil |
| Example 62 | 1.15 | 1.19 | 10.6 | White | nil |
| Example 63 | 0.64 | 1.15 | 12.5 | White | nil |
| Example 64 | 1.17 | 1.16 | 4.6 | White | nil |
| Example 65 | 1.64 | 1.15 | 9.9 | White | nil |
| Example 66 | 1.64 | 1.15 | 9.9 | White | nil |
| Example 67 | 1.64 | 1.15 | 9.9 | White | nil |
| Example 68 | 2.08 | 1.18 | 9.5 | White | nil |
| Example 69 | 1.68 | 1.15 | 9.5 | White | nil |
| Example 70 | 0.31 | 1.1 | 38 | White | nil |

Table 15

| Antimicrobial particles / Examples | Chemical formula, etc., of antimicrobial particles | Particle form | Particle name |
|---|---|---|---|
| Example 71 | $[Ag_{0.099}Na_{0.901}]_{1.01}[Al_{0.87}Cu_{0.02}Zn_{0.175}]_3(SO_4)_{1.95}(OH)_{5.77}$ | Disk | Y-A-19 |
| Example 72 | $[Ag_{0.1}K_{0.9}]_1[Al_{0.77}Cu_{0.245}Zn_{0.1}]_3(SO_4)_2(OH)_{5.70}$ | Disk | Y-A-20 |
| Example 73 | $[Ag_{0.11}Na_{0.89}]_{0.9}[Al_{0.87}Cu_{0.01}Zn_{0.185}]_3(SO_4)_{1.60}(OH)_{6.34}$ | Disk | Y-A-21 |
| Example 74 | $[Ag_{0.3}Na_{0.7}]_{1.01}[Al_{0.88}Cu_{0.01}Zn_{0.17}]_3(SO_4)_{1.95}(OH)_{5.77}$ | Disk | Y-A-22 |
| Example 75 | $[Ag_{0.001}Na_{0.999}]_{1.01}[Al_{0.88}Cu_{0.01}Zn_{0.17}]_3(SO_4)_{1.95}(OH)_{5.77}$ | Disk | Y-A-23 |
| Example 76 | $[Ag_{0.00001}Na_{0.99999}]_{1.01}[Al_{0.88}Cu_{0.01}Zn_{0.17}]_3(SO_4)_{1.95}(OH)_{5.77}$ | Disk | Y-A-24 |
| Example 77 | $[Ag_{0.1}Na_{0.9}]_{1.01}[Al_{0.89}Cu_{0.065}Zn_{0.1}]_3(SO_4)_{2.06}(OH)_{5.57}$ | Disk | Y-A-25 |
| Example 78 | $[Ag_{0.1}Na_{0.9}]_{1.02}[Al_{0.92}Cu_{0.01}Zn_{0.11}]_3(SO_4)_{2.27}(OH)_{5.28}$ | Disk | Y-A-26 |
| Example 79 | $[Ag_{0.1}Na_{0.9}]_{1.05}[Al_{0.94}Cu_{0.01}Zn_{0.08}]_3(SO_4)_{2.3}(OH)_{5.26}$ | Disk | Y-A-27 |
| Example 80 | $[Ag_{0.09}Na_{0.91}]_{1.08}[Al_{0.9}Cu_{0.01}Zn_{0.14}]_3(SO_4)_{2.09}(OH)_{5.59}$ | Disk | Y-A-28 |
| Example 81 | $[Ag_{0.1}Na_{0.9}]_1[Al_{0.9}Cu_{0.01}Zn_{0.14}]_3(SO_4)_{2.04}(OH)_{5.60}$ | Disk | Y-A-29 |
| Example 82 | $[Ag_{0.1}(H_3O)_{0.9}]_{0.96}[Al_{0.77}Cu_{0.345}]_3Al_3(SO_4)_{1.92}(OH)_{6.12}$ | Rectangular parallelepiped | Y-A-30 |
| Example 83 | $[Ag_{0.1}(H_3O)_{0.9}]_{0.96}[Al_{0.77}Cu_{0.345}]_3(SO_4)_{1.92}(OH)_{6.12}$ | Rectangular parallelepiped | Y-A-31 |
| C. Example 34 | $[Ag_{0.1}Na_{0.9}]_{1.0}[Al_{0.77}Cu_{0.345}]_3(SO_4)_{2.36}(OH)_{5.28}$ | Aggregate | Y-V-1 |
| C. Example 35 | $[Ag_{0.09}Na_{0.91}]_{1.07}[Al_{0.77}Cu_{0.345}]_3(SO_4)_{2.42}(OH)_{5.23}$ | Aggregate | Y-V-2 |
| C. Example 36 | $[Ag_{0.09}Na_{0.91}]_{1.09}Al_3(SO_4)_{2.3}(OH)_{5.49}$ | Spherical | Y-V-3 |
| C. Example 37 | $Na_{0.96}[Al_{0.77}Cu_{0.345}]_3(SO_4)_{1.92}(OH)_{6.12}$ | Spherical | Y-V-4 |
| C. Example 38 | XRD pattern of $[Ag_{0.1}Na_{0.9}]_1[Al_{0.77}Cu_{0.345}]_3(SO_4)_2(OH)_6$ and boehmite gel was exhibited. | Aggregate | Y-V-5 |
| C. Example 39 | $[Ag_{0.085}Na_{0.915}]_{1.17}[Al_{0.77}Cu_{0.345}]_3(SO_4)_{2.34}(OH)_{5.49}$ | Aggregate | Y-V-6 |
| C. Example 40 | XRD pattern showed being amorphous. | Aggregate | Y-V-7 |

C.Ex.:Comparative Example

Table 15(continued)

| Antimicrobial particles / Examples | Average secondary particle diameter μm | Sharpness of particle diameter distribution $Dr=D_{75}/D_{25}$ | BET specific surface area $m^2/g$ | Color | Powder X-ray diffraction pattern (Any peak other than peaks of compound of the formula (1)) |
|---|---|---|---|---|---|
| Example 71 | 1.35 | 1.15 | 7.7 | White | nil |
| Example 72 | 1.21 | 1.13 | 3.1 | White | nil |
| Example 73 | 2.86 | 1.76 | 42 | White | nil |
| Example 74 | 1.35 | 1.15 | 7.7 | White | nil |
| Example 75 | 1.35 | 1.15 | 7.7 | White | nil |
| Example 76 | 1.35 | 1.15 | 7.7 | White | nil |
| Example 77 | 1.65 | 1.13 | 8.8 | White | nil |
| Example 78 | 1.18 | 1.15 | 4.9 | White | nil |
| Example 79 | 3.77 | 1.22 | 21 | White | nil |
| Example 80 | 0.61 | 1.08 | 11.1 | White | nil |
| Example 81 | 0.64 | 1.09 | 10 | White | nil |
| Example 82 | 1.8 | 1.7 | 2 | White | nil |
| Example 83 | 1.0 | 1.19 | 3 | White | nil |
| Comparative Example 34 | 7.46 | 11.61 | 7.8 | White | nil |
| Comparative Example 35 | 1.94 | 3.17 | 60.4 | White | nil |
| Comparative Example 36 | 0.81 | 1.10 | 121.1 | White | nil |
| Comparative Example 37 | 2.32 | 1.19 | 9.9 | White | nil |
| Comparative Example 38 | 18.93 | 8.52 | 39 | White | nil |
| Comparative Example 39 | 16.72 | 1.38 | 10.3 | White | nil |
| Comparative Example 40 | 25.78 | 4.02 | 82 | White | nil |

Table 16

| | Production conditions | | | |
|---|---|---|---|---|
| Properties / Examples | Aluminum sulfate, copper sulfate, zinc oxide, titanium sulfate | Alkali or Al(OH)$_3$ | Alkali equivalent weight ratio | Sulfate of monovalent cation |
| Example 52 | Al$_2$(SO$_4$)$_3$,CuSO$_4$ | NaOH | 0.999 | Na$_2$SO$_4$ |
| Example 54 | Al$_2$(SO$_4$)$_3$,CuSO$_4$ | NaOH | 0.95 | Na$_2$SO$_4$ |
| Example 55 | Al$_2$(SO$_4$)$_3$,CuSO$_4$ | NaOH | 0.90 | Na$_2$SO$_4$ |
| Example 56 | Al$_2$(SO$_4$)$_3$,CuSO$_4$ | NaOH | 0.835 | Na$_2$SO$_4$ |
| Example 57 | Al$_2$(SO$_4$)$_3$,CuSO$_4$ | NaOH | 0.90 | Na$_2$SO$_4$ |
| Example 58 | Al$_2$(SO$_4$)$_3$,CuSO$_4$ | NaOH | 0.835 | Na$_2$SO$_4$ |
| Example 59 | Al$_2$(SO$_4$)$_3$,CuSO$_4$ | NaOH | 0.90 | Na$_2$SO$_4$ |
| Example 60 | Al$_2$(SO$_4$)$_3$,CuSO$_4$ | NaOH | 0.90 | Na$_2$SO$_4$ |
| Example 61 | Al$_2$(SO$_4$)$_3$,CuSO$_4$ | KOH | 0.90 | K$_2$SO$_4$ |
| Example 62 | Al$_2$(SO$_4$)$_3$,CuSO$_4$ | NaOH,KOH | 0.90 | K$_2$SO$_4$, Na$_2$SO$_4$ |
| Example 63 | Al$_2$(SO$_4$)$_3$,CuSO$_4$,Ti$_2$(SO$_4$)$_3$ | NaOH | 0.999 | Na$_2$SO$_4$ |
| Example 64 | Al$_2$(SO$_4$)$_3$,CuSO$_4$ | NaOH | 0.999 | Na$_2$SO$_4$,Na$_3$PO$_4$ |
| Example 65 | Al$_2$(SO$_4$)$_3$,CuSO$_4$ | NaOH | 0.999 | Na$_2$SO$_4$ |
| Example 66 | Al$_2$(SO$_4$)$_3$,CuSO$_4$ | NaOH | 0.999 | Na$_2$SO$_4$ |
| Example 67 | Al$_2$(SO$_4$)$_3$,CuSO$_4$ | NaOH | 0.999 | Na$_2$SO$_4$ |
| Example 68 | Al$_2$(SO$_4$)$_3$,CuSO$_4$ | NaOH | 0.999 | Na$_2$SO$_4$ |
| Example 69 | Al$_2$(SO$_4$)$_3$,CuSO$_4$ | NaOH | 0.999 | Na$_2$SO$_4$ |
| Example 70 | Al$_2$(SO$_4$)$_3$,CuSO$_4$ | NH$_4$OH | 0.999 | (NH$_4$)$_2$SO$_4$ |

Table 16 (continued)

| Properties / Examples | Production conditions | | | Product | | |
|---|---|---|---|---|---|---|
| | Molar ratio of (sulfate of monovalent cation)/$Al_2(SO_4)_3$ | Hydrothermal treatment | | Particle name | Form | $D_{75}/D_{25}$ |
| | | Temperatrue °C | Time period | | | |
| Example 52 | 1.0 | 170 | 2 | Y-A-1-1 | Spherical | 1.19 |
| Example 54 | 1.0 | 170 | 2 | Y-A-2 | Spherical | 1.16 |
| Example 55 | 1.0 | 170 | 2 | Y-A-3 | Spherical | 1.05 |
| Example 56 | 1.0 | 170 | 2 | Y-A-4 | Spherical | 1.19 |
| Example 57 | 1.0 | 100 | 29 | Y-A-5 | Spherical | 1.10 |
| Example 58 | 1.0 | 100 | 29 | Y-A-6 | Spherical | 1.29 |
| Example 59 | 0.33 | 200 | 1.5 | Y-A-7 | Spherical | 1.18 |
| Example 60 | 2.0 | 250 | 1 | Y-A-8 | Spherical | 1.15 |
| Example 61 | 1.0 | 170 | 2 | Y-A-9 | Spherical | 1.10 |
| Example 62 | 1.0 | 170 | 2 | Y-A-10 | Spherical | 1.19 |
| Example 63 | 1.0 | 170 | 2 | Y-A-12 | Spherical | 1.15 |
| Example 64 | 0.67 | 170 | 2 | Y-A-13 | Spherical | 1.16 |
| Example 65 | 1.0 | 170 | 2 | Y-A-14 | Spherical | 1.15 |
| Example 66 | 1.0 | 170 | 2 | Y-A-15 | Spherical | 1.15 |
| Example 67 | 1.0 | 170 | 2 | Y-A-16 | Spherical | 1.15 |
| Example 68 | 1.0 | 170 | 22 | Y-A-17 | Spherical | 1.18 |
| Example 69 | 1.0 | 170 | 1 | Y-A-18 | Spherical | 1.15 |
| Example 70 | 1.0 | 100 | 5 | Y-A-19 | Spherical | 1.10 |

EP 2 123 160 A1

Table 17

| Examples | Aluminum sulfate, copper sulfate, zinc oxide, titanium sulfate | Alkali or Al(OH)$_3$ | Alkali equivalent weight ratio | Sulfate of monovalent cation |
|---|---|---|---|---|
| | Properties | Production conditions | | |
| Example 71 | Al$_2$(SO$_4$)$_3$, CuSO$_4$, ZnO | NaOH | 0.783 | Na$_2$SO$_4$ |
| Example 72 | Al$_2$(SO$_4$)$_3$, CuSO$_4$, ZnO | KOH | 0.758 | K$_2$SO$_4$ |
| Example 73 | Al$_2$(SO$_4$)$_3$, CuSO$_4$, ZnO | NaOH | 0.868 | Na$_2$SO$_4$ |
| Example 74 | Al$_2$(SO$_4$)$_3$, CuSO$_4$, ZnO | NaOH | 0.783 | Na$_2$SO$_4$ |
| Example 75 | Al$_2$(SO$_4$)$_3$, CuSO$_4$, ZnO | NaOH | 0.783 | Na$_2$SO$_4$ |
| Example 76 | Al$_2$(SO$_4$)$_3$, CuSO$_4$, ZnO | NaOH | 0.783 | Na$_2$SO$_4$ |
| Example 77 | Al$_2$(SO$_4$)$_3$, CuSO$_4$, ZnO | NaOH | 0.783 | Not added |
| Example 78 | Al$_2$(SO$_4$)$_3$, CuSO$_4$, ZnO | NaOH | 0.613 | Na$_2$SO$_4$ |
| Example 79 | Al$_2$(SO$_4$)$_3$, CuSO$_4$, ZnO | NaOH | 0.90 | Na$_2$SO$_4$ |
| Example 80 | Al$_2$(SO$_4$)$_3$, CuSO$_4$, ZnO | NaOH | 0.868 | Na$_2$SO$_4$ |
| Example 81 | Al$_2$(SO$_4$)$_3$, CuSO$_4$, ZnO | NaOH | 0.868 | Na$_2$SO$_4$ |
| Example 82 | Al$_2$(SO$_4$)$_3$, CuSO$_4$ | Al(OH)$_3$ | No relation to intended definition | No relation to intended definition |
| Example 83 | Al$_2$(SO$_4$)$_3$, CuSO$_4$ | Al(OH)$_3$ | No relation to intended definition | No relation to intended definition |
| Comparative Example 34 | Al$_2$(SO$_4$)$_3$, CuSO$_4$ | NaOH | 0.775 | Na$_2$SO$_4$ |
| Comparative Example 35 | Al$_2$(SO$_4$)$_3$, CuSO$_4$ | NaOH | 0.80 | Na$_2$SO$_4$ |
| Comparative Example 36 | Al$_2$(SO$_4$)$_3$ | NaOH | 1.0 | Na$_2$SO$_4$ |
| Comparative Example 37 | Al$_2$(SO$_4$)$_3$, CuSO$_4$ | NaOH | 0.999 | Na$_2$SO$_4$ |
| Comparative Example 38 | Al$_2$(SO$_4$)$_3$, CuSO$_4$ | NaOH | 1.3 | Na$_2$SO$_4$ |
| Comparative Example 39 | Al$_2$(SO$_4$)$_3$, CuSO$_4$ | NaOH | 0.9 | Na$_2$SO$_4$ |
| Comparative Example 40 | Al$_2$(SO$_4$)$_3$, CuSO$_4$ | NaOH | 0.9 | Na$_2$SO$_4$ |

EP 2 123 160 A1

Table 17 (continued)

| Properties / Examples | Production conditions | | | Product | | |
|---|---|---|---|---|---|---|
| | Molar ratio of (sulfate of monovalent cation)/$Al_2(SO_4)_3$ | Hydrothermal treatment | | Particle name | Form | $D_{75}/D_{25}$ |
| | | Temperatrue °C | Time period | | | |
| Example 71 | 1.0 | 170 | 2 | Y-A-19 | Disk | 1.15 |
| Example 72 | 1.0 | 170 | 2 | Y-A-20 | Disk | 1.13 |
| Example 73 | 1.0 | 170 | 2 | Y-A-21 | Disk | 1.76 |
| Example 74 | 1.0 | 170 | 2 | Y-A-22 | Disk | 1.15 |
| Example 75 | 1.0 | 170 | 2 | Y-A-23 | Disk | 1.15 |
| Example 76 | 1.0 | 170 | 2 | Y-A-24 | Disk | 1.15 |
| Example 77 | 0 | 170 | 2 | Y-A-25 | Disk | 1.13 |
| Example 78 | 1.0 | 170 | 2 | Y-A-26 | Disk | 1.15 |
| Example 79 | 1.0 | 170 | 2 | Y-A-27 | Disk | 1.22 |
| Example 80 | 3.0 | 170 | 2 | Y-A-28 | Disk | 1.08 |
| Example 81 | 0.20 | 170 | 2 | Y-A-29 | Disk | 1.09 |
| Example 82 | No relation to intended definition | 170 | 2 | Y-A-30 | Rectangular parallelepiped | 1.7 |
| Example 83 | No relation to intended definition | 170 | 2 | Y-A-31 | Rectangular parallelepiped | 1.19 |
| C. Example 34 | 0.28 | 100 | 2 | Y-V-1 | Aggregate | 11.6 |
| C. Example 35 | 0.28 | 100 | 2 | Y-V-2 | Aggregate | 3.17 |
| C. Example 36 | 0.28 | 100 | 2 | Y-V-3 | Spherical | 1.10 |
| C. Example 37 | 1.0 | 170 | 2 | Y-V-4 | Spherical | 1.19 |
| C. Example 38 | 1.0 | 170 | 2 | Y-V-5 | Aggregate | 8.52 |
| C. Example 39 | 3.0 | 170 | 2 | Y-V-6 | Aggregate | 1.38 |
| C. Example 40 | 1.0 | 80 | 2 | Y-V-7 | Aggregate | 4.02 |

Ex.: Example   C.Ex.: Comparative Example

A process for the preparation of an antimicrobial composition containing particles (Y) will be specifically explained below.

As a fluorescent brightener, 2,5-thiphenediyl(5-tert-butyl-benzohexazole) was added in an amount shown in Table (or not added in some cases).

Example 84 (Antimicrobial composition)

0.048 Gram of particles shown in Table 14 or 15 were homogeneously mixed with, and dispersed in, 15 mL of deionized water to prepare an antimicrobial composition. Each of the thus-prepared antimicrobial compositions was measured for antimicrobial activities, coloring resistance (color) and dispersibility (sedimentation velocity) according to the already described methods. Tables 18 and 19 show the results as Example 84 and Comparative Examples 41 to 47.

It has been confirmed that those compositions of Example are excellent in the properties of antimicrobial activities, transparency, color and dispersibility. On the other hand, compositions in Comparative Examples had problems concerning one or more of these properties.

Comparative Examples 41, 42 and 45 used Y-V-1, Y-V-2 and Y-V-5 particles that were particles having the form of aggregate mass and broad Dr width (particle diameter distribution width), so that the antimicrobial activities and dispersibility were poor.

Comparative Example 46 used Y-V-6 particles that had a small Dr width (particle diameter distribution width) but had a large average secondary particle diameter of 16.72 $\mu$m and that had the form of aggregate mass, so that the antimicrobial activities and dispersibility were poor.

Comparative Example 44 used copper-containing aluminum sulfate hydroxide Y-V-4 particles free of silver, so that not any antimicrobial effect was observed. In a test using Y-II-8 particles, there was no color problem since no antimicrobial agent was incorporated, but no antimicrobial effect was observed.

It has been found that the antifungal agent of this invention exhibits far excellent antimicrobial activities and dispersibility over any conventionally known antimicrobial composition. Further, the antimicrobial composition of this invention has a higher antifungal effect than antifungal particles containing only one of silver or copper. It is therefore seen that the co-presence of silver and copper exhibits a synergistic effect.

Tables 18

| Composition, antimicrobial activity, etc. / Examples | Name of antimicrobial particles | Minimum inhibitory concentration (ppm) | | Color | Sedimentation velocity (mm/hr) |
|---|---|---|---|---|---|
| | | Colon bacillus | Staphylococcus aureus | | |
| Example 84 | Y-A-1-1 | 70 | 70 | Colorless (white) | 0.12 |
| | Y-A-2 | 70 | 70 | Colorless (white) | 0.12 |
| | Y-A-3 | 70 | 70 | Colorless (white) | 0.099 |
| | Y-A-4 | 70 | 70 | Colorless (white) | 0.099 |
| | Y-A-5 | 100 | 100 | Colorless (white) | 0.099 |
| | Y-A-6 | 70 | 70 | Colorless (white) | 0.099 |
| | Y-A-7 | 70 | 70 | Colorless (white) | 0.58 |
| | Y-A-8 | 70 | 70 | Colorless (white) | 0.099 |
| | Y-A-9 | 100 | 100 | Colorless (white) | 0.099 |
| | Y-A-10 | 70 | 70 | Colorless (white) | 0.13 |
| | Y-A-11 | 100 | 100 | Colorless (white) | 0.099 |
| | Y-A-12 | 70 | 70 | Colorless (white) | 0.12 |
| | Y-A-13 | 50> | 50> | Colorless (white) | 0.12 |
| | Y-A-14 | 100 | 100 | Colorless (white) | 0.12 |
| | Y-A-15 | 300 | 300 | Colorless (white) | 0.12 |
| | Y-A-16 | 70 | 70 | Colorless (white) | 0.29 |
| | Y-A-17 | 70 | 70 | Colorless (white) | 0.17 |
| | Y-A-18 | 70 | 70 | Colorless (white) | 0.066 |

Tables 19

| Composition, antimicrobial activity, etc. \ Examples | Name of antimicrobial particles | Minimum inhibitory concentration (ppm) | | Color | Sedimentation velocity (mm/hr) |
|---|---|---|---|---|---|
| | | Colon bacillus | Staphylococcus aureus | | |
| Example 84 | Y-A-19 | 100 | 100 | Colorless (white) | 0.18 |
| | Y-A-20 | 70 | 70 | Colorless (white) | 0.16 |
| | Y-A-21 | 100 | 100 | Colorless (white) | 0.18 |
| | Y-A-22 | 50> | 50> | Colorless (white) | 0.13 |
| | Y-A-23 | 100 | 100 | Colorless (white) | 0.13 |
| | Y-A-24 | 300 | 300 | Colorless (white) | 0.13 |
| | Y-A-25 | 100 | 100 | Colorless (white) | 0.13 |
| | Y-A-26 | 100 | 100 | Colorless (white) | 0.13 |
| | Y-A-27 | 100 | 100 | Colorless (white) | 0.25 |
| | Y-A-28 | 100 | 100 | Colorless (white) | 0.064 |
| | Y-A-29 | 100 | 100 | Colorless (white) | 0.064 |
| | Y-A-30 | 50 | 50 | Colorless (white) | 0.12 |
| | Y-A-31 | 50 | 50 | Colorless (white) | 0.099 |
| C.Ex.41 | Y-V-1 | $50^3$ | 50 | Colorless (white) | 3.18 |
| C.Ex.42 | Y-V-2 | 50 | 50 | Colorless (white) | 2.53 |
| C.Ex.43 | Y-V-3 | 70 | 70 | Colorless (white) | 0.066 |
| C.Ex.44 | Y-V-4 | 800 | 800 | Colorless (white) | 0.12 |
| C.Ex.45 | Y-V-5 | 50 | 50 | Colorless (white) | 3.43 |
| C.Ex.46 | Y-V-6 | 50 | 50 | Colorless (white) | 3.25 |
| C.Ex.47 | Y-V-7 | 50 | 50 | Colorless (white) | 4.2 |

C.Ex.:Comparative Example

EP 2 123 160 A1

Example 85 (Antifungal agent)

Particles shown in Tables 14 and 15 were measured for minimum growth inhibitory concentrations as antifungal activities in the same manner as in the standard method of Japanese Society of Chemotherapy (Revised version of the year 2003) except that the culture medium was changed from a sensitive MHB medium to a potato dextrose agar medium supplied by Nissui Pharmaceutical Co., Ltd., and the results are shown as minimum growth inhibitory concentrations in the unit of ppm. The smaller a value is, the higher the antifungal activity is.

The following Table 20 shows the results of measurements using the antifungal agent particles of this invention as Example 85 and the results of measurements using comparative particles as Comparative Examples 48 to 50.

Fungi used for the test are as follows.

*1: Cladosporium cladosporioides NBRC 6348 (Black leather fungus)
*2: Colletotrichum coccodes NBRC 5256 (Eggplant black root rot pathogenic fungus)
*3: Ustilaginoidea virens NBRC 9175 (Rice plant green mold pathogenic germ)

Table 20

| Fungi used / Antifungal agent | | Minimum inhibitory concentration ppm | | |
|---|---|---|---|---|
| | | *1 | *2 | *3 |
| Example 85 | Y-A-3 particles | 300 or less | 30 or less | 15 or less |
| | Y-A-5 particles | 300 or less | 30 or less | 15 or less |
| | Y-A-8 particles | 300 or less | 30 or less | 15 or less |
| | Y-A-10 particles | 300 or less | 30 or less | 15 or less |
| | Y-A-11 1particles | 300 or less | 30 or less | 15 or less |
| | Y-A-18 particles | 300 or less | 30 or less | 15 or less |
| | Y-A-19 particles | 300 or less | 30 or less | 15 or less |
| | Y-A-31 particles | 300 or less | 30 or less | 15 or less |
| | Y-A-1-2 particles | 300 or less | 30 or less | 15 or less |
| Comparative Example 48 R1 particles (Silver-supporting zirconium phosphate) Average secondary particle diameter; 1μm BET specific surface area; 4 m²/g Ag content; 3% *R1 particles are the same as those used in experiments hereinafter. | | 6400 | 3000 | 20 |
| Comparative Example 49 Bordeaux ground powder (Commercial product, content of 11.1% as copper sulfate, content of 6.0% as copper) | | 6400< | 6400< | 800 |
| Comparative Example 50 Y-V-3 particles | | 500 | 100 | 100 |

It has been found that the antifungal agent of this invention exhibits far excellent antifungal activities over known antifungal agents. As is seen from a comparison of the results of Comparative Example 50 and the results of Example 85, the antifungal agent particles of this invention have high antifungal effects over the antifungal agent particles containing silver or copper alone. This shows that the co-presence of silver and copper exhibits a synergistic effect.

Example 86 (Agricultural chemical (antifungal agent))

In this Example 86, 10 parts by weight of antimicrobial particles of this invention, 30 parts by weight of a silane-coupling agent surface-modifying precipitated calcium carbonate (inorganic fine powder), 5 parts by weight of polyoxyethylene alkylally ether (surfactant), 10 parts by weight of ethylene glycol (surfactant), 0.2 party by weight of xanthan gum (emulsion stabilizer) and 44.8 parts by weight of water were homogeneously mixed with a homomixer, and the mixture was uniformly wet-pulverized with a ball-mill to prepare an agricultural chemical composition in an aqueous suspension state. This composition was diluted 1/100 times with water and the diluted composition was placed in a commercially available plastic spray unit.

In Comparative Examples, experiments of this Example were repeated except that the particles used in Example were replaced with the following particles or Bordeaux ground powder.

In each experiment, eggplants and rice plants that grown to about 20 cm were provided. With regard to the eggplants, 1 g of a suspension of Colletotrichum coccodes NBRC 5256 (Eggplant black root rot pathogenic fungus) that had been adjusted to $1 \times 10^6$ microorganisms/ml was sprayed to the leaves, stalk and root thereof, and after one day, 1 g of the above 1/100 times diluted agricultural chemical composition in the aqueous suspension state was similarly sprayed. Thirty days thereafter, the eggplants were observed for a degree of occurrence of eggplant black root rot. In the test with the egg plants, each pot having a diameter of 33 cm and a depth of 30 cm was filled with soil such that the soil was 27 cm high.

With regard to the rice plants, 1 g of a suspension of Ustilaginoidea virens NBRC 9175 (Rice plant green mold pathogenic germ) that had been adjusted to $1 \times 10^6$ microorganisms/ml was sprayed to the leaves, stalk and root thereof, and after one day, 1 g of the above 1/100 times diluted agricultural chemical composition in the aqueous suspension state was similarly sprayed. Thirty days thereafter, the rice plants were observed for a degree of occurrence of rice plant green mold. The test with the rice plants was carried out under conditions where each pot having a diameter of 33 cm and a depth of 30 cm was filled with soil such that the soil was 27 cm high, and water in soil was barely absent on the soil surface but was fully present in the soil. The following Table 21 shows the test results.

Table 21

| Plant / Antifungal agent | | Eggplant Eggplant black root rot | Rice plant Rice plant green mold |
|---|---|---|---|
| Example 86 | Y-A-3 particles | No occurrence, grown normally | No occurrence, grown normally |
| | Y-A-5 particles | No occurrence, grown normally | No occurrence, grown normally |
| | Y-A-8 particles | No occurrence, grown normally | No occurrence, grown normally |
| | Y-A-10 particles | No occurrence, grown normally | No occurrence, grown normally |
| | Y-A-11 particles | No occurrence, grown normally | No occurrence, grown normally |
| | Y-A-18 particles | No occurrence, grown normally | No occurrence, grown normally |
| | Y-A-19 particles | No occurrence, grown normally | No occurrence, grown normally |
| | Y-A-31 particles | No occurrence, grown normally | No occurrence, grown normally |
| | Y-A-1-2 particles | No occurrence, grown normally | No occurrence, grown normally |
| Comparative Example 51, R1 particles (silver-supporting zirconium phosphate) | | Occurred on the entire roots, withered | Occurred on the entire roots, withered |
| Comparative Example 52 Bordeaux ground powder (Commercial product, Ground Bordeaux powder, content of 11.1% as copper sulfate, content of 6.0% as copper) | | Occurred on the entire roots, withered | Occurred on the entire roots, withered |
| Comparative Example 53, Y-V-3 particles | | Occurred on the entire roots, withered | No occurrence, grown normally |

It has been found that the agricultural chemical composition of the present invention exhibits far excellent agricultural chemical performances over conventionally known agricultural chemical compositions. As is seen from a comparison of the results of Comparative Example 53 and the results of Example 86, the agricultural chemical composition of this invention has a higher antifungal effect than the agricultural chemical composition containing silver alone. This shows that the co-presence of silver and copper exhibits a synergistic effect.

Effect of the Invention

Containing silver and copper, the antimicrobial particles and antimicrobial composition of this invention are excellent antimicrobial activities, in particular, in the property of maintaining antimicrobial activities after brought into contact with tap water. They are therefore capable of maintaining their antimicrobial activities in places where water is constantly used, such as a kitchen, a bath room, a lavatory, and the like. The antimicrobial particles of this invention have an advantage that they can exhibit their effects on many strains of microorganisms. Being excellent in dispersibility in a composition, the antimicrobial particles of this invention can effectively exhibits antimicrobial activities. The antimicrobial particles of this invention are safe to human bodies and are not at all stimulatory when they come in contact with human bodies.

Industrial Applicability

Since the antimicrobial particles of this invention are safe to human bodies and not at all stimulatory when brought into contact with human bodies, they can be utilized in antimicrobial compositions that are used in wet areas in houses where people live. Further, they can be used as antifungal agents. Further, they can be sprayed directly on vegetables and fruits as an agricultural chemical. When used in combination with an ethylene gas absorbent such as zeolite, they can be used as a freshness preserver for vegetables and fruits. Further, they can be advantageously used when incorporated into cosmetics and antimicrobial deodorants.

**Claims**

1. Antimicrobial particles formed of a compound of the following formula (1),

$$[Ag_aB_{1-a}]_b[M^{n+}{}_cAl_{1-cn/3}]_dA_x(SO_4)_y(OH)_z \cdot pH_2O \qquad (1)$$

wherein a, b, c, d, x, y, z and p satisfy the following conditions,

$0.00001 \leq a < 0.5$
$0.8 \leq b \leq 1.35$
$0.00001 < c < 0.5$
$2.7 \leq d \leq 3.3$
$0 \leq x \leq 0.5$
$1.7 < y < 2.5$
$4 < z < 7$
$0 \leq p \leq 5$

B is at least one monovalent cation selected from the group consisting of $Na^+$, $NH_4^+$, $K^+$ and $H_3O^+$, the total value $(1b+3d)$ of valence number x molar amount of the cation is in the range of $8 < (1b+3d) < 12$, $M^{n+}$ is a metal ion composed mainly of $Cu^{2+}$, n is a valence number of the metal ion and A is an organic acid anion.

2. The antimicrobial particles of claim 1, wherein x is in the range of $0.0001 \leq x \leq 0.5$.

3. The Antimicrobial particles of claim 1, wherein x=0.

4. An antimicrobial agent of claim 1, wherein $M^{n+}$ is composed mainly of $Cu^{2+}$ and contains at least one metal ion selected from the group consisting of $Ti^{4+}$ and $Zn^{2+}$.

5. The antimicrobial particles of claim 1, wherein a maximum of 1/10 of the molar amount of $SO_4$ is replaced with at least one inorganic acid ion selected from the group consisting of $PO_4^{3-}$, $CO_3^{2-}$, $NO_3^-$, $SO_3^{2-}$, $HPO_3^{2-}$, $SiO_4^4$ and $BO_3^{3-}$.

6. The antimicrobial particles of claim 1, wherein A is an anion derived from an organic carboxylic acid or an organic oxycarboxylic acid.

7. The antimicrobial particles of claim 1, wherein A is at least one organic acid anion selected from the group consisting of oxalic acid ion, citric acid ion, malic acid ion, tartaric acid ion, glyceric acid ion, gallic acid ion and lactic acid.

8. The antimicrobial particles of claim 1, wherein a, b, c, d, x, y, z and p in the formula (1) satisfy the following conditions,

$0.001 \leq a < 0.3$
$0.9 \leq b \leq 1.2$
$0.00001 < c < 0.5$
$2.7 \leq d \leq 3.3$
$0.001 \leq x \leq 0.5$
$1.7 < y < 2.5$
$4 < z < 7$
$0 \leq p \leq 5$.

9. The antimicrobial particles of claim 1, which have an average secondary particle diameter, measured by a laser diffraction scattering method, of 0.1 to 12 $\mu$m.

10. The antimicrobial particles of claim 1, which have a BET specific surface area of 0.1 to 250 $cm^2$/g.

11. The antimicrobial particles of claim 1, which have a sharpness (Dr), represented by the following equation, in the range of 1 to 1.8,

$$Dr = D_{75}/D_{25}$$

in which $D_{25}$ is a particle diameter of a 25 % value of volume standard accumulative particle diameter distribution curve prepared on the basis of a laser diffraction scattering method and $D_{75}$ is a particle diameter of a 75 % value thereof.

12. The antimicrobial particles of claim 1, which have a particle diameter distribution sharpness (Dr) of 1 to 1.4 and have a spherical shape.

13. The antimicrobial particles of claim 1, wherein each particle is in the form of a sphere, a disk ("go" stone), one pair (like "hamburger"), a rice grain, a rectangular parallelepiped, a hexagonal plate, a column (barrel) or an octahedron when they are observed in an SEM photograph.

14. The antimicrobial particles of claim 1, wherein each particle has the form of a rectangular parallelepiped.

15. The antimicrobial particles of claim 1, wherein each particle is surface-treated with at least one member selected from the group consisting of higher fatty acids, a silane coupling agent, a titanate coupling agent, an aluminate coupling agent, alcohol phosphoric esters and surfactants.

16. A process for the preparation of antimicrobial particles (X) of the following formula (1-X),

$$[Ag_aB_{1-a}]_b[M^{n+}{}_cAl_{1-cn/3}]_dA_x(SO_4)_y(OH)_z \cdot pH_2O \qquad (1\text{-}X)$$

wherein B, $M^{n+}$, A, a, b, c, d, y, z, n and p are as defined in the formula (1) and x is 0.0001 or more but not more than 0.5, the process comprising the steps of

(1) adding a hydroxide (T component) of monovalent cation and an organic acid (U component) to a mixture aqueous solution containing aluminum sulfate (Q component), a salt (R component) composed mainly of copper sulfate and sulfate and/or nitrate (S component) of monovalent cation, to obtain a reaction product,
(2) hydrothermally treating the thus-obtained reaction product at 90 to 250°C to obtain particles (x) of a compound of the following formula (i),

$$[B]_b[M^{n+}{}_cAl^{3+}{}_{1-cn/3}]_dA_x(SO_4)_y(OH)_z \cdot pH_2O \qquad (i)$$

wherein B, $M^{n+}$, A, b, c, d, y, z, n and p are as defined in the formula (1) and x is 0.0001 or more but not more than 0.5,
and

(3) contact-stirring an aqueous solution containing the thus-obtained particles (x) and silver to carry out ion-exchange of a portion of cations of the particles (x) with silver.

**17.** A process for the preparation of antimicrobial particles (Y) of the following formula (1-Y),

$$[Ag_aB_{1-a}]b[M^{n+}{}_cAl_{1-cn/3}]d(SO_4)_y(OH)_z \cdot pH_2O \qquad (1-Y)$$

wherein B, $M^{n+}$, a, b, c, d, y, z, n and p are as defined in the formula (1),
the process comprising the steps of

(1) adding a hydroxide (T component) of monovalent cation to a mixture aqueous solution containing aluminum sulfate (Q component), a salt (R component) composed mainly of copper sulfate and a sulfate (S component) of monovalent cation, in which T component is added to the mixture aqueous solution whose a molar ratio of S component to a total of Q component and R component, {S/(Q+R)}, is from 0.3 to 3, to ensure that the alkali equivalent weight ratio of T component to a total of Q component and R component, {T/(Q+R)} is from 0.6 to 1,
(2) hydrothermally treating the thus-obtained reaction product at 90 to 250°C to obtain particles (y) of a compound of the following formula (ii),

$$[B]_b[M^{n+}{}_cAl^{3+}{}_{1-cn/3}]_d(SO_4)_y(OH)_z \cdot pH_2O \qquad (ii)$$

wherein B, $M^{n+}$, b, c, d, y, z, n and p are as defined in the formula (1),
and
(3) contact-stirring an aqueous solution containing the thus-obtained particles (y) and silver to carry out ion-exchange of a portion of cations of the particles (y) with silver.

**18.** The process of claim 17, wherein the step (1) is carried out by adding a hydroxide (T component) of at least one monovalent cation selected from the group consisting of $Na^+$, $K^+$ and $NH_4^+$ to a mixture aqueous solution containing aluminum sulfate (Q component), the salt (R component) composed mainly of copper sulfate and a sulfate of at least one monovalent cation selected from the group consisting of $Na^+$, $K^+$ and $NH_4^+$ in a manner that the alkali equivalent weight ratio {T/(Q+R)} comes to be from 0.6 to 1.0, to obtain the reaction product, and wherein antimicrobial particles (Y) in the form of a disk each are obtained.

**19.** The process of claim 17, wherein the step (1) is a step in which a suspension of aluminum hydroxide is added to a mixture aqueous solution containing aluminum sulfate (Q component) and the salt (R component) composed mainly of copper sulfate, to obtain the reaction product, and wherein antimicrobial particles (Y) in the form of a rectangular parallelepiped is obtained.

**20.** An antifungal agent containing the antimicrobial particles of claim 1 as an effective component.

**21.** An agricultural chemical containing the antimicrobial particles of claim 1 as an effective component.

## Fig.1

## Fig.2

Fig. 3

Fig. 4

Fig. 5

Fig. 6

Fig. 7

Fig. 8

Fig. 9

Fig. 1 0

Fig. 1 1

Fig. 1 2

Fig. 1 3

Fig. 1 4

Fig. 1 5

Fig. 1 6

Fig.1 7

Fig. 1 8

Fig. 1 9

Fig. 2 0

Fig. 2 1

## INTERNATIONAL SEARCH REPORT

International application No.

PCT/JP2007/075432

A.  CLASSIFICATION OF SUBJECT MATTER
*A01N59/16*(2006.01)i, *A01N25/12*(2006.01)i, *A01N59/06*(2006.01)i, *A01N59/20*
(2006.01)i, *A01P3/00*(2006.01)i

According to International Patent Classification (IPC) or to both national classification and IPC

B.  FIELDS SEARCHED

Minimum documentation searched (classification system followed by classification symbols)
A01N59/16, A01N25/12, A01N59/06, A01N59/20, A01P3/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 3-275627 A  (Catalysts & Chemicals Industries Co., Ltd.), 06 December, 1991 (06.12.91), (Family: none) | 1-21 |
| A | WO 2005/085168 A1  (Kyowa Chemical Industry Co., Ltd.), 15 September, 2005 (15.09.05), & EP 1731497 A1          & US 2007/189986 A1 & NO 200604525 A1        & AU 2005219753 A1 & KR 2006123611 A        & CN 1930107 A | 1-21 |
| A | WO 2006/109847 A1  (Kyowa Chemical Industry Co., Ltd.), 19 October, 2006 (19.10.06), & EP 1878701 A1          & AU 2006234598 A1 & CA 2602974 A1 | 1-21 |

| [X] | Further documents are listed in the continuation of Box C. | [ ] | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 January, 2008 (31.01.08) | 12 February, 2008 (12.02.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/075432 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,A | WO 2007/004713 A1  (Kyowa Chemical Industry Co., Ltd.), <br> 11 January, 2007 (11.01.07), <br> & JP 2007-39442 A        & JP 2007-39444 A | 1-21 |

Form PCT/ISA/210 (continuation of second sheet) (April 2007)

## REFERENCES CITED IN THE DESCRIPTION

**Patent documents cited in the description**

- JP 6212019 A
- JP 2000007326 A
- JP 2003206210 A
- WO 20074713 A
- JP 2006313527 W
- WO 2005085168 A
- JP 2005003831 W

**Non-patent literature cited in the description**

- **Keith M. Scott.** Solid solution in, and classification of, gossan-derived members of the alunite-jarosite family. *American Mineralogists, Mineralogical Society of America,* 1987, vol. 72, 178-187
- Powder Technology Manual Book. 30 March 1998, 37-38
- ENCYCLOPAEDIA CHIMICA. KYORITSU SHUPPAN CO., LTD, 20 March 1967, vol. 5, 981